(19) Europäisches Patentamt
European Patent Office
Office européen des brevets

(11) **EP 4 737 241 A1**

(12) **EUROPEAN PATENT APPLICATION**
published in accordance with Art. 153(4) EPC

(43) Date of publication:
06.05.2026   Bulletin 2026/19

(21) Application number: 24830371.1

(22) Date of filing: 29.05.2024

(51) International Patent Classification (IPC):
*B60W 30/10* (2006.01)     *G01C 21/34* (2006.01)
*A01D 34/00* (2006.01)

(52) Cooperative Patent Classification (CPC):
**A01D 34/006; A01D 34/64; A01D 34/824;**
A01D 69/02; Y02T 10/72

(86) International application number:
**PCT/CN2024/096176**

(87) International publication number:
**WO 2025/001724 (02.01.2025 Gazette 2025/01)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:   28.06.2023   CN 202310774578

(71) Applicant: Jiangsu Dongcheng M&E Tools Co., Ltd.
Nantong, Jiangsu 226244 (CN)

(72) Inventors:
• WANG, Haodong
Nantong, Jiangsu 226244 (CN)
• ZHANG, Shengwen
Nantong, Jiangsu 226244 (CN)
• SHU, Chao
Nantong, Jiangsu 226244 (CN)

(74) Representative: Winter, Brandl - Partnerschaft mbB
Alois-Steinecker-Straße 22
85354 Freising (DE)

(54) **VEHICLE CONTROL METHOD, MULTI-PURPOSE VEHICLE, AND GARDEN WORK VEHICLE**

(57)     Provided are a vehicle control method, a multi-purpose vehicle, and a garden work vehicle, which can ensure an accurate response to a control intention of a user and optimize user experience. The multi-purpose vehicle includes a drive mechanism, a control mechanism, and an auxiliary control mechanism. The auxiliary control mechanism includes: a control state sensing component, configured to determine a control state of a user with respect to the control mechanism, the control state including a straight-line control state and a non-straight-line control state; a traveling state sensing component, configured to determine the traveling state of the multi-purpose vehicle, the traveling state including a straight-line traveling state and a non-straight-line traveling state; and a calibration controller component, configured to determine that the multi-purpose vehicle is traveling abnormally in response to a mismatch between the traveling state and the control state. The calibration controller component is further configured to adjust, in response to determining that the multi-purpose vehicle is traveling abnormally, the operating state of the drive mechanism to match the traveling state with the control state.

FIG. 2

## Description

## FIELD

The present disclosure relates to the technical field of vehicle engineering, and in particular, to a vehicle control method, a multi-purpose vehicle, and a garden work vehicle.

## BACKGROUND

Compared with a traditional fuel-powered mower, a battery-powered mower has advantages of all-weather zero emissions, zero fuel consumption, low noise, and simple maintenance due to the absence of gasoline, engine oil, air filters, spark plugs, fuel storage, or the like. Drive wheels of the battery-powered mower adopt motors instead of fuel engines, and the motors of the drive wheels may be independently controlled to achieve motion control of the entire vehicle, such as straight-line traveling, reversing, turning, and zero-turn steering. This design reduces structural complexity of the entire vehicle and makes vehicle control more flexible.

In some related technical solutions, the battery-powered mower achieves traveling control by independently controlling a left drive wheel through a left control handle and a right drive wheel through a right control handle, and has advantages of fast control response and flexible operation. However, when deviations occur in control signals of the left and right control handles, the left and right drive wheels have different sizes and insufficient tire pressure, or the vehicle travels transversely on a slope, the vehicle fails to accurately respond to a control intention of a driver and cannot maintain straight-line traveling, which requires frequent real-time adjustments during operation, significantly affecting user experience.

## SUMMARY

In view of this, embodiments of the present disclosure provide a vehicle control method, a multi-purpose vehicle, and a garden work vehicle, which can ensure an accurate response to a control intention of a user and optimize user experience.

In an aspect, the embodiments of the present disclosure provide a vehicle control method. The vehicle control method includes: obtaining calibration request information, where the calibration request information is used to request control of vehicle traveling based on a preset trajectory; obtaining a current operating parameter of a target vehicle based on the calibration request information, where the operating parameter includes at least one of an attitude parameter, a heading angle parameter, or a displacement parameter; calculating target compensation data in response to a mismatch between the operating parameter and the preset trajectory, where the target compensation data is used to correct traveling deviation of the vehicle to make the vehicle traveling in accordance with the preset trajectory; and correcting a driving mode of the vehicle based on the target compensation data, to cause the vehicle to travel along the preset trajectory.

In an implement, prior to obtaining the calibration request information, the method further includes: detecting whether a calibration function is activated; obtaining a first control parameter and a second control parameter of the target vehicle; calculating a control deviation value between the first control parameter and the second control parameter; and generating the calibration request information in response to the control deviation value being within a preset range and the calibration function being activated. The first control parameter is used to control the vehicle to travel to the left; and the second control parameter is used to control the vehicle to travel to the right.

In an implement, the operating parameter of the vehicle includes a target attitude angle; and obtaining the operating parameter of the vehicle includes: obtaining first data transmitted by a first sensor and second data transmitted by a second sensor; and performing fusion processing on the first data and the second data based on an attitude resolution algorithm to obtain the target attitude angle. The attitude angle refers to an angle of a sensor in a world coordinate system where the vehicle is located.

In an implement, prior to calculating the target compensation data, the method further includes: obtaining a type of the preset trajectory, where the type includes at least one of straight-line traveling, right-turn traveling, or left-turn traveling; obtaining, based on the type of the preset trajectory, a preset operating parameter matching the type of the preset trajectory; and determining, in response to a mismatch between the current operating parameter and the preset operating parameter, that the operating parameter does not match the preset trajectory.

In an implement, the operating parameter of the vehicle includes a target attitude angle; and calculating the target compensation data includes: obtaining a preset angle matching the preset trajectory; calculating a target angle based on a difference between the target attitude angle and the preset angle; obtaining a driving parameter of the vehicle; and calculating the target compensation data based on the driving parameter of the vehicle and the target angle. The target angle at least includes one of a first angle and a second angle. The first angle refers to an angle for driving the vehicle to deviate to the left to reduce the difference between the attitude angle and the preset angle, and the second angle refers to an angle for driving the vehicle to deviate to the right to reduce the difference between the attitude angle and the preset angle.

In an implement, calculating the target compensation data includes: when the driving parameter of the vehicle includes a control signal, calculating a target signal based on the target angle and generating the target compensation data based on the target signal, to cause the vehicle to return to the preset trajectory using the control signal; when the driving parameter of the vehicle includes an initial rotation speed, calculating a target rotation speed based on the target rotation speed, to cause the vehicle to return to the preset trajectory using the control signal; and when the driving parameter of the vehicle includes an initial torque, calculating a target torque based on the target angle, to cause the vehicle to return to the preset trajectory using the target torque.

In an implement, calculating the target compensation data includes: obtaining a preset compensation coefficient, historical compensation data calculated in a previous iteration, and a target angle calculated in a current iteration; and calculating the target compensation data based on the preset compensation coefficient, the historical compensation data, and the target angle.

In an implement, correcting the driving mode of the vehicle includes: obtaining a current driving parameter of the vehicle, where the driving parameter includes at least one of a control signal, a motor torque, or a motor rotation speed; configuring the driving parameter based on the target compensation data; and driving wheels to travel using the driving parameter.

In another aspect, the embodiments of the present disclosure further provide a multi-purpose vehicle. The multi-purpose vehicle includes: a drive mechanism, a control mechanism and an auxiliary control mechanism. The drive mechanism is arranged on a frame of the multi-purpose vehicle and configured to drive the multi-purpose vehicle to travel. The control mechanism is coupled to the drive mechanism and configured to control an operating state of the drive mechanism to adjust a traveling state of the multi-purpose vehicle. The auxiliary control mechanism is configured to monitor the traveling state to determine whether the multi-purpose vehicle is traveling abnormally, and to perform a calibration operation in response to the multi-purpose vehicle traveling abnormally. The auxiliary control mechanism includes: a control state sensing component, a traveling state sensing component and a calibration controller component. The control state sensing component is configured to determine a control state of a user with respect to the control mechanism. The control state including a straight-line control state and a non-straight-line control state. The traveling state sensing component is configured to determine the traveling state of the multi-purpose vehicle. The traveling state includes a straight-line traveling state and a non-straight-line traveling state. The calibration controller component is configured to determine that the multi-purpose vehicle is traveling abnormally in response to a mismatch between the traveling state and the control state. The calibration controller component is further configured to adjust, in response to determining that the multi-purpose vehicle is traveling abnormally, the operating state of the drive mechanism to match the traveling state with the control state.

In an implement, the drive mechanism includes a left driving assembly and a right driving assembly, the left driving assembly being arranged on a left side of the frame, and the right driving assembly being arranged on a right side of the frame. Each of the left driving assembly and the right driving assembly includes a drive motor and a drive wheel mechanically coupled to the drive moto. The control mechanism includes a left control assembly and a right control assembly. The left control assembly is arranged on the left side of the frame and coupled to the left driving assembly. The right control assembly is arranged on the right side of the frame and coupled to the right driving assembly. The left control assembly includes a left control lever, and the right control assembly includes a right control lever, and each of the left control assembly and the right control assembly further includes a rotation detection module and a drive controller module. Each of the left control lever and the right control lever is configured to be controllably rotated about a first axis between a first forward position, a neutral position, and a first backward position. The rotation detection module is configured to detect a pivoting direction and angular displacement of a corresponding control lever among the left control lever and the right control lever to generate angular displacement information. The drive controller module is configured to control, based on the angular displacement information, a rotation direction and a rotation speed of the drive motor in a corresponding driving assembly among the left driving assembly and the right driving assembly.

In an implement, when controlling, based on the angular displacement information, the rotation direction and the rotation speed of the drive motor in the corresponding driving assembly, the drive controller module is configured to: determine, based on the angular displacement information, the pivoting direction and the angular displacement of the corresponding control lever; control, based on the pivoting direction, the rotation direction and the rotation speed of an output shaft of the drive motor; in response to a forward rotation of the control lever, control the output shaft to output power in a first rotation direction to drive the drive wheel forward; in response to a backward rotation of the control lever, control the output shaft to output power in a second rotation direction to drive the drive wheel backward; and proportionally control, based on the angular displacement, the rotation speed of the output shaft of the drive motor.

In an implement, when determining the control state, the control state sensing component is configured to: determine whether both the left control lever and the right control lever are rotated forward or whether both the left control lever and the right control lever are rotated to the first forward position, where the forward rotation refers to rotation towards the first forward position; in response to both the left control lever and the right control lever being rotated forward or both the left control lever and the right control lever being rotated to the first forward position, determine whether the left control lever and the right control lever are aligned; and in response to the left control lever and the right control lever being aligned, determine that the control state of the user with respect to the control mechanism is the straight-line control state.

In an implement, determining whether both the left control lever and the right control lever are rotated forward includes: comparing the angular displacement information corresponding to each of the left control lever and the right control lever with a lower angular limit threshold to determine whether the angular displacement information is greater than the lower angular limit threshold; and in response to the angular displacement information corresponding to each of the left control lever and the right control lever being greater than the lower angular limit threshold, determining that both the left control lever and the right control lever are rotated forward.

In an implement, determining whether both the left control lever and the right control lever are rotated to the first forward position includes: comparing the angular displacement information corresponding to each of the left control lever and the right control lever with an upper angular limit threshold to determine whether the angular displacement information is greater than the upper angular limit threshold; and in response to the angular displacement information corresponding to each of the left control lever and the right control lever being greater than the upper angular limit threshold, determining that both the left control lever and the right control lever are rotated to the first forward position.

In an implement, determining whether the left control lever and the right control lever are aligned includes: determining an absolute value of a difference between the angular displacement information corresponding to the left control lever and the angular displacement information corresponding to the right control lever; comparing the absolute value of the difference with an angular deviation threshold to determine whether the absolute value of the difference is greater than the angular deviation threshold; and in response to the absolute value of the difference being not greater than the angular deviation threshold, determining that the left control lever and the right control lever are aligned.

In an implement, the control mechanism further includes an alignment detection device configured to detect whether the left control lever and the right control lever are aligned.

In an implement, the alignment detection device includes a signal transmitter and a signal receiver. The signal transmitter is configured to controllably transmit an alignment detection signal for reception by the signal receiver. The signal transmitter and the signal receiver are respectively arranged at ends of the left control lever and the right control lever that are away from the first axis, and the signal transmitter and the signal receiver are opposed to each other when the left control lever and the right control lever are aligned. Determining whether the left control lever and the right control lever are aligned includes: controlling the signal transmitter to transmit the alignment detection signal; determining whether the signal receiver receives the alignment detection signal from the signal transmitter; and in response to the signal receiver receiving the alignment detection signal, determining that the left control lever and the right control lever are aligned.

In an implement, the signal transmitter is an infrared signal transmitter, and the signal receiver is an infrared signal receiver.

In an implement, the signal transmitter is a laser signal transmitter, and the signal receiver is a laser signal receiver.

In an implement, the alignment detection device includes a Hall sensing element and a magnetic element. The Hall sensing element is configured to sense a magnetic field strength generated by the magnetic element. The Hall sensing element and the magnetic element are respectively arranged at ends of the left control lever and the right control lever that are away from the first axis, and the Hall sensing element and the magnetic element are opposed to each other when the left control lever and the right control lever are aligned. Determining whether the left control lever and the right control lever are aligned includes: obtaining a field strength signal generated by the Hall sensing element in response to the magnetic field strength; comparing the field strength signal with a preset field strength threshold to determine whether the field strength signal is greater than or equal to the preset field strength threshold; and in response to the field strength signal being greater than or equal to the preset field strength threshold, determining that the left control lever and the right control lever are aligned.

In an implement, the alignment detection device includes an image recognition module and an image marker. The image recognition module and the image marker are respectively arranged at ends of the left control lever and the right control lever that are away from the first axis, and the image recognition module and the image marker are opposed to each other when the left control lever and the right control lever are aligned. Determining whether the left control lever and the right control lever are aligned includes: controlling the image recognition module to perform an image recognition operation, and determining whether the image recognition module successfully recognizes the image marker; and in response to the image recognition module successfully recognizing the image marker, determining that the left control lever and the right control lever are aligned.

In an implement, the multi-purpose vehicle further includes an inertial measurement module fixedly arranged with respect to the frame. The inertial measurement module is configured to monitor a motion state of the multi-purpose vehicle. When determining the traveling state, the traveling state sensing component is configured to: obtain motion state information generated by the inertial measurement module; determine whether a heading angle component in the motion state information is zero; in response to the heading angle component in the motion state information remaining zero, determine that the multi-purpose vehicle is in the straight-line traveling state; in response to the heading angle component in the motion state information being non-zero, determine that the multi-purpose vehicle is in the non-straight-line traveling state. The traveling state sensing component is further configured to determine, based on the heading angle component, a deflection angle of the multi-purpose vehicle in response to the multi-purpose vehicle being in the non-straight-line traveling state.

In an implement, the multi-purpose vehicle further includes a caster wheel assembly arranged at a front end of the frame and rotatably connected to the frame. The caster wheel assembly includes a caster wheel and a deflection detection module. The deflection detection module is configured to detect a deflection state of the caster wheel relative to the frame and generate deflection state information. When determining the traveling state, the traveling state sensing component is configured to : obtain the deflection state information generated by the deflection detection module; determine, based on the deflection state information, whether a deflection angle of the caster wheel relative to the frame is zero; in response to the deflection angle of the caster wheel relative to the frame remaining zero, determine that the multi-purpose vehicle is in the straight-line traveling state; in response to the deflection angle of the caster wheel relative to the frame being non-zero, determine that the multi-purpose vehicle is in the non-straight-line traveling state. The traveling state sensing component is further configured to: determine the deflection angle of the caster wheel relative to the frame as the deflection angle of the multi-purpose vehicle in response to the multi-purpose vehicle being in the non-straight-line traveling state.

In an implement, the caster wheel assembly further includes a pivot shaft, and the caster wheel is rotatably connected to the frame through the pivot shaft. The front end of the frame is formed as a shaft sleeve for accommodating the pivot shaft and allowing the pivot shaft to rotate therein. The deflection detection module includes a detection element and an induction element. The induction element is fixedly arranged at an upper end of the pivot shaft. The detection element is arranged at an upper end cover of the shaft sleeve and positioned opposite to the induction element. When the caster wheel rotates relative to the frame, the induction element fixedly arranged at the upper end of the pivot shaft rotates, and a relative motion occurs between the induction element and the detection element, and the detection element is configured to generate the deflection state information based on the relative motion of the induction element relative to the detection element.

In an implement, the detection element is a rotation angle potentiometer.

In an implement, the detection element is a magnetic angle encoder.

In an implement, the detection element is an optoelectronic angle encoder.

In an implement, the detection element is a Hall effect angle sensor.

In an implement, the detection element is a rotary transformer.

In an implement, the deflection detection module is configured to use a voltage analog signal to characterize the deflection state information.

In an implement, the deflection detection module is configured to use a current analog signal to characterize the deflection state information.

In an implement, the deflection detection module is configured to use a resistance analog signal to characterize the deflection state information.

In an implement, the deflection detection module is configured to use a pulse width modulation signal to characterize the deflection state information.

In an implement, the deflection detection module is configured to use an ABZ three-phase encoded signal to characterize the deflection state information.

In an implement, the deflection detection module is configured to use a UVW three-phase encoded signal to characterize the deflection state information.

In an implement, a plurality of caster wheel assemblies are provided. At least one of the plurality of caster wheel assemblies is provided with the deflection detection module configured to detect the deflection state of the corresponding caster wheel relative to the frame.

In an implement, when adjusting the operating state of the drive mechanism in response to determining that the multi-purpose vehicle is traveling abnormally, the calibration controller component is configured to: determine a deflection angle of the multi-purpose vehicle; and perform, based on the deflection angle, a compensation adjustment on a motion control parameter for a drive motor in at least one of the left driving assembly or the right driving assembly. The motion control parameter includes at least one of angular displacement information generated by the rotation detection module corresponding to the drive motor, the rotation speed of the drive motor or a torque of the drive motor.

In an implement, performing, based on the deflection angle, the compensation adjustment on the motion control parameter for the drive motor in at least one of the left driving assembly or the right driving assembly includes: determining a side pointed towards by the deflection angle as a lagging side; and performing a forward iterative compensation adjustment on the motion control parameter for the drive motor corresponding to the lagging side, to cause the deflection angle to be gradually reduced until the deflection angle is maintained at zero. The forward iterative compensation adjustment includes:

$$\Phi_k = \Phi_{k-1}\left(1 + c_s \times \frac{\theta_k}{\pi}\right),$$

where Φ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

In an implement, performing, based on the deflection angle, the compensation adjustment on the motion control parameter for the drive motor in at least one of the left driving assembly or the right driving assembly includes: determining a side deviated from by the deflection angle as a leading side; and performing a reverse iterative compensation adjustment on the motion control parameter for the drive motor corresponding to the leading side, to cause the deflection angle to be gradually reduced until the deflection angle is maintained at zero. The reverse iterative compensation adjustment includes:

$$\Phi_k = \Phi_{k-1}\left(1 - c_s \times \frac{\theta_k}{\pi}\right)$$

where Φ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

In an implement, performing, based on the deflection angle, the compensation adjustment on the motion control parameter for the drive motor in at least one of the left driving assembly or the right driving assembly includes: determining a side pointed towards by the deflection angle as a lagging side, and determining a side deviated from by the deflection angle as a leading side; and performing a bidirectional iterative compensation adjustment on the motion control parameter for the drive motor corresponding to the leading side and the motion control parameter for the drive motor corresponding to the lagging side, to cause the deflection angle to be gradually reduced until the deflection angle is maintained at zero. The bidirectional iterative compensation adjustment includes:

$$\begin{cases} \Phi_k^z = \Phi_{k-1}^z\left(1 + c_z \times \dfrac{\theta_k}{\pi}\right) \\ \Phi_k^c = \Phi_{k-1}^c\left(1 - c_c \times \dfrac{\theta_k}{\pi}\right) \end{cases}$$

where Φ denotes the motion control parameter, $\Phi_{k-1}^z$ and $\Phi_k^z$ respectively denote the motion control parameters for the drive motor corresponding to the lagging side after the (k-1)th and k-th iterative com-

pensations, $\Phi_{k-1}^c$ and $\Phi_k^c$ respectively denote the motion control parameters for the drive motor corresponding to the leading side after the (k-1)th and k-th iterative compensations, $\theta$ denotes the deflection angle, $\theta_k$ denotes the deflection angle determined prior to the k-th iterative compensation, $C_z$ and $C_c$ respectively denote correction parameters corresponding to the lagging side and the leading side, with corresponding value ranges of $0 < c_z \leq 2$. and $0 < c_c \leq 2$.

In another aspect, the embodiments of the present disclosure further provide a multi-purpose vehicle. The multi-purpose vehicle includes: a drive mechanism, a control mechanism and an auxiliary control mechanism. The drive mechanism is arranged on a frame of the multi-purpose vehicle and configured to drive the multi-purpose vehicle to travel. The drive mechanism includes a left driving assembly and a right driving assembly, the left driving assembly being arranged on a left side of the frame, and the right driving assembly being arranged on a right side of the frame. The control mechanism is coupled to the drive mechanism and configured to control an operating state of the drive mechanism to adjust a traveling state of the multi-purpose vehicle. The control mechanism includes a left control assembly and a right control assembly, the left control assembly being arranged on the left side of the frame and coupled to the left driving assembly, the right control assembly being arranged on the right side of the frame and coupled to the right driving assembly. The left control assembly includes a left control lever, and the right control assembly includes a right control lever. Each of the left control assembly and the right control assembly further includes an alignment detection device. Each of the left control lever and the right control lever is configured to be controllably rotated about a first axis between a first forward position, a neutral position, and a first backward position. The alignment detection device is configured to detect whether the left control lever and the right control lever are aligned. The auxiliary control mechanism is configured to monitor the traveling state to determine whether the multi-purpose vehicle is traveling abnormally, and to perform a calibration operation in response to the multi-purpose vehicle traveling abnormally. The auxiliary control mechanism includes: a control state sensing component, a traveling state sensing component and a calibration controller component. The control state sensing component is configured to determine a control state of a user with respect to the control mechanism based on a position where the left control lever is located, a position where the right control lever is located, and a detection result of the alignment detection device. The control state includes a straight-line control state and a non-straight-line control state. The traveling state sensing component is configured to determine the traveling state of the multi-purpose vehicle. The traveling state includes a straight-line traveling state and a non-straight-line traveling state. The calibration controller component is configured to determine that the multi-purpose vehicle is traveling abnormally in response to a mismatch between the traveling state and the control state. The calibration controller component is further configured to adjust, in response to determining that the multi-purpose vehicle is traveling abnormally, the operating state of the drive mechanism to match the traveling state with the control state.

In an implement, each of the left driving assembly and the right driving assembly includes a drive motor and a drive wheel mechanically coupled to the drive motor. The left control assembly includes a left control lever, the right control assembly includes a right control lever, and each of the left control assembly and the right control assembly further includes a rotation detection module and a drive controller module. The rotation detection module is configured to detect a pivoting direction and angular displacement of a corresponding control lever among the left control lever and the right control lever to generate angular displacement information; and the drive controller module is configured to control, based on the angular displacement information, a rotation direction and a rotation speed of the drive motor in a corresponding driving assembly among the left driving assembly and the right driving assembly.

In an implement, when controlling, based on the angular displacement information, the rotation direction and the rotation speed of the drive motor in the corresponding driving assembly, the drive controller module is configured to: determine, based on the angular displacement information, the pivoting direction and the angular displacement of the corresponding control lever; control, based on the pivoting direction, the rotation direction and the rotation speed of an output shaft of the drive motor; in response to a forward rotation of the control lever, control the output shaft to output power in a first rotation direction to drive the drive wheel forward; in response to a backward rotation of the control lever, control the output shaft to output power in a second rotation direction to drive the drive wheel backward; and proportionally control, based on the angular displacement, the rotation speed of the output shaft of the drive motor.

In an implement, when determining the control state of the user with respect to the control mechanism based on the position where the left control lever is located, the position where the right control lever is located, and the detection result of the alignment detection device, the control state sensing component is configured to: determine whether both the left control lever and the right control lever are rotated forward or whether both the left control lever and the right control lever are rotated to the first forward position, where the forward rotation refers to rotation towards the first forward position; in response to both the left control lever and the right control lever being rotated forward or both the left control lever and the right control lever being rotated to the first forward position, determine whether the left control lever and the right control lever are aligned based on the detection result of the alignment detection device; and in response to the left control lever and the right control lever being aligned, determine that the control state of the user with respect to the control mechanism is the straight-line control state.

In an implement, determining whether both the left control lever and the right control lever are rotated forward includes: comparing the angular displacement information corresponding to each of the left control lever and the right control lever with a lower angular limit threshold to determine whether the angular displacement information is greater than the lower angular limit threshold; and in response to the angular displacement information corresponding to each of the left control lever and the right control lever being greater than the lower angular limit threshold, determining that both the left control lever and the right control lever are rotated forward.

In an implement, determining whether both the left control lever and the right control lever are rotated to the first forward position includes: comparing the angular displacement information corresponding to each of the left control lever and the right control lever with an upper angular limit threshold to determine whether the angular displacement information is greater than the upper angular limit threshold; and in response to the angular displacement information corresponding to each of the left control lever and the right control lever being greater than the upper angular limit threshold, determining that both the left control lever and the right control lever are rotated to the first forward position.

In an implement, the alignment detection device includes a signal transmitter and a signal receiver. The signal transmitter is configured to controllably transmit an alignment detection signal for reception by the signal receiver. The signal transmitter and the signal receiver are respectively arranged at ends of the left control lever and the right control lever that are away from the first axis, and the signal transmitter and the signal receiver are opposed to each other when the left control lever and the right control lever are aligned. Determining whether the left control lever and the right control lever are aligned based on the detection result of the alignment detection device includes: controlling the signal transmitter to transmit the alignment detection signal; determining whether the signal receiver receives the alignment detection signal from the signal transmitter; and in response to the signal receiver receiving the alignment detection signal, determining that the left control lever and the right control lever are aligned.

In an implement, the signal transmitter is an infrared signal transmitter, and the signal receiver is an infrared signal receiver.

In an implement, the signal transmitter is a laser signal transmitter, and the signal receiver is a laser signal receiver.

In an implement, the alignment detection device includes a Hall sensing element and a magnetic element.

The Hall sensing element is configured to sense a magnetic field strength generated by the magnetic element. The Hall sensing element and the magnetic element are respectively arranged at ends of the left control lever and the right control lever that are away from the first axis, and the Hall sensing element and the magnetic element are opposed to each other when the left control lever and the right control lever are aligned. Determining whether the left control lever and the right control lever are aligned includes: obtaining a field strength signal generated by the Hall sensing element in response to the magnetic field strength; comparing the field strength signal with a preset field strength threshold to determine whether the field strength signal is greater than or equal to the preset field strength threshold; and in response to the field strength signal being greater than or equal to the preset field strength threshold, determining that the left control lever and the right control lever are aligned.

In an implement, the alignment detection device includes an image recognition module and an image marker. The image recognition module and the image marker are respectively arranged at ends of the left control lever and the right control lever that are away from the first axis, and the image recognition module and the image marker are opposed to each other when the left control lever and the right control lever are aligned Determining whether the left control lever and the right control lever are aligned includes: controlling the image recognition module to perform an image recognition operation, and determining whether the image recognition module successfully recognizes the image marker; and in response to the image recognition module successfully recognizing the image marker, determining that the left control lever and the right control lever are aligned.

In an implement, the multi-purpose vehicle further includes an inertial measurement module fixedly arranged with respect to the frame. The inertial measurement module is configured to monitor a motion state of the multi-purpose vehicle. When determining the traveling state, the traveling state sensing component is configured to: obtain motion state information generated by the inertial measurement module; determine whether a heading angle component in the motion state information is zero; in response to the heading angle component in the motion state information remaining zero, determine that the multi-purpose vehicle is in the straight-line traveling state; in response to the heading angle component in the motion state information being non-zero, determine that the multi-purpose vehicle is in the non-straight-line traveling state. The traveling state sensing component is further configured to determine, based on the heading angle component, a deflection angle of the multi-purpose vehicle in response to the multi-purpose vehicle being in the non-straight-line traveling state.

In an implement, when adjusting the operating state of the drive mechanism in response to determining that the multi-purpose vehicle is traveling abnormally, the calibration controller component is configured to: determine a deflection angle of the multi-purpose vehicle; and perform, based on the deflection angle, a compensation adjustment on a motion control parameter for a drive motor in at least one of the left driving assembly or the right driving assembly. The motion control parameter includes at least one of angular displacement information generated by the rotation detection module corresponding to the drive motor, the rotation speed of the drive motor or a torque of the drive motor.

In an implement, performing, based on the deflection angle, the compensation adjustment on the motion control parameter for the drive motor in at least one of the left driving assembly or the right driving assembly includes: determining a side pointed towards by the deflection angle as a lagging side; performing a forward iterative compensation adjustment on the motion control parameter for the drive motor corresponding to the lagging side, to cause the deflection angle to be gradually reduced until the deflection angle is maintained at zero. The forward iterative compensation adjustment includes:

$$\Phi_k = \Phi_{k-1}\left(1 + c_s \times \frac{\theta_k}{\pi}\right)$$

where $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $c_s$ denotes a correction parameter, with a value range of $0 < c_s \leq 2$.

In an implement, performing, based on the deflection angle, the compensation adjustment on the motion control parameter for the drive motor in at least one of the left driving assembly or the right driving assembly includes: determining a side deviated from by the deflection angle as a leading side; performing a reverse iterative compensation adjustment on the motion control parameter for the drive motor corresponding to the leading side, to cause the deflection angle to be gradually reduced until the deflection angle is maintained at zero. The reverse iterative compensation adjustment includes:

$$\Phi_k = \Phi_{k-1}\left(1 - c_s \times \frac{\theta_k}{\pi}\right)$$

where $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

In an implement, performing, based on the deflection angle, the compensation adjustment on the motion control parameter for the drive motor in at least one of the left driving assembly or the right driving assembly includes: determining a side pointed towards by the deflection angle as a lagging side, and determining a side deviated from by the deflection angle as a leading side; and performing a bidirectional iterative compensation adjustment on the motion control parameter for the drive motor corresponding to the leading side and the motion control parameter for the drive motor corresponding to the lagging side, to cause the deflection angle to be gradually reduced until the deflection angle is maintained at zero. The bidirectional iterative compensation adjustment includes:

$$\begin{cases} \Phi_k^z = \Phi_{k-1}^z \left(1 + c_z \times \dfrac{\theta_k}{\pi}\right) \\ \Phi_k^c = \Phi_{k-1}^c \left(1 - c_c \times \dfrac{\theta_k}{\pi}\right) \end{cases}$$

where $\Phi$ denotes the motion control parameter, $\Phi_{k-1}^z$ and $\Phi_k^z$ respectively denote the motion control parameters for the drive motor corresponding to the lagging side after the (k-1)th and k-th iterative compensations, $\Phi_{k-1}^c$ and $\Phi_k^c$ respectively denote the motion control parameters for the drive motor corresponding to the leading side after the (k-1)th and k-th iterative compensations, $\theta$ denotes the deflection angle, $\theta_k$ denotes the deflection angle determined prior to the k-th iterative compensation, $c_z$ and $c_c$ respectively denote correction parameters corresponding to the lagging side and the leading side, with corresponding value ranges of $0 < c_z \leq 2$ and $0 < c_c \leq 2$.

In another aspect, the embodiments of the present disclosure further provide a multi-purpose vehicle. The multi-purpose vehicle includes: a drive mechanism, a control mechanism, a caster wheel assembly and an auxiliary control mechanism. The drive mechanism is arranged on a frame of the multi-purpose vehicle and configured to drive the multi-purpose vehicle to travel. The control mechanism is coupled to the drive mechanism and configured to control an operating state of the drive mechanism to adjust a traveling state of the multi-purpose vehicle; The caster wheel assembly is arranged at a front end of the frame and rotatably connected to the frame. The caster wheel assembly includes a caster wheel and a deflection detection module. The deflection detection module is configured to detect a deflection state of the caster wheel relative to the frame and generate deflection state information. The auxiliary control mechanism is configured to monitor the traveling state to determine whether the multi-purpose vehicle is traveling abnormally, and to perform a calibration operation in response to the multi-purpose vehicle traveling abnormally. The auxiliary control mechanism includes: a control state sensing component, a traveling state sensing component and a calibration controller component. The control state sensing component is configured to determine a control state of a user with respect to the control mechanism. The control state includes a straight-line control state and a non-straight-line control state. The traveling state sensing component is configured to determine the traveling state of the multi-purpose vehicle based on a detection result of the deflection detection module. The traveling state includes a straight-line traveling state and a non-straight-line traveling state. The calibration controller component is configured to determine that the multi-purpose vehicle is traveling abnormally in response to a mismatch between the traveling state and the control state. The calibration controller component is further configured to adjust, in response to determining that the multi-purpose vehicle is traveling abnormally, the operating state of the drive mechanism to match the traveling state with the control state.

In an implement, when controlling, based on the angular displacement information, the rotation direction and the rotation speed of the drive motor in the corresponding driving assembly, the drive controller module is configured to: determine, based on the angular displacement information, the pivoting direction and the angular displacement of the corresponding control lever; control, based on the pivoting direction, the rotation direction and the rotation speed of an output shaft of the drive motor; in response to a forward rotation of the control lever, control the output shaft to output power in a first rotation direction to drive the drive wheel forward; in response to a backward rotation of the control lever, control the output shaft to output power in a second rotation direction to drive the drive wheel backward; and proportionally control, based on the angular displacement, the rotation speed of the output shaft of the drive motor.

In an implement, when controlling, based on the angular displacement information, the rotation direction and the rotation speed of the drive motor in the corresponding driving assembly, the drive controller module is configured to: determine, based on the angular displacement information, the pivoting direction and the angular displacement of the corresponding control lever; control, based on the pivoting direction, the rotation direction and the rotation speed of the output shaft of the drive motor; in response to the forward rotation of the control lever, control the output shaft to output power in the first rotation direction to drive the drive wheel forward; in response to the backward rotation of the control lever, control the output shaft to output power in the second rotation direction to drive the drive wheel backward; and proportionally control, based on the angular displacement, the rotation speed of the output shaft of the drive motor.

In an implement, when determining the control state, the control state sensing component is configured to: determine whether both the left control lever and the right control lever are rotated forward or whether both the left control lever and the right control lever are rotated to the first forward position, where the forward rotation refers to rotation towards the first forward position; in response to both the left control lever and the right control lever being rotated forward or both the left control lever and the right control lever being rotated to the first forward position, determine whether the left control lever and the right control lever are aligned; and in response to the left control lever and the right control lever being aligned, determine that the control state of the user with respect to the control mechanism is the straight-line control state.

In an implement, determining whether both the left control lever and the right control lever are rotated forward includes: comparing the angular displacement information corresponding to each of the left control lever and the right control lever with a lower angular limit threshold to determine whether the angular displacement information is greater than the lower angular limit threshold; and in response to the angular displacement information corresponding to each of the left control lever and the right control lever being greater than the lower angular limit threshold, determining that both the left control lever and the right control lever are rotated forward.

In an implement, determining whether both the left control lever and the right control lever are rotated to the first forward position includes: comparing the angular displacement information corresponding to each of the left control lever and the right control lever with an upper angular limit threshold to determine whether the angular displacement information is greater than the upper angular limit threshold; and in response to the angular displacement information corresponding to each of the left control lever and the right control lever being greater than the upper angular limit threshold, determining that both the left control lever and the right control lever are rotated to the first forward position.

In an implement, determining whether the left control lever and the right control lever are aligned includes: determining an absolute value of a difference between the angular displacement information corresponding to the left control lever and the angular displacement information corresponding to the right control lever; comparing the absolute value of the difference with an angular deviation threshold to determine whether the absolute value of the difference is greater than or equal to the angular deviation threshold; and in response to the absolute value of the difference being not greater than the angular deviation threshold, determining that the left control lever and the right control lever are aligned.

In an implement, determining the traveling state of the multi-purpose vehicle based on the detection result of the deflection detection module includes: obtaining the deflection state information generated by the deflection detection module; determining, based on the deflection state information, whether a deflection angle of the caster wheel relative to the frame is zero; in response to the deflection angle of the caster wheel relative to the frame remaining zero, determining that the multi-purpose vehicle is in the straight-line traveling state; and in response to the deflection angle of the caster wheel relative to the frame being non-zero, determining that the multi-purpose vehicle is in the non-straight-line traveling state. The traveling state sensing component is further configured to: determine, in response to the multi-purpose vehicle being in the non-straight-line traveling state, the deflection angle of the caster wheel relative to the frame as the deflection angle of the multi-purpose vehicle.

In an implement, the caster wheel assembly further includes a pivot shaft, and the caster wheel is rotatably connected to the frame through the pivot shaft. The front end of the frame is formed as a shaft sleeve for accommodating the pivot shaft and allowing the pivot shaft to rotate therein. The deflection detection module includes a detection element and an induction element, the induction element being fixedly arranged at an upper end of the pivot shaft, the detection element being arranged at an upper end cover of the shaft sleeve and positioned opposite to the induction element. When the caster wheel rotates relative to the frame, the induction element fixedly arranged at the upper end of the pivot shaft rotates, and a relative motion occurs between the induction element and the detection element. The detection element is configured to generate the deflection state information based on the relative motion of the induction element relative to the detection element.

In an implement, the detection element is a rotation angle potentiometer.

In an implement, the detection element is a magnetic angle encoder.

In an implement, the detection element is an optoelectronic angle encoder.

In an implement, the detection element is a Hall effect angle sensor.

In an implement, the detection element is a rotary transformer.

In an implement, the deflection detection module is configured to use a voltage analog signal to characterize the deflection state information.

In an implement, the deflection detection module is configured to use a current analog signal to characterize the deflection state information.

In an implement, the deflection detection module is configured to use a resistance analog signal to characterize the deflection state information.

In an implement, the deflection detection module is configured to use a pulse width modulation signal to characterize the deflection state information.

In an implement, the deflection detection module is configured to use an ABZ three-phase encoded signal to characterize the deflection state information.

In an implement, the deflection detection module is configured to use a UVW three-phase encoded signal to characterize the deflection state information.

In an implement, a plurality of caster wheel assemblies are provided. At least one of the plurality caster wheel assemblies is provided with the deflection detection module configured to detect the deflection state of the corresponding caster wheel relative to the frame.

In an implement, when adjusting the operating state of the drive mechanism in response to determining that the multi-purpose vehicle is traveling abnormally, the calibration controller component is configured to: determine a deflection angle of the multi-purpose vehicle; and perform, based on the deflection angle, a compensation adjustment on a motion control parameter for a drive motor in at least one of the left driving assembly or the right driving assembly. The motion control parameter includes at least one of angular displacement information generated by the rotation detection module corresponding to the drive motor, the rotation speed of the drive motor or a torque of the drive motor.

In an implement, performing, based on the deflection angle, the compensation adjustment on the motion control parameter for the drive motor in at least one of the left driving assembly or the right driving assembly includes: determining a side pointed towards by the deflection angle as a lagging side; and performing a forward iterative compensation adjustment on the motion control parameter for the drive motor corresponding to the lagging side, to cause the deflection angle to be gradually reduced until the deflection angle is maintained at zero. The forward iterative compensation adjustment includes:

$$\Phi_k = \Phi_{k-1}\left(1 + c_s \times \frac{\theta_k}{\pi}\right)$$

where $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

In an implement, performing, based on the deflection angle, the compensation adjustment on the motion control parameter for the drive motor in at least one of the left driving assembly or the right driving assembly includes: determining a side deviated from by the deflection angle as a leading side; and performing a reverse iterative compensation adjustment on the motion control parameter for the drive motor corresponding to the leading side, to cause the deflection angle to be gradually reduced until the deflection angle is maintained at zero. The reverse iterative compensation adjustment includes:

$$\Phi_k = \Phi_{k-1}\left(1 + c_s \times \frac{\theta_k}{\pi}\right)$$

where $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $c_s$ denotes a correction parameter, with a value range of $0 < c_s \leq 2$.

In an implement, performing, based on the deflection angle, the compensation adjustment on the motion control parameter for the drive motor in at least one of the left driving assembly or the right driving assembly includes: determining a side pointed towards by the deflection angle as a lagging side, and determining a side deviated from by the deflection angle as a leading side; and performing a bidirectional iterative compensation adjustment on the motion control parameter for the drive motor corresponding to the leading side and the motion control parameter for the drive motor corresponding to the lagging side, to cause the deflection angle to be gradually reduced until the deflection angle is maintained at zero. The bidirectional iterative compensation adjustment includes:

$$\begin{cases} \Phi_k^z = \Phi_{k-1}^z\left(1 + c_z \times \frac{\theta_k}{\pi}\right) \\ \Phi_k^c = \Phi_{k-1}^c\left(1 - c_c \times \frac{\theta_k}{\pi}\right) \end{cases}$$

where $\Phi$ denotes the motion control parameter, $\Phi_{k-1}^z$ and $\Phi_k^z$ respectively denote the motion control parameters for the drive motor corresponding to the lagging side after the (k-1)th and k-th iterative compensations, $\Phi_{k-1}^c$ and $\Phi_k^c$ respectively denote the motion control parameters for the drive motor corresponding to the leading side after the (k-1)th and k-th iterative compensations, $\theta$ denotes the deflection angle, $\theta_k$ denotes the deflection angle determined prior to the k-th iterative compensation, $C_z$ and $C_c$ respectively denote correction parameters corresponding to the lagging side and the leading side, with corresponding value ranges of $0 < c_z \leq 2$ and $0 < c_c \leq 2$.

In another aspect, the embodiments of the present disclosure further provide a garden work vehicle. The garden work vehicle includes: a drive mechanism, a control mechanism, a functional mechanism and an auxiliary control mechanism. The drive mechanism is arranged on a frame of the multi-purpose vehicle and configured to drive the multi-purpose vehicle to travel. The control mechanism is coupled to the drive mechanism and configured to control an operating state of the drive mechanism to adjust a traveling state of the multi-purpose vehicle. The functional mechanism is configured to controllably perform a specific garden operation function. The auxiliary control mechanism is configured to monitor the traveling state to determine whether the multi-purpose vehicle is traveling abnormally, and to perform a calibration operation in response to the multi-purpose vehicle traveling abnormally. The auxiliary control mechanism includes: a control state sensing component, a traveling state sensing component and a calibration controller component. The control state sensing component is configured to determine a control state of a user with respect to the control mechanism. The control state includes a straight-line control state and a non-straight-line control state. The traveling state sensing component is configured to determine the traveling state of the multi-purpose vehicle. The traveling state includes a straight-line traveling state and a non-straight-line traveling state. The calibration controller component is configured to determine that the multi-purpose vehicle is traveling abnormally in response to a mismatch between the traveling state and the control state. The calibration controller component is further configured to adjust, in response to determining that the multi-purpose vehicle is traveling abnormally, the operating state of the drive mechanism to match the traveling state with the control state.

In another aspect, the embodiments of the present disclosure further provide a riding mower. The riding mower includes: a frame; a load-carrying mechanism, fixedly arranged on the frame and configured to carry a user operating the riding mower; a drive mechanism, arranged on the frame of the multi-purpose vehicle and configured to drive the multi-purpose vehicle to travel; a control mechanism, coupled to the drive mechanism and configured to control an operating state of the drive mechanism to adjust a traveling state of the multi-purpose vehicle; a mowing mechanism, configured to controllably perform a mowing function, the mowing mechanism including a mowing motor and a cutting blade assembly driven by the mowing motor; an auxiliary control mechanism, configured to monitor the traveling state to determine whether the multi-purpose vehicle is traveling abnormally, and to perform a calibration operation in response to the multi-purpose vehicle traveling abnormally. The auxiliary control mechanism includes: a control state sensing component, a traveling state sensing component and a calibration controller component. The control state sensing component is configured to determine a control state of the user with respect to the control mechanism. The control state includes a straight-line control state and a non-straight-line control state. The traveling state sensing component is configured to determine the traveling state of the multi-purpose vehicle. The traveling state includes a straight-line traveling state and a non-straight-line traveling state. The calibration controller component is configured to determine that the multi-purpose vehicle is traveling abnormally in response to a mismatch between the traveling state and the control state. The calibration controller component is further configured to adjust, in response to determining that the multi-purpose vehicle is traveling abnormally, the operating state of the drive mechanism to match the traveling state with the control state.

As can be seen from the above, the vehicle control method, the multi-purpose vehicle, and the garden work vehicle provided by one or more embodiments of the present disclosure have the following beneficial technical effects.

With the vehicle control method, it is determined whether traveling of the vehicle deviates from the preset trajectory in real time by obtaining the operating parameter of the vehicle. In response to the traveling of the vehicle deviating from the preset trajectory, a deviation correction function is activated and the target compensation data is obtained. A traveling parameter of the vehicle is configured using the target compensation data, i.e., additional correction control is applied in the wheels to actively compensate for such deviation. Therefore, a vehicle body attitude can be corrected in real time during traveling of the vehicle, which solves a problem in the prior art where a vehicle traveling deviation cannot be handled in a timely and accurate manner, and improves efficiency of vehicle traveling control.

When the above vehicle control method is applied in the multi-purpose vehicle, the garden work vehicle, and the riding mower, the control state sensing component and the traveling state sensing component are used to perform real-time monitoring and sensing on the control state of the user with respect to the control mechanism and an actual traveling state of the multi-purpose vehicle respectively, and the calibration controller component is used to compare a control state sensed by the control state sensing component and a traveling state sensed by the traveling state sensing component in real time, which thus can perform timely determine an abnormal traveling state that may occur in the multi-purpose vehicle. Further, when a traveling abnormality occurs in the multi-purpose vehicle, the calibration controller component is used to adjust the operating state of the drive mechanism in the multi-purpose vehicle, which thus can adjust the traveling state to match the control state in a timely manner, realizing straight-line traveling calibration and eliminating the traveling abnormality of the vehicle. In such a manner, it can be ensured that the multi-purpose vehicle can always accurately and correctly respond to the control intention of the user, significantly optimizing the user experience.

**BRIEF DESCRIPTION OF THE DRAWINGS**

The features and advantages of the present disclosure will be more clearly understood with reference to the accompanying drawings, which are schematic and shall not be construed as imposing any limitation on the present disclosure. In the accompanying drawings:

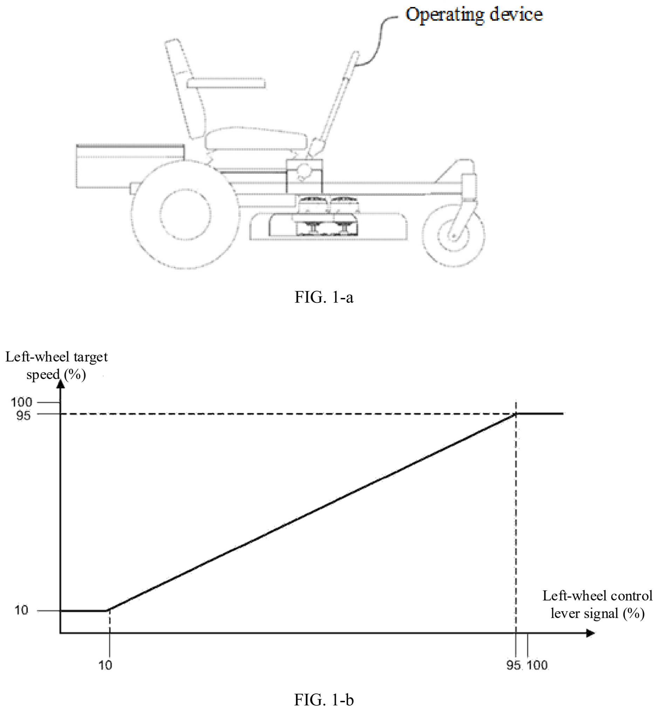

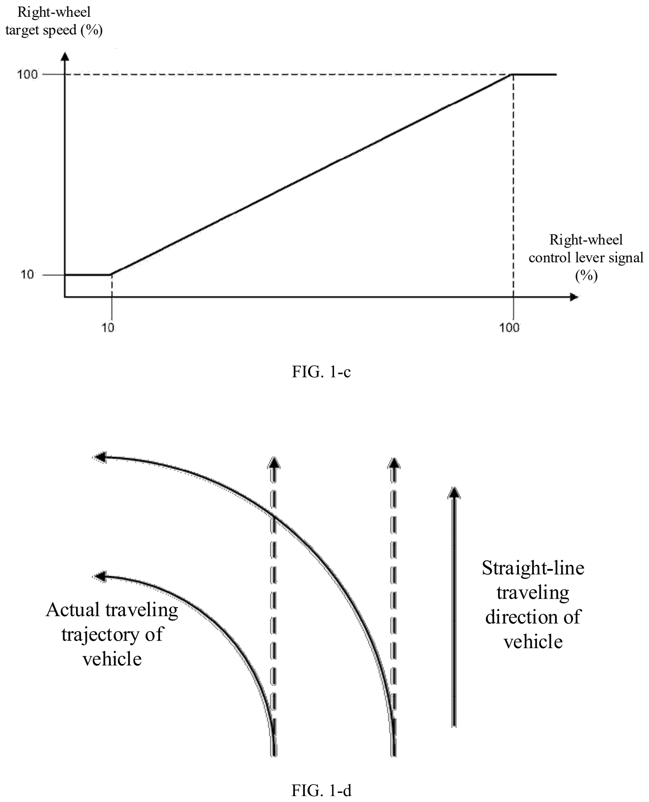

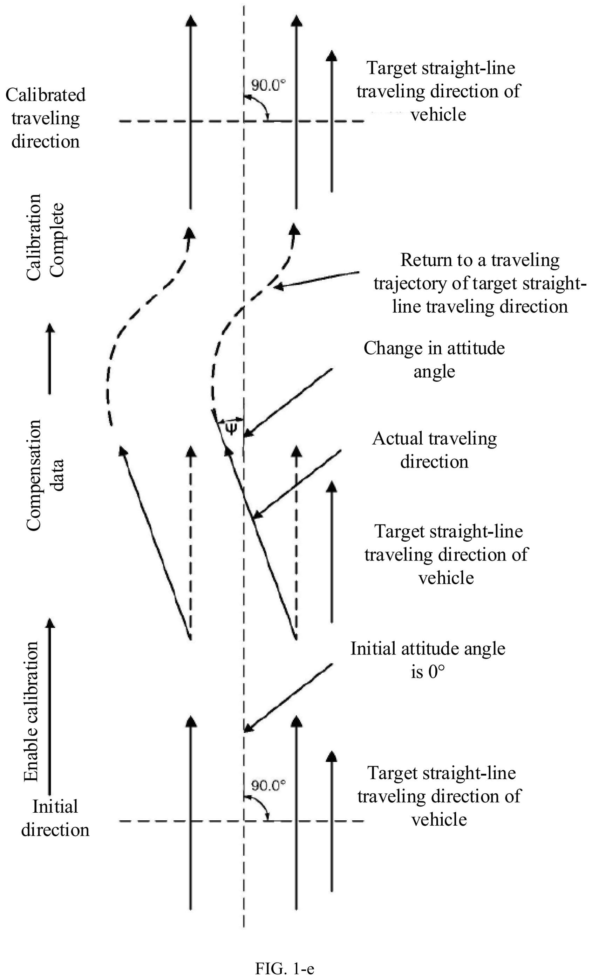

FIG. 1-a shows a schematic view of a battery-powered mowing device in a related technical solution;
FIG. 1-b shows a schematic diagram of a corresponding relationship between a left control angle and an actual speed of a battery-powered mowing device in a related technical solution;

FIG. 1-c shows a schematic diagram of a corresponding relationship between a right control angle and an actual speed of a battery-powered mowing device in a related technical solution;

FIG. 1-d shows a schematic diagram of traveling deflection of a battery-powered mowing device in a related technical solution;

FIG. 1-e shows a schematic diagram of a change in a traveling trajectory during a vehicle deviation correction process of a vehicle control method provided by one or more embodiments of the present disclosure;

FIG. 2 shows a schematic structural view of a multi-purpose vehicle, a garden work vehicle, and a riding mower provided by one or more embodiments of the present disclosure;

FIG. 3 shows a schematic view of a drive mechanism in a multi-purpose vehicle, a garden work vehicle, and a riding mower provided by one or more embodiments of the present disclosure;

FIG. 4 shows a schematic view of a control mechanism in a multi-purpose vehicle, a garden work vehicle, and a riding mower provided by one or more embodiments of the present disclosure;

FIG. 5 shows a schematic structural view of a control assembly in a multi-purpose vehicle, a garden work vehicle, and a riding mower provided by one or more embodiments of the present disclosure;

FIG. 6 shows a schematic view of a rotation range of a control lever in a control assembly in a multi-purpose vehicle, a garden work vehicle, and a riding mower provided by one or more embodiments of the present disclosure;

FIG. 7 shows a schematic diagram of a corresponding relationship between angular displacement information and a pivoting direction and angular displacement of a control lever in a multi-purpose vehicle, a garden work vehicle, and a riding mower provided by one or more embodiments of the present disclosure;

FIG. 8 shows a functional block diagram of a drive control logic in a multi-purpose vehicle, a garden work vehicle, and a riding mower provided by one or more embodiments of the present disclosure;

FIG. 9 shows a schematic diagram of a method for a drive controller module to control a rotation direction and a rotation speed of a drive motor in a multi-purpose vehicle, a garden work vehicle, and a riding mower provided by one or more embodiments of the present disclosure;

FIG. 10 shows another functional block diagram of a drive control logic in a multi-purpose vehicle, a garden work vehicle, and a riding mower provided by one or more embodiments of the present disclosure;

FIG. 11 shows a schematic diagram of a method for a control state sensing component to determine a control state in a multi-purpose vehicle, a garden work vehicle, and a riding mower provided by one or more embodiments of the present disclosure;

FIG. 12 shows a schematic diagram of a method for determining whether a left control lever and a right control lever are aligned in a multi-purpose vehicle, a garden work vehicle, and a riding mower provided by one or more embodiments of the present disclosure;

FIG. 13 shows another schematic structural view of a control mechanism in a multi-purpose vehicle, a garden work vehicle, and a riding mower provided by one or more embodiments of the present disclosure;

FIG. 14 shows another schematic diagram of a method for determining whether a left control lever and a right control lever are aligned in a multi-purpose vehicle, a garden work vehicle, and a riding mower provided by one or more embodiments of the present disclosure;

FIG. 15 shows yet another schematic structural view of a control mechanism in a multi-purpose vehicle, a garden work vehicle, and a riding mower provided by one or more embodiments of the present disclosure;

FIG. 16 shows a schematic diagram of a spatial positional relationship between a Hall sensing element and a magnetic element in an alignment detection device in a multi-purpose vehicle, a garden work vehicle, and a riding mower provided by one or more embodiments of the present disclosure;

FIG. 17 shows yet another schematic diagram of a method for determining whether a left control lever and a right control lever are aligned in a multi-purpose vehicle, a garden work vehicle, and a riding mower provided by one or more embodiments of the present disclosure;

FIG. 18 shows still yet another schematic structural view of a control mechanism in a multi-purpose vehicle, a garden work vehicle, and a riding mower provided by one or more embodiments of the present disclosure;

FIG. 19 shows still yet another schematic diagram of a method for determining whether a left control lever and a right control lever are aligned in a multi-purpose vehicle, a garden work vehicle, and a riding mower provided by one or more embodiments of the present disclosure;

FIG. 20 shows a schematic diagram of a method for a traveling state sensing component to determine a traveling state in a multi-purpose vehicle, a garden work vehicle, and a riding mower provided by one or more embodiments of the present disclosure;

FIG. 21 shows a schematic structural view of a caster wheel assembly in a multi-purpose vehicle, a garden work vehicle, and a riding mower provided by one or more embodiments of the present disclosure;

FIG. 22 shows another schematic diagram of a method for a traveling state sensing component to determine a traveling state in a multi-purpose vehicle, a garden work vehicle, and a riding mower provided by one or more embodiments of the present disclosure;

FIG. 23-a shows a schematic diagram of a positive correlation mapping relationship between a voltage analog signal of a deflection detection module and a deflection angle in a multi-purpose vehicle, a garden work vehicle, and a riding mower provided by one or more embodiments of the present disclosure;

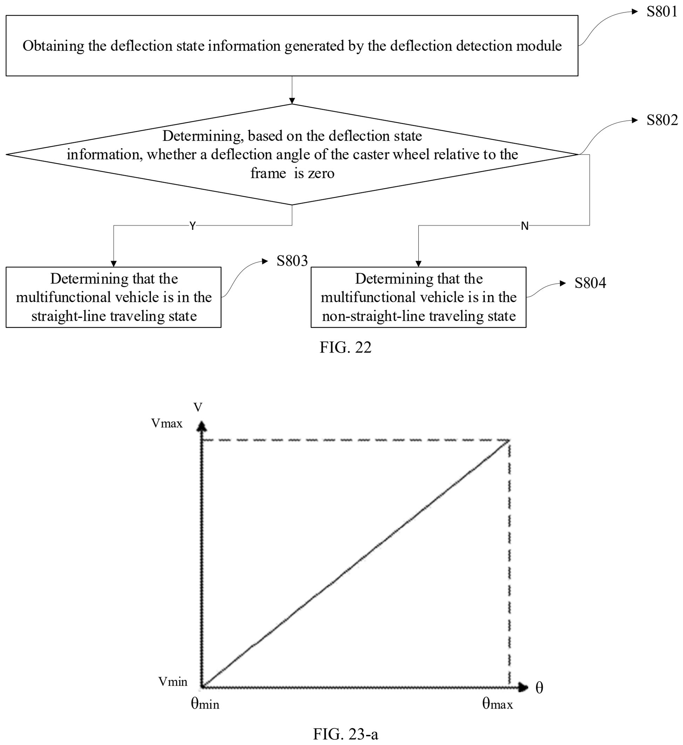

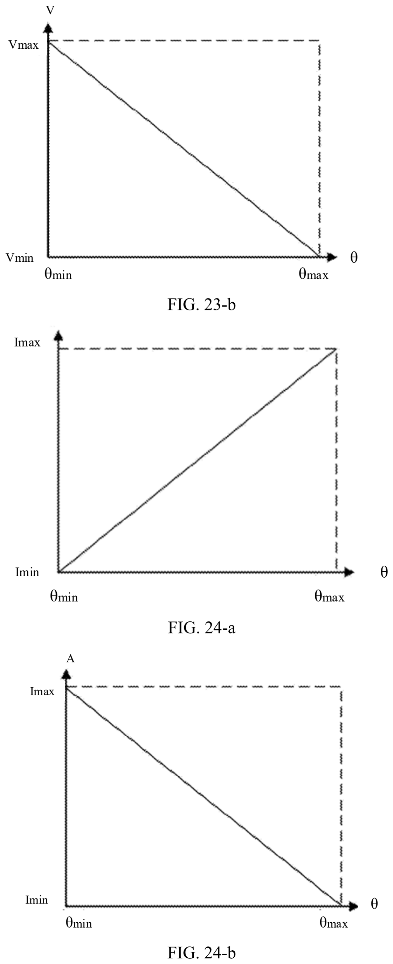

FIG. 23-b shows a schematic diagram of a negative correlation mapping relationship between a voltage analog signal of a deflection detection module and a deflection angle in a multi-purpose vehicle, a garden work vehicle, and a riding mower provided by one or more embodiments of the present disclosure;

FIG. 24-a shows a schematic diagram of a positive correlation mapping relationship between a current analog signal of a deflection detection module and a deflection angle in a multi-purpose vehicle, a garden work vehicle, and a riding mower provided by one or more embodiments of the present disclosure;

FIG. 24-b shows a schematic diagram of a negative correlation mapping relationship between a current analog signal of a deflection detection module and a deflection angle in a multi-purpose vehicle, a garden work vehicle, and a riding mower provided by one or more embodiments of the present disclosure;

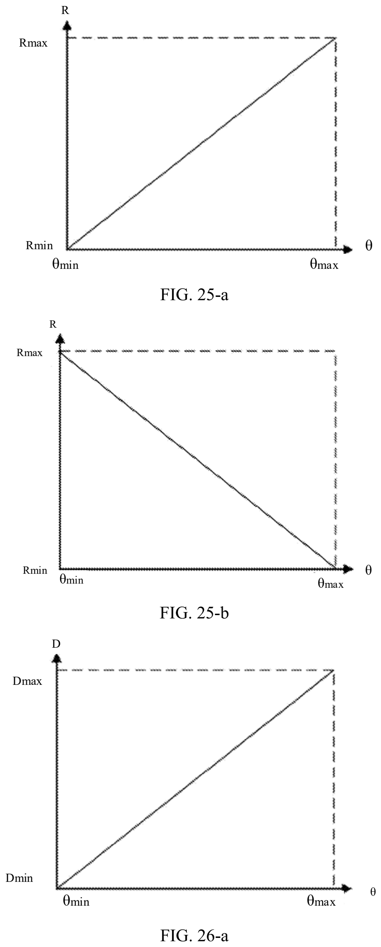

FIG. 25-a shows a schematic diagram of a positive correlation mapping relationship between a resistance analog signal of a deflection detection module and a deflection angle in a multi-purpose vehicle, a garden work vehicle, and a riding mower provided by one or more embodiments of the present disclosure;

FIG. 25-b shows a schematic diagram of a negative correlation mapping relationship between a resistance analog signal of a deflection detection module and a deflection angle in a multi-purpose vehicle, a garden work vehicle, and a riding mower provided by one or more embodiments of the present disclosure;

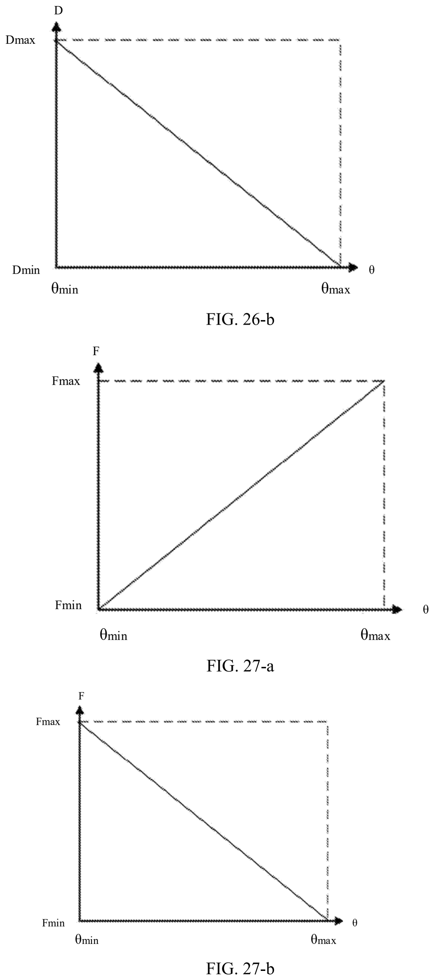

FIG. 26-a shows a schematic diagram of a positive correlation mapping relationship between a PWM signal duty cycle of a deflection detection module and a deflection angle in a multi-purpose vehicle, a garden work vehicle, and a riding mower provided by one or more embodiments of the present disclosure;

FIG. 26-b shows a schematic diagram of a negative correlation mapping relationship between a PWM signal duty cycle of a deflection detection module and a deflection angle in a multi-purpose vehicle, a garden work vehicle, and a riding mower provided by one or more embodiments of the present disclosure;

FIG. 27-a shows a schematic diagram of a positive correlation mapping relationship between a PWM signal frequency of a deflection detection module and a deflection angle in a multi-purpose vehicle, a garden work vehicle, and a riding mower provided by one or more embodiments of the present disclosure;

FIG. 27-b shows a schematic diagram of a negative correlation mapping relationship between a PWM signal frequency of a deflection detection module and a deflection angle in a multi-purpose vehicle, a garden work vehicle, and a riding mower provided by one or more embodiments of the present disclosure;

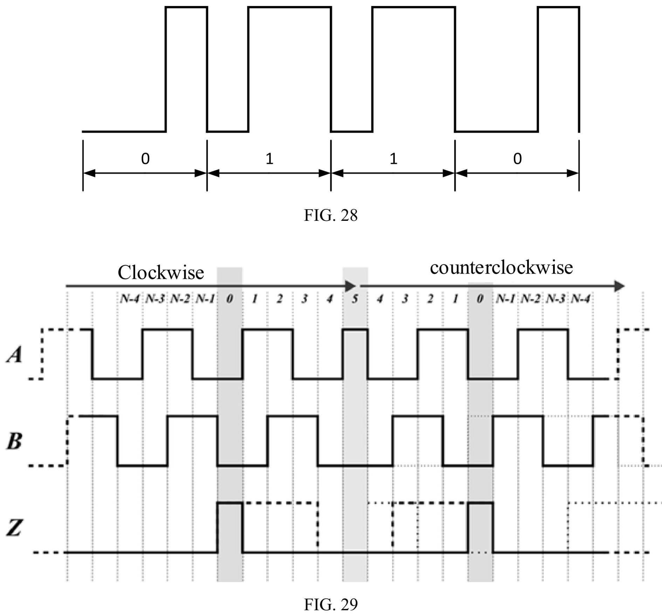

FIG. 28 shows a schematic diagram of a mapping relationship between a PWM signal pulse of a deflection detection module and a deflection angle in a multi-purpose vehicle, a garden work vehicle, and a riding mower provided by one or more embodiments of the present disclosure;

FIG. 29 shows a schematic diagram of a mapping relationship between a ZBA three-phase encoded signal of a deflection detection module and a deflection angle in a multi-purpose vehicle, a garden work vehicle, and a riding mower provided by one or more embodiments of the present disclosure;

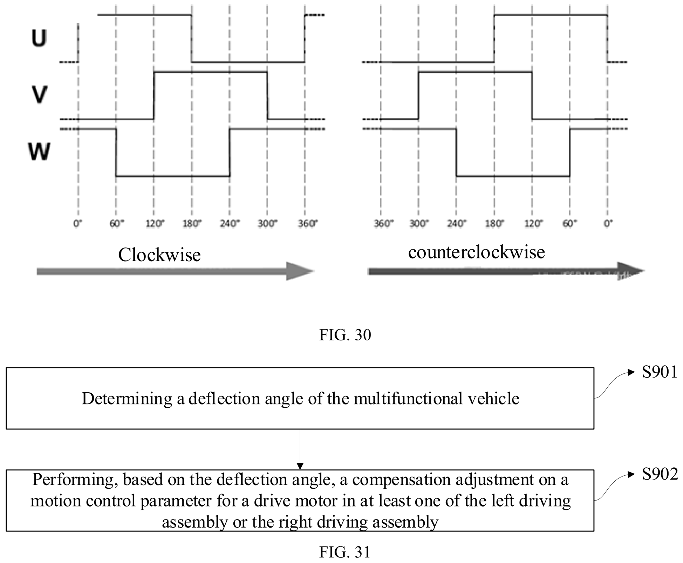

FIG. 30 shows a schematic diagram of a mapping relationship between a UVW three-phase encoded signal of a deflection detection module and a deflection angle in a multi-purpose vehicle, a garden work vehicle, and a riding mower provided by one or more embodiments of the present disclosure; and

FIG. 31 shows a schematic diagram of a method for a calibration controller component to adjust an operating state in a multi-purpose vehicle, a garden work vehicle, and a riding mower provided by one or more embodiments of the present disclosure.

## DETAILED DESCRIPTION

To make the objectives, technical solutions, and advantages of the embodiments of the present disclosure clearer, the technical solutions in the embodiments of the present disclosure will be described clearly and completely below with reference to the accompanying drawings in the embodiments of the present disclosure. Obviously, the described embodiments are part, rather than all of the embodiments of the present disclosure. Based on the embodiments of the present disclosure, all other embodiments obtained by persons of ordinary skill in the art without making creative efforts shall fall within the protection scope of the present disclosure.

Compared with a traditional fuel-powered mower, a battery-powered mower has advantages of all-weather zero emissions, zero fuel consumption, low noise, and simple maintenance due to the absence of gasoline, engine oil, air filters, spark plugs, fuel storage, or the like. Drive wheels of the battery-powered mower adopt motors instead of fuel engines, and the motors of the drive wheels may be independently controlled to achieve motion control of the entire vehicle, such as straight-line traveling, reversing, turning, and zero-turn steering. This design reduces structural complexity of the entire vehicle and makes vehicle control more flexible.

In some related technical solutions, the battery-powered mower achieves traveling control by independently controlling a left drive wheel through a left control handle and a right drive wheel through a right control handle, and has advantages of fast control response and flexible operation. However, when deviations occur in control signals of the left and right control handles, the left and right drive wheels have different sizes and insufficient tire pressure, or the vehicle travels transversely on a slope, the vehicle fails to accurately respond to a control intention of a driver and cannot maintain straight-line traveling, which requires frequent real-time adjustments during operation, significantly affecting user experience.

A specific example is provided herein for illustration. As shown in FIG. 1-a, an operating device of the battery-powered mower drives operation of the left and right wheels. During control of the operation of the riding device, a left control lever and a right control lever may generate mismatched speed signals detected by a sensor due to differences in mechanical structures themselves, errors caused by user control, or errors in control signals. For example, as shown in FIG. 1-b, when the left control lever is pushed to a first gear, an actual speed signal corresponding to a maximum speed position indicated by the first gear is 95% (a maximum speed). As shown in FIG. 1-c, when a right wheel rocker is pushed to the first gear, an actual speed signal corresponding to a maximum forward speed position indicated by the first gear is 100% (a maximum speed). It can be seen that an actual left traveling speed is lower than a right traveling speed, resulting in a higher rotation speed of the right wheel than a rotation speed of the left wheel. As shown in FIG. 1-d, an actual traveling trajectory will form a leftward arc.

The above example is only used to illustrate a traveling error caused by the control lever. During the operation of the riding device, traveling errors may also be caused by other factors, such as different sizes of the left and right drive wheels, insufficient tire pressure, or transverse traveling on a slope, which are not specifically limited herein.

When a traveling deviation occurs in the riding operation device, the device fails to accurately respond to the control intention of the driver and cannot maintain the straight-line traveling, which requires the frequent real-time adjustments during operation, significantly affecting the user experience. In view of the above, the objective of the present disclosure is to propose a vehicle control method, a multi-purpose vehicle, a garden work vehicle, and a riding mower, which can monitor and compare in real time a control intention of a user and a traveling state of the vehicle, and timely perform straight-line calibration control when a traveling abnormality occurs in the vehicle, to ensure that the vehicle can accurately respond to the control intention of the user, optimizing the user experience.

Based on the above objective, in an aspect, the embodiments of the present disclosure provide a vehicle control method.

In order to make the technical solutions and advantages of the embodiments of the present disclosure clearer, exemplary embodiments of the present disclosure are described in further detail below with reference to the accompanying drawings. Obviously, the described embodiments are only a part of the embodiments of the present disclosure, rather than an exhaustive list of all the embodiments. It should be noted that the embodiments of the present disclosure and the features in the embodiments can be combined with each other without conflict.

An application environment of the vehicle control method provided by the embodiments of the present disclosure is briefly described below.

The vehicle control method provided by the embodiments of the present disclosure is applied in a vehicle control system. The vehicle control system includes a processor, a measurement module, and a drive module. The processor is connected to the measurement module. The measurement module is connected to the drive module. The processor is configured to: obtain operating data transmitted by the measurement module and calculate a deviation amount; calculate compensation data based on the deviation amount and the operating data; and compensate for a deviation amount of the vehicle from a preset trajectory using the compensation data, thereby adjusting a traveling mode of the vehicle to make the vehicle return to the preset trajectory to travel. The processor may be a hardware module or a processing module in a server.

The measurement module is configured to detect the operating state of the vehicle during traveling, to calculate the deviation amount between current traveling and a preset route. For example, the measurement module may include an Inertial Measurement Unit (IMU). The IMU may at least include a 6-axis sensor internally including a 3-axis gyroscope and a 3-axis accelerometer. The term "3-axis" refers to three coordinate axes in X, Y, and Z planes of a coordinate system. The 3-axis gyroscope is configured to measure an angular velocity around each axis, with an accuracy typically expressed in °/s, i.e., the number of degrees rotated per second based on this rotation trend. The 3-axis accelerometer is configured to measure gravitational acceleration acting on each axis. The gyroscope may obtain an attitude angle through integration, while the accelerometer may obtain an attitude angle through a 3-axis relationship. The attitude angle obtained by the gyroscope is accurate in the short term but prone to drift over extended periods. The attitude angle obtained by the accelerometer exhibits significant short-term oscillation but is relatively accurate over long periods. By fusing the data from these two sensors to leverage their respective advantages and offset their shortcomings, a relatively accurate attitude angle may be achieved.

The drive module is configured to, after obtaining the compensation data, configure a driving parameter of the vehicle based on the compensation data, thereby changing a driving mode of the vehicle, such as configuring a motor rotation speed of the vehicle.

The above vehicle control system may be detachably deployed in a riding device, facilitating operations such as vehicle traveling control and system maintenance and upgrade.

When the system in the embodiment of the present disclosure is deployed, the drive module may further include: a left wheel speed control rocker, a right wheel speed control rocker, a left wheel controller, and a right wheel controller. The left wheel controller is connected to a left drive module, and the right wheel controller is connected to a right drive wheel motor. The left wheel speed control rocker may be located at a left side of a cab and be configured to control a leftward traveling mode of the vehicle. The right wheel speed control rocker may be located at a right side of the cab and be configured to control a rightward traveling mode of the vehicle. The left wheel controller is configured to control a motor for leftward traveling of the vehicle, and the right wheel controller is configured to control a motor for rightward traveling of the vehicle.

The following embodiments take the processor in the above trajectory processing system as an execution subject, and take the method provided by the embodiments of the present disclosure being applied in a case where the vehicle deviates from the preset trajectory during its traveling as an example for a detailed explanation. The vehicle control method provided by the embodiments of the present disclosure includes the following steps 201 to 204.

At step 201, calibration request information is obtained.

The calibration request information is used to request control of vehicle traveling based on a preset trajectory.

The vehicle may at least include a vehicle used in a garden operation, such as a riding mower. The vehicle is equipped with at least two control devices. Each of the at least two control devices may control driving in one direction. For example, when the processor detects a control signal transmitted by the left control device, the vehicle is driven to move leftward.

In the embodiment of the present disclosure, it can be determined whether to obtain the calibration request information by detecting whether a calibration function is triggered. The triggering of the calibration function can be determined by detecting a button module or a control device. The button module may be a physical button or a virtual button. For example, it can be detected whether the user presses a button on a detection display screen and whether the user has pushed a left/right traveling control handle sensor to a preset position, If both conditions are met, a left/right wheel calibration request is transmitted to a vehicle control unit. Alternatively, it can first be determined whether a current traveling trajectory of the vehicle matches the preset trajectory. For example, if it is detected that the attitude angle has changed and exceeds a preset value, the calibration function is automatically activated, or the permission to activate the calibration function is enabled.

At step 202, a current operating parameter of a vehicle is obtained based on the calibration request information.

The operating parameter may be used to indicate a current traveling direction and posture of the vehicle. The operating parameter includes at least one of an attitude parameter, a heading angle parameter, or a displacement parameter. The operating parameter may at least be obtained by a sensor such as a gyroscope and an acceleration sensor.

It can be determined whether the vehicle is traveling along a preset path, such as whether the vehicle is traveling straight, based on the current operating parameter of the vehicle.

At step 203, target compensation data is calculated in response to a mismatch between the operating parameter and the preset trajectory. The target compensation data is used to correct traveling deviation of the vehicle to make the vehicle travel in accordance with the preset trajectory.

The target compensation data is used to compensate for an error caused by the traveling deviation of the vehicle from the preset trajectory. The target compensation data may be used to compensate for a motor rotation speed, a motor torque, or a control signal, to make the vehicle return to the preset trajectory. For example, when the preset trajectory is a straight line and the current traveling trajectory of the vehicle is deviating to the left, the motor needs to be adjusted to reduce the rotation speed of the left wheel and increase the rotation speed of the right wheel, so that the vehicle returns to the straight-line traveling.

At step 204, a driving parameter of the vehicle is corrected based on the target compensation data, to cause the vehicle to travel along the preset trajectory.

The driving parameter is used to control a traveling direction and a traveling speed of the vehicle, enabling the vehicle to travel in any direction. The driving parameter may include a left driving parameter and a right driving parameter. The left driving parameter refers to a parameter for driving the vehicle to travel to the left and a corresponding traveling speed. The right driving parameter refers to a parameter for driving the vehicle to travel to the right and a corresponding traveling speed. For example, the vehicle may be controlled to travel leftward, rightward, forward, backward using the driving parameter.

When it is determined that deviation correction is needed, a deviation correction torque of a distributed-drive vehicle is calculated in real-time based on the deviation amount; and the deviation correction torque is distributed to a plurality of wheels in real-time to compensate for the deviation amount.

A change in the traveling trajectory during a vehicle deviation correction process using the method provided by the embodiment of the present disclosure is shown in FIG. 1-e.

At an initial time point, the vehicle travels with a zero target steering angle, i.e., travels straight, the traveling trajectory of the vehicle is detected by detecting a change in the attitude angle. When the calibration function is activated, it is determined whether the attitude angle of the vehicle changes and is greater than a preset value. In response to the attitude angle of the vehicle changing and being greater than the preset value, the target compensation data is obtained based on a preset attitude angle trajectory and the driving parameter. Then, the driving parameter is configured using the target compensation data to complete the deviation correction process, so that the vehicle finally returns to the preset trajectory.

The vehicle mentioned in this embodiment may be a vehicle with a plurality of wheels that may be independently driven and controlled. For the distributed-drive vehicle, since each drive wheel is fully decoupled and independent, the vehicle is prone to deviation due to wheel speed imbalance. Deviation correction based on four-wheel alignment may only be performed when the vehicle stops traveling. However, when the vehicle deviates from the predetermined trajectory during travel, the vehicle usually fails to recognize this phenomenon in real time and perform active correction, thereby reducing straight-line traveling performance of the vehicle.

The method provided in the present disclosure, when calibrating a vehicle traveling path, includes: determining whether the calibration function is activated, such as whether activation of calibration button is detected and whether a calibration instruction is received.

In response to the calibration function being activated, a preset path is obtained, and an error threshold is determined based on the preset path. The error threshold may include: an allowable threshold for a deviation between a leftward traveling control signal and a rightward traveling control signal, or an allowable threshold for a deviation between a leftward traveling motor and a rightward traveling motor. Then, the method further includes: determining whether a current error between the leftward traveling control signal and the rightward traveling control signal corresponding to the vehicle is greater than the threshold; or determining whether a current error between a leftward traveling motor parameter and a rightward traveling motor parameter corresponding to the vehicle is greater than the threshold;

When any one of determination results in the above determination processes indicates that the error is greater than the threshold, calibration is enabled. The target compensation data of the vehicle is calculated based on the preset path and the error; and configuring the control signal or motor parameter of the vehicle are configured based on the target compensation data to make the vehicle travel return to the preset path.

In the method provided by the embodiments of the present disclosure, during the vehicle travel, it is determined in real time whether the vehicle travel deviates from the preset trajectory by obtaining the operating parameter of the vehicle. When a deviation occurs, a deviation correction function is activated, the target compensation data is obtained, and the traveling parameter of the vehicle is configured using the target compensation data. That is, additional correction control (such as a motor torque, a control signal, and a motor rotation speed) is applied to the wheels to actively compensate for such deviation. Therefore, a vehicle body attitude can be corrected in real time during the vehicle travel, which solves a problem in the prior art where a vehicle traveling deviation cannot be handled in a timely and accurate manner, and improves efficiency of vehicle traveling control. Meanwhile, The calibration operation only requires the processor and the measurement module, resulting in a simple structure and controllable cost, and ease of implementation.

In an embodiment of the present disclosure, obtaining the target deviation data in step 201 includes steps 301 to 304.

At step 301, it is detected whether a calibration function is activated.

Activation of the calibration function may be detected via a hardware module or a software module. For example, it may be detected whether the button module is triggered or whether the activation instruction is received, to activate the calibration function.

At step 302, a first control parameter of a left control module and a second control parameter of a right control module in the target vehicle are obtained.

The traveling of the vehicle in the embodiment of the present disclosure may be controlled using a plurality of control modules. Each wheel may be driven using a control parameter in the control modules. The control parameter may include a control instruction, sensor data, a motor torque, a motor rotation speed, or the like.

At step 303, a control parameter deviation value between the first control parameter and the second control parameter is calculated.

The vehicle may be controlled to travel in a preset direction using the first control parameter and the second control parameter. For example, in response to the control parameter deviation value between the first control parameter and the second control parameter being within a preset range, the vehicle may be controlled to travel straight. In response to the control parameter deviation value between the first control parameter and the second control parameter being within a first preset threshold, the vehicle may be controlled to travel to the left.

A case where the first control parameter refers to an angular displacement signal SL of a left traveling control module of the vehicle, and the second control parameter refers to an angular displacement signal SR of a right traveling module of the vehicle is taken as an example for illustration.

In a first example, it is determined whether each of the angular displacement signal SL (an angular displacement signal of leftward traveling control) and SR (an angular displacement signal of rightward traveling control) is greater than a lower limit Smax-LT of a maximum output value of a preset angular displacement signal, i.e., it is determined whether a left/right handle is pushed fully forward. The Smax-LT is determined based on an error range $\pm\Delta S1$ given in a signal sensor specification, actually measured error data $\Delta S2$ and a certain error margin $\Delta S3$ through the follow equation: Smax-LT=Smax-MAX($\Delta S1$, $\Delta S2$)-$\Delta S3$.

In a second example, it is determined whether an absolute value of a difference between the angular displacement signals SL and SR is smaller than or equal to a set threshold, i.e., $|SL-SR|\leq\Delta SLR$-max, where $\Delta SLR$-max is a set upper limit of absolute difference threshold. Through the above determination, the vehicle can be prevented from performing a deviation correction operation during normal traveling. In actual straight-line traveling, a difference between angular displacement signals of left and right traveling motors falls within a preset threshold range. When actually collected angular displacement signals show a large discrepancy, it indicates that mechanical positions of the left and right handles are not aligned, meaning the driver does not intend to travel straight but to turn. Performing straight-line compensation in such a case complicates the issue, resulting in a poor or even worsening compensation effect, and is therefore not meaningful.

At step 304, the calibration request information is generated in response to the control deviation value being within a preset range and the calibration function being activated.

When the above two determination conditions are each satisfied, the calibration operation is enabled, and calculation of the compensation data starts. In response to either of the above determination conditions not being satisfied, a prompt message, such as a prompt light, sound, or display interface icon, is generated to remind the user to align physical positions of the left and right handles as much as possible.

In the embodiment of the present disclosure, various factors are comprehensively determined, which thus can accurately determine whether to activate a straight-line calibration function. For example, determining whether the vehicle activates the calibration function is to avoid a mis-operation in practical applications such as when the vehicle is stationary. In this scenario, vehicle deviation cannot occur and calibration is therefore unnecessary. Simultaneously, determining a deviation value of the control parameter of the vehicle is to avoid a mis-operation in practical applications such as when the vehicle is traveling with a non-zero target steering angle, i.e., the vehicle is actually turning under control. In this scenario, deviation from a straight-line motion is expected, and deviation compensation is therefore actually unnecessary.

In an optional embodiment of the present disclosure, obtaining the current operating parameter of the vehicle in step 202 may include steps 401 to 402.

At step 401, first data transmitted by a first sensor and second data transmitted by a second sensor are obtained.

Each of the first data and the second data may include an attitude angle, which is used to describe a spatial orientation of vehicle in a world coordinate system. The attitude angle may include a heading angle, a pitch angle, a roll angle, or the like.

The first sensor may be a device for detecting an angular motion, such as a gyroscope. The second sensor may be a device for detecting acceleration, such as an acceleration sensor.

At step 402, fusion processing is performed on the first data and the second data based on an attitude resolution algorithm to obtain the target attitude angle.

The gyroscope may calculate the attitude angle through integration. The acceleration sensor may obtain the attitude angle through a relationship between an X-axis, a Y-axis, and a Z-axis in the coordinate system. However, in the above calculation process, the attitude angle obtained by the gyroscope is accurate in the short term but prone to drift over extended periods, while the attitude angle obtained by the acceleration sensor exhibits significant short-term oscillation but is relatively accurate over long periods. By fusing the data from these two sensors to obtain a final attitude angle, a calculation error may be reduced, calculation accuracy may be improved, and an accurate attitude angle may be obtained.

The attitude angle refers to an angle of a sensor in a world coordinate system where the vehicle is located. Specifically, the attitude angle may be converted based on processor coordinates and vehicle coordinates to determine attitude coordinate data of the attitude angle in the world coordinate system.

In the embodiment of the present disclosure, by calculating the attitude angle, it can be calculated whether a current vehicle traveling trajectory deviates from the preset trajectory, which facilitates the improvement of subsequent deviation correction processing.

In an optional embodiment of the present disclosure, calculating target deviation correction data for current iteration in step 203 may include steps 501 to 503:
At step 501, a type of the preset trajectory is obtained.

The preset trajectory includes at least one of straight-line traveling, right-turn traveling, left-turn traveling, or traveling along a special path trajectory.

At step 502, a preset operating parameter matching the type of the preset trajectory is obtained based on the type of the preset trajectory.

The preset operating parameter may include at least one of a yaw velocity, a lateral displacement, a heading angle, or an attitude angle.

For example, when the type of the preset trajectory is the straight-line traveling, a preset yaw velocity, a preset lateral displacement, a preset heading angle, or a preset attitude angle may be set to zero.

At step 503, it is determined that the operating parameter does not match the preset trajectory in response to a mismatch between the current operating parameter and the preset operating parameter.

For example, in response to a heading angle in the current operating parameter being greater than 20° and a heading angle of the preset path being smaller than 5°, it indicates that the vehicle deviates. In the embodiment of the present disclosure, by calculating the current vehicle operating parameter, a deviation between a current vehicle trajectory and the preset trajectory may be quantified. Moreover, a deviation correction strategy is accurately formulated based on a current deviation of the vehicle, thereby improving deviation correction accuracy.

In an optional embodiment of the present disclosure, calculating target deviation correction data for the current iteration in step 202 may include steps 601 to 604.

At step 601, a preset angle matching the preset trajectory is obtained.

For example, when the preset trajectory is the straight-line traveling, the preset angle is determined to be zero in a target coordinate system.

At step 602, a target angle is calculated based on a difference between the target attitude angle and the preset angle.

An interval where the attitude angle is located may be determined based on the difference between the attitude angle and the preset angle, thereby determining a direction for adjusting the vehicle.

When $\in \Psi[-\pi \sim 0)$, it indicates that the vehicle deviates from the preset trajectory to the left. When $\Psi \in (0 \sim \pi]$, it indicates that the vehicle deviates from the preset trajectory to the right. The interval of $\Psi \varepsilon[-\pi \sim 0)$ means that the traveling direction deflects counterclockwise. The interval of $\Psi \in (0 \sim \pi]$ means that the traveling direction deflects clockwise.

An adjustment direction of vehicle drive is determined based on the interval where the attitude angle is located, and the target compensation data is calculated.

In response to the attitude angle being in a first interval of the target coordinate system, the target compensation data is calculated based on the difference between the attitude angle and the preset angle, and the driving parameter of the vehicle is determined to be adjusted to make the vehicle deflect in a first direction.

In response to the attitude angle being in a second interval of the target coordinate system, the target compensation data is calculated based on the difference between the attitude angle and the preset angle, and the driving parameter of the vehicle is determined to be adjusted to make the vehicle deflect in a second direction.

The target angle at least includes one of a first angle and a second angle. The first angle refers to an angle for driving the vehicle to deviate to the left to reduce the difference between the attitude angle and the preset angle, and the second angle refers to an angle for driving the vehicle to deviate to the right to reduce the difference between the attitude angle and the preset angle.

At step 603, a driving parameter of the vehicle is obtained.

That is, the driving parameter of the vehicle when the vehicle deviates from the preset trajectory is obtained to facilitate subsequent analysis of an adjustment direction and manner of the vehicle. The driving parameter of the vehicle may include a control signal and a motor parameter. The motor parameter at least includes a motor rotation speed and a motor torque.

At step 604, the target compensation data is calculated based on the driving parameter of the vehicle and the target angle.

Specifically, a deviation caused by the vehicle current traveling is compensated into subsequent traveling control, to cause the vehicle to return to the preset trajectory using an angle adjustment.

In an optional embodiment of the present disclosure, calculating the target compensation data based on the driving parameter of the vehicle and the target angle in step 404 may include steps 701 to 703.

At step 701, when the driving parameter of the vehicle includes a control signal, a target signal is calculated based on the target angle, and the target compensation data is generated based on the target signal, to cause the vehicle to return to the preset trajectory using the control signal.

The control signal at least includes a signal for controlling the vehicle to travel to the left and a signal for controlling the vehicle to travel to the right.

At step 702, when the driving parameter of the vehicle includes an initial rotation speed, a target rotation speed is calculated based on the target angle, and the target compensation data is obtained using the target rotation speed, to cause the vehicle to return to the preset trajectory using the target rotation speed.

The initial rotation speed at least includes an initial left rotation speed for controlling the vehicle to travel to the left and an initial right rotation speed for controlling the vehicle to travel to the right.

At step 703, when the driving parameter of the vehicle includes an initial torque, a target torque is calculated based on the target angle, to cause the vehicle to return to the preset trajectory using the target torque.

In an embodiment of the present disclosure, when the target compensation data is calculated, iterative optimization calculation may be performed, and calculation steps may include: obtaining a preset compensation coefficient, historical compensation data calculated in a previous iteration, and a target angle calculated in a current iteration; and calculating the target compensation data based on the preset compensation coefficient, the historical compensation data, and the target angle.

In the embodiment of the present disclosure, by calculating the target compensation data using the historical compensation data, a computing resource may be saved. Moreover, an adjustment is made based on a previous compensation result, resulting in a relatively small change in an adjustment amplitude, which is more beneficial to efficient operation of the device and stable return of the device to the preset trajectory.

In an embodiment of the present disclosure, correcting the driving parameter of the vehicle based on the target compensation data includes: obtaining calibration data; in response to determining that the calibration function is activated, calculating target compensation data corresponding to different compensation types, and compensating the driving parameter based on the target compensation data; and driving wheels to travel using the driving parameter. The different compensation types include signal compensation, rotation speed compensation, and torque compensation. The driving parameter includes a control signal, a motor rotation speed, or a motor torque. A specific compensation process is as described in steps 701 to 703 above, and details are omitted herein.

Based on the same objective, the embodiments of the present disclosure further provide a multi-purpose vehicle.

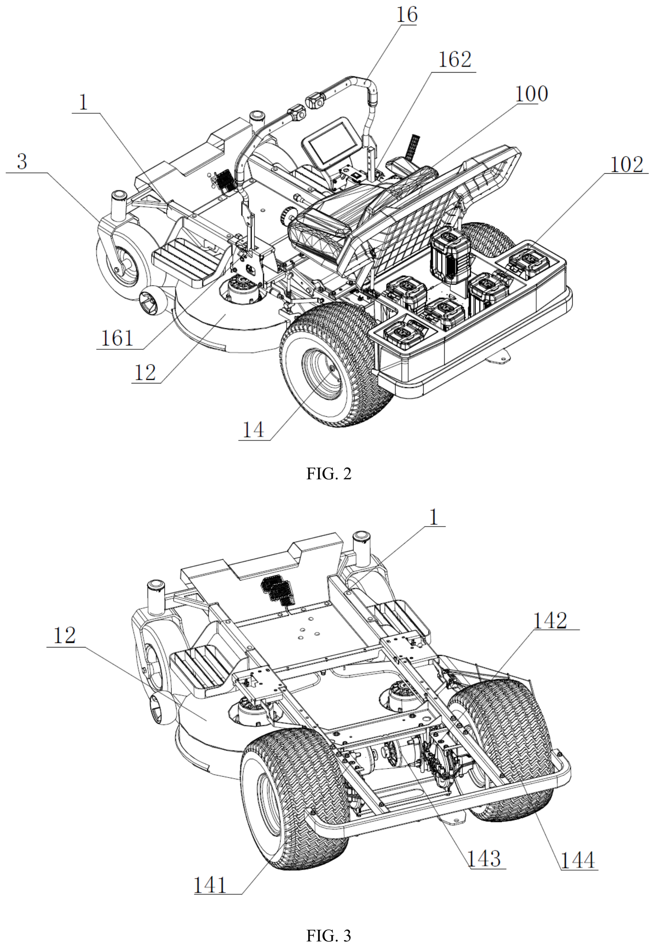

As shown in FIG. 2, the multi-purpose vehicle provided by one or more embodiments of the present disclosure includes: a frame 1, a functional mechanism 12 connected to the frame, a drive mechanism 14, and a control mechanism 16.

The frame 1 extends at least partially parallel to a front-rear direction. A load-carrying mechanism 100 may be arranged on the frame 1. The load-carrying mechanism 100 is configured to carry an operator of the multi-purpose vehicle and may include at least one of a seat or a standing platform. FIG. 2 exemplarily shows only a case where the load-carrying mechanism 100 includes a seat. The seat or the standing platform is used for the operator to sit or stand on. That is, the multi-purpose vehicle may provide a riding operating mode or a standing operating mode. Further, a structure of the seat and a structure of the standing platform may be flexibly switched, i.e., the operating mode of the multi-purpose vehicle may be flexibly switched between the riding operating mode and the standing operating mode based on actual needs of the operator. A hand-held operation component may also be arranged on the frame 1. Based on the hand-held operation component, the multi-purpose vehicle may further provide a walk-behind operating mode.

The functional mechanism 12 includes an output member for outputting power to achieve a specific function. In some embodiments, the functional mechanism 12 is a mowing element for implementing a mowing function. The functional mechanism is further connected to the frame 1. The functional mechanism 12 further includes a functional motor for driving the mowing element to rotate at a high speed, and a control module corresponding to the functional motor.

In some embodiments, the functional mechanism 12 may include one or more mowing elements and one or more functional motors provided in correspondence with the one or more mowing elements. For example, in some embodiments, the mowing element includes 3 blades, and the number of corresponding functional motors is also set to 3. In some specific implementations, the functional mechanism 12 further includes a control module provided in correspondence with the mowing motors. The control module includes a control chip, such as an MCU or an ARM.

In some embodiments, the functional mechanism 12 may also be a cleaning element for implementing a cleaning function. The functional mechanism further includes a functional motor for driving the cleaning element and a control module corresponding to the functional motor.

It can be understood that in some embodiments, the functional mechanism may also be replaced with other functional components, such as components for snow removal, snow blowing, snow plowing, and flushing. Those skilled in the art should be able to adaptively replace various functional components without creative effort, all of which should fall within the protection scope of this embodiment.

As shown in FIG. 3, the drive mechanism 14 is configured to drive the multi-purpose vehicle to travel within garden scenarios such as lawns, gardens, fences, greens, or other road surfaces. In some implementations, the drive mechanism 14 includes a left driving assembly 141 and a right driving assembly 142. The left driving assembly 141 is arranged on a left side of the frame, and the right driving assembly 142 is arranged on a right side of the frame. Each of the left driving assembly 141 and the right driving assembly 142 includes a drive motor 143 and a drive wheel 144 mechanically coupled to the drive motor 143. The drive motor 143 may transmit power to the driving wheel 144 to drive the driving wheel 144 to rotate, thereby driving the multi-purpose vehicle to move.

When the drive motors 143 in the left driving assembly 141 and the right driving assembly 142 drive the corresponding driving wheels 144 at different powers, a rotation speed difference is generated between left and right driving wheels 144, thereby enabling the multi-purpose vehicle to turn.

As shown in FIG. 2, the multi-purpose vehicle further includes a power supply system 102 configured to supply power to the functional mechanism 12, the drive mechanism 14, and the control mechanism 16.

The power supply system 102 is arranged on the frame 1 and detachably connected to the frame 1. The power supply system 102 includes a plurality of battery units. The plurality of battery units may be at least one of a first-specification battery pack and a second-specification battery pack. The specification differences between the first-specification battery pack and the second-specification battery pack include, but are not limited to, differences in battery pack capacity, voltage, internal resistance, weight, size, energy density, cell type, state of charge information, battery health state information, and other aspects.

In some embodiments, the difference between the first-specification battery pack and the second-specification battery pack lies in the capacity. The capacity of the first-specification battery pack is greater than the capacity of the second-specification battery pack. The second-specification battery pack is configured to supply power to hand-held garden tools. For example, the second-specification battery pack may supply power to garden tools such as grass trimmers, pruners, blowers, and chain saws. In addition, the second-specification battery pack may also supply power to torque output tools such as electric drills and electric hammers, supply power to sawing tools such as circular saws, jigsaws, and reciprocating saws, or supply power to grinding tools such as angle grinders and sanders.

In some embodiments, the difference between the first-specification battery pack and the second-specification battery pack lies in different types of battery cells used. For example, the first-specification battery pack and the second-specification battery pack may adopt a lithium iron phosphate cell and a ternary lithium cell, respectively. The plurality of battery units in the power supply system may also adopt a nickel-chromium battery cell, a lead-acid battery cell, a graphene battery cell, or the like.

The use of at least one of the first-specification battery pack and the second-specification battery pack as the plurality of battery units in the power supply system 102 allows the multi-purpose vehicle may be compatible with battery packs of different specifications, to meet the requirements for high-power operating while also being adaptable to a hand-held electric garden tool, which can make an operating mode of the operator more flexible.

As shown in FIG. 2, the control mechanism 16 is coupled to the drive mechanism 14 and configured to control an operating state of the drive mechanism 14 to adjust a traveling state of the multi-purpose vehicle.

In some implementations, corresponding to the left driving assembly 141 and the right driving assembly 142 in the drive mechanism 14, the control mechanism 16 is set to include a left control assembly 161 and a right control assembly 162. The left control assembly 161 is coupled to the left driving assembly 141 to control an operating state of the left driving assembly 141. The right control assembly 162 is coupled to the right driving assembly 142 to control an operating state of the right driving assembly 142.

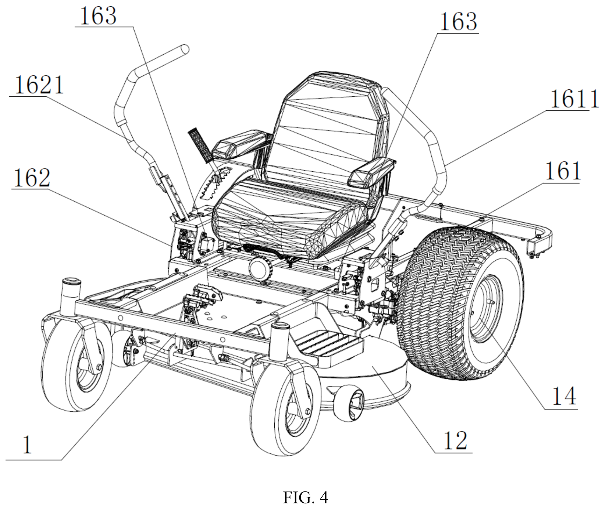

As shown in FIG. 4 to FIG. 8, the left control assembly 161 includes a left control lever 1611, and the right control assembly 162 includes a right control lever 1621. Each of the left control assembly 161 and the right control assembly 162 further includes a rotation detection module 163 and a drive controller module 164.

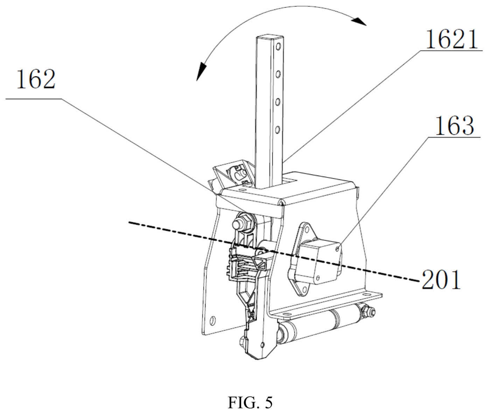

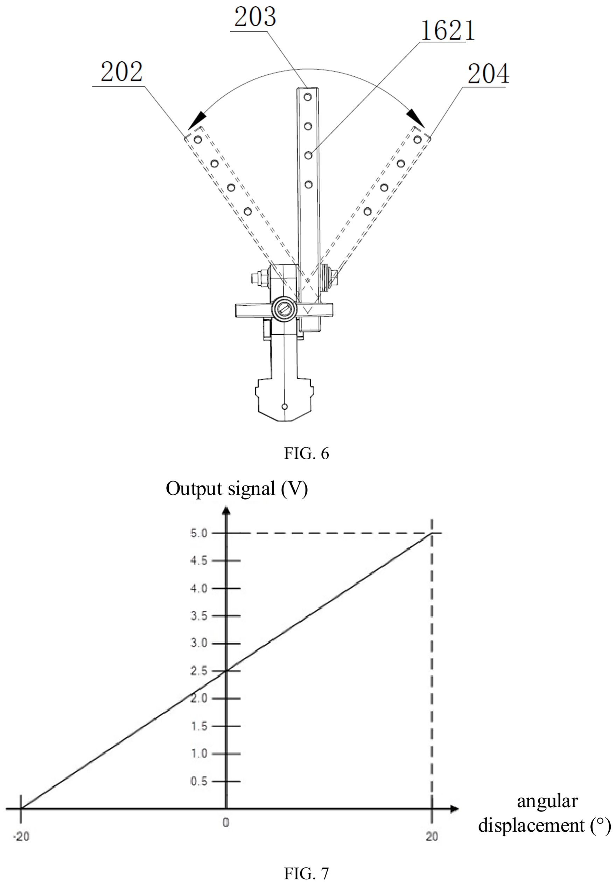

As shown in FIG. 5 and FIG. 6, each of the left control lever 1611 and the right control lever 1621 is configured to be controllably rotated about a first axis 201 between a first forward position 202, a neutral position 203, and a first backward position 204. The right control assembly 162 is taken as an example for illustration in the drawings, and an upper part of the right control lever 1621 is not shown.

The first axis 201 is substantially perpendicular to a vehicle body extending direction of the multi-purpose vehicle. During rotation, when the control lever rotates towards a front end of the frame 1, the control lever rotates forward and is in the forward position, and a limit position reachable by the control lever when rotating forward is the first forward position 202. When the control lever rotates towards a rear end of the frame 1, the control lever rotates backward and is in the backward position, and a limit position reachable by the control lever when rotating backward is the first backward position 204. When the control lever maintains a perpendicular or substantially perpendicular positional relationship with the frame 1, the control lever is in the neutral position 203.

In some embodiments, a limiting plate assembly is further disposed in the control mechanism 16. The limiting plate assembly includes a first limiting plate arranged in the left control assembly 161 and a second limiting plate arranged in the right control assembly 162. Limiting grooves are formed in the first limiting plate and the second limiting plate to limit rotation ranges of the left control lever 1611 and the right control lever 1621.

By taking the first limiting plate as an example, when the left control lever 1611 is rotated about the first axis 201, it indicates that the left control lever 1611 rotates in the limiting groove of the first limiting plate. A front end and a rear end of the limiting groove correspond to the first forward position 202 and the first backward position 204 reachable by the left control lever 1611.

The rotation detection module 163 is arranged corresponding to the respective control lever. Specifically, the rotation detection module 163 may be arranged at a position where the control lever intersects the first axis 201, and be configured to detect a pivoting direction and angular displacement of a corresponding control lever among the left control lever and the right control lever to generate angular displacement information.

In some embodiments, the rotation detection module 163 may adopt a Hall angle sensor. FIG. 7 is a schematic diagram of a corresponding relationship between angular displacement information outputted by the Hall angle sensor when serving as the rotation detection module 163 and a pivoting direction and angular displacement of the corresponding control lever.

Exemplarily, a mechanical angular displacement of the control lever about the first axis 201 ranges from +20° to -20°. An angle of a forward rotation of the control lever, i.e., an angle of a rotation of the control lever towards the first forward position 202, may be defined as positive, and the corresponding angle of a backward rotation of the control lever may be defined as negative. Alternatively, the angle of the backward rotation of the control lever, i.e., the angle of the rotation of the control lever towards the first backward position 204, may be defined as positive, and the corresponding angle of the forward rotation of the control lever may be defined as negative.

The Hall angle sensor may output the angular displacement information in the form of a voltage signal, and a range of an output voltage signal corresponding to an angular displacement range of the control lever is [0, 5V]. As shown in FIG. 7, a voltage value outputted by the Hall angle sensor has a linear proportional relationship with the angular displacement of the control lever.

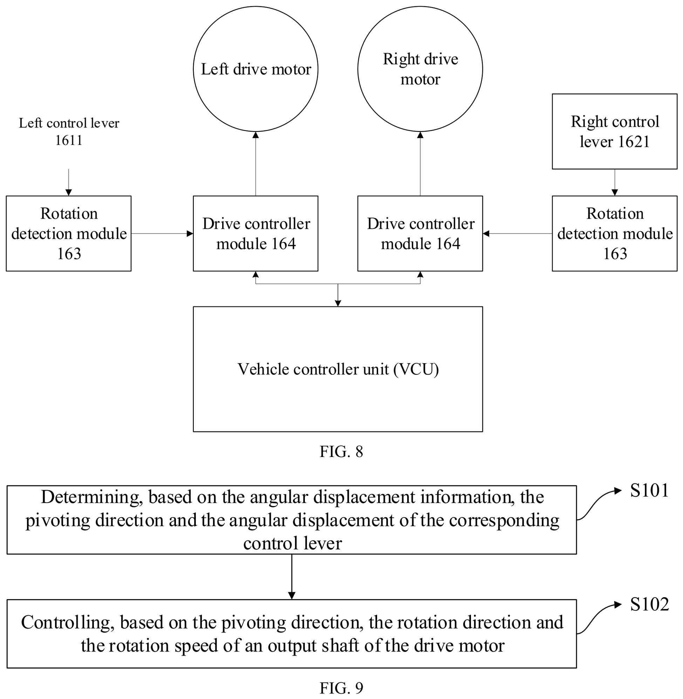

As shown in FIG. 8, the drive controller module 164 is communicatively connected to the rotation detection module 163 to receive the angular displacement information generated by the rotation detection module 163. Further, the drive controller module 164 is configured to control the rotation direction and the rotation speed of the drive motor 143 in the corresponding drive assembly based on the angular displacement information.

As shown in FIG. 9, in the multi-purpose vehicle provided by one or more embodiments of the present disclosure, the drive controller module 164 is configured to control the rotation direction and the rotation speed of the drive motor in the corresponding driving assembly based on the angular displacement information by using steps S101 and S102.

At step S101, the pivoting direction and the angular displacement of the corresponding control lever are determined based on the angular displacement information.

The drive controller module 164 may determine the pivoting direction and the angular displacement of the corresponding control lever based on the angular displacement information.

At step S102, the rotation direction and the rotation speed of an output shaft of the drive motor are controlled based on the pivoting direction.

In response to a forward rotation of the control lever, the output shaft is controlled to output power in a first rotation direction to drive the drive wheel forward.

In response to a backward rotation of the control lever, the output shaft is controlled to output power in a second rotation direction to drive the drive wheel backward.

In addition, the rotation speed of the output shaft of the drive motor 143 is proportionally controlled based on the angular displacement. Specifically, the drive controller module 164 may control the rotation speed of the output shaft in accordance with the following corresponding relationship:

$$\frac{\theta}{\theta_{max}} = \frac{V}{V_{max}}$$

where $\theta$ denotes the angular displacement of the corresponding control lever, $\theta_{max}$ denotes a maximum angular displacement of the corresponding control lever in its rotation direction, V denotes a target rotation speed of the output shaft of the drive motor 143 controlled by the drive controller module 164, and $V_{max}$ denotes a maximum rotation speed achievable by the output shaft of the drive motor 143 controlled by the drive controller module 164.

The left control assembly 161 controlling the left driving assembly 141 are taken as an example for illustration. A mechanical angular displacement of the left control lever 1611 about the first axis 201 ranges from +20° to -20°. An angle of a forward rotation of the left control lever 1611 is positive. A range of a voltage signal outputted by the rotation detection module 163 in the left control assembly 161 is [0, 5V]. The maximum rotation speed of the output shaft of the corresponding drive motor 143 controllable by the drive controller module 164 may be, for example, 2500 rpm, and a maximum traveling speed of the corresponding drive wheel 144 may be, for example, 12 km/h.

Angular displacement information outputted by the rotation detection module 163 in the left control assembly 161 when detecting the left control lever 1611 is 3.0V. Based on this angular displacement information, the drive controller module 164 in the left control assembly 161 may determine that the left control lever 1611 rotates forward at an angular displacement of 4°. Further, the drive controller module 164 controls the drive motor 143 in the left driving assembly 141 to output power in the first rotation direction, thereby driving the corresponding drive wheel 144 to rotate forward, and controls the rotation speed of the output shaft of the drive motor 143 to be 500 rpm, which may correspondingly drive the left drive wheel to travel forward at a speed of 3 km/h.

Angular displacement information outputted by the rotation detection module 163 in the left control assembly 161 when detecting the left control lever 1611 is 1.5V. Based on this angular displacement information, the drive controller module 164 in the left control assembly 161 may determine that the left control lever 1611 rotates backward at an angular displacement of -8°. Further, the drive controller module 164 controls the drive motor 143 in the left driving assembly 141 to output power in the second rotation direction, thereby driving the corresponding drive wheel 144 backward, and controls the rotation speed of the output shaft of the drive motor 143 to be 1000 rpm, which may correspondingly drive the left drive wheel to travel backward at a speed of 6 km/h.

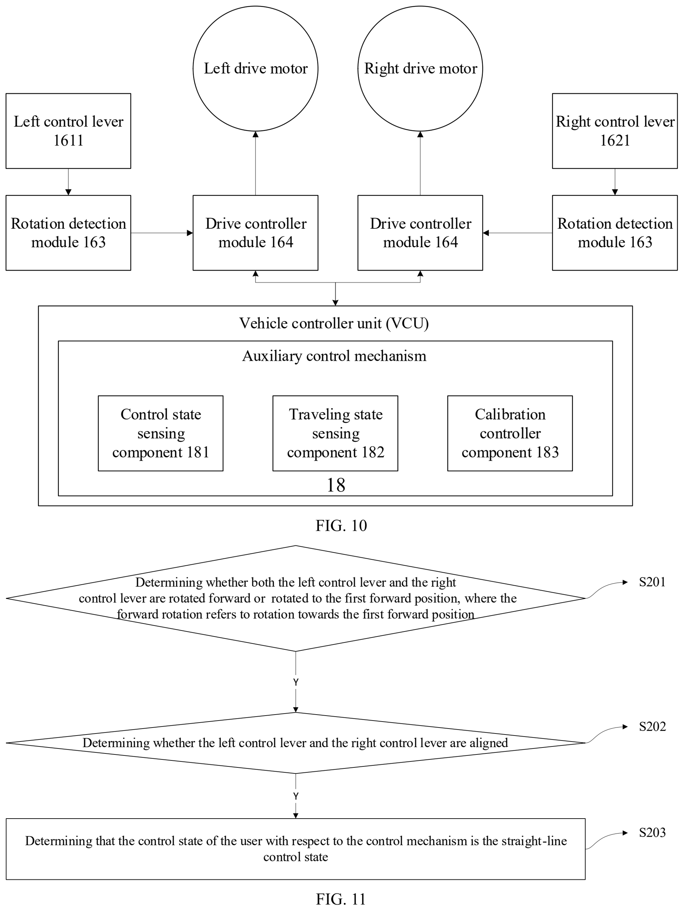

As shown in FIG. 10, the multi-purpose vehicle further includes an auxiliary control mechanism 18. The auxiliary control mechanism 18 may be integrated into a vehicle control unit (VCU) of the multi-purpose vehicle. Alternatively, an independent controller module may be provided in the multi-purpose vehicle as the auxiliary control mechanism 18. The VCU is configured to adjust an overall operating state of the multi-purpose vehicle, including controlling the operating states of the functional mechanism 12 and the drive mechanism 14, and cooperating with the control mechanism 16 to achieve more refined control.

It can be understood by those skilled in the art that the drive controller modules 164 in the left control assembly 161 and the right control assembly 162 may also be integrated with the VCU, which can reduce an entire vehicle communication line and lower production costs while more facilitating communication with the VCU.

The auxiliary control mechanism 18 is configured to monitor the traveling state of the multi-purpose vehicle, to determine whether the multi-purpose vehicle is traveling abnormally, and to perform a calibration operation in response to the multi-purpose vehicle traveling abnormally, to timely eliminate a vehicle traveling abnormality.

In some embodiments, the auxiliary control mechanism 18 includes a control state sensing component 181, a traveling state sensing component 182, and a calibration controller component 183.

The control state sensing component 181 is configured to determine a control state of a user with respect to the control mechanism 16. The control state may include a straight-line control state and a non-straight-line control state. The straight-line control state is used to characterize a control intention of the user with respect to straight-line traveling of the multi-purpose vehicle. The non-straight-line control state may characterize a control intention of the user with respect to non-straight-line traveling of the multi-purpose vehicle, such as user's intentions of controlling the multi-purpose vehicle to turn left, turn right, and traveling backward.

In some embodiments, the control state sensing component 181 may use detection results of the rotation detection modules 163 in the left control assembly 161 and the right control assembly 162 to determine a control state of the user with respect to the control mechanism 16. For example, when it is determined based on the detection results of the rotation detection modules 163 in the left control assembly 161 and the right control assembly 162 that each of the left control lever 1611 and the right control lever 1621 rotates forward and the angular displacements of both the left control lever 1611 and the right control lever 1621 are the same or substantially the same, the control state sensing component 181 may determine that the control state of the user with respect to the control mechanism 16 is the straight-line control state.

The traveling state sensing component 182 is configured to determine the traveling state of the multi-purpose vehicle. The traveling state may include a straight-line traveling state and a non-straight-line traveling state. In some embodiments, the traveling state sensing component 182 may use a vehicle body attitude sensor disposed in the multi-purpose vehicle to determine the traveling state. For example, when it is determined that the multi-purpose vehicle deflects during traveling using the vehicle body attitude sensor, it can be determined that the multi-purpose vehicle is in the non-straight-line traveling state.

The calibration controller component 183 is configured to compare the control state with the traveling state to determine whether the control state match with the traveling state. In response to a mismatch between the traveling state and the control state, the calibration controller component 183 may determine that the multi-purpose vehicle is traveling abnormally.

When it is determined that the multi-purpose vehicle is traveling abnormally, the calibration controller component 183 may further adjust the operating state of the drive mechanism 14 to match an actual traveling state of the multi-purpose vehicle with the control state of the user with respect to the control mechanism 16. Specifically, the calibration controller component 183 may adjust output power of the drive motor 143 in the left driving assembly 141 and output power of the drive motor 143 in the right driving assembly 142, thereby adjusting the rotation speeds of the left and right drive wheels 144. By changing a differential speed between the left drive wheel and the right drive wheel, the traveling state is adjusted to match the control state, thereby eliminating the traveling abnormality of the multi-purpose vehicle.

In some embodiments, the auxiliary control mechanism 18 may further receive an active calibration instruction from the user and perform a calibration operation in response to the active calibration instruction.

The user may operate a human-machine interaction control panel in the multi-purpose vehicle to input the active calibration instruction. After receiving the active calibration instruction, the auxiliary control mechanism 18 controls the control state sensing component 181 and the traveling state sensing component 182 to sense and determine the control state and the traveling state, respectively. Then, the calibration controller component 183 is used to compare the control state with the traveling state. In response to the mismatch between the control state and the traveling state, the calibration controller component 183 is further used to perform the calibration operation to control the operating state of the drive mechanism 14 and adjust the actual traveling state of the multi-purpose vehicle, to match the actual traveling state with the control state, thereby eliminating the vehicle traveling abnormality.

In the multi-purpose vehicle, the control state sensing component and the traveling state sensing component are used to perform real-time monitoring and sensing on the control state of the user with respect to the control mechanism and the actual traveling state of the multi-purpose vehicle. The calibration controller component is used to compare the control state sensed by the control state sensing component and the traveling state sensed by the traveling state sensing component in real time, which can timely detect and determine an abnormal traveling state that may occur in the multi-purpose vehicle. Further, when a traveling abnormality occurs in the multi-purpose vehicle, the calibration controller component is used to adjust the operating state of the drive mechanism in the multi-purpose vehicle, which can timely adjust the traveling state to match the control state, realizing straight-line traveling calibration and eliminating the traveling abnormality of the vehicle. This approach can ensure that the multi-purpose vehicle can always accurately and correctly respond to the control intention of the user, significantly optimizing the user experience.

As shown in FIG. 11, in the multi-purpose vehicle provided by one or more embodiments of the present disclosure, when determining the control state, the control state sensing component is configured to perform steps S201 and S202.

At step S201, it is determined whether both the left control lever and the right control lever are rotated forward or whether both the left control lever and the right control lever are rotated to the first forward position. The forward rotation refers to rotation towards the first forward position.

The pivoting direction and angular displacement corresponding to the left control lever 1611 and the pivoting direction and angular displacement corresponding to the right control lever 1621 may be determined based on the angular displacement information detected and determined by the rotation detection modules 163 in the left control assembly 161 and the right control assembly 162. Based on this, it can be determined whether both the left control lever 1611 and the right control lever 1621 are rotated forward or whether both the left control lever 1611 and the right control lever 1621 are rotated to the first forward position 202.

When both the left control lever 1611 and the right control lever 1621 are rotated forward or both the left control lever 1611 and the right control lever 1621 are rotated to the first forward position 202 under the control of the user, it indicates that the user intends to control both the left and right drive wheels 144 to rotate forward. When the left control lever 1611 and the right control lever 1621 are rotated to the first forward position 202, it indicates that the user intends to control both the left and right drive wheels 144 to travel forward at their maximum speeds. Both the two cases characterize a driving intention of the user to control the multi-purpose vehicle to travel forward.

In some embodiments, the angular displacement information corresponding to each of the left control lever 1611 and the right control lever 1621 may be compared with a lower angular limit threshold, to determine whether each of the left control lever and the right control lever is rotated forward.

In response to the angular displacement information corresponding to each of the left control lever 1611 and the right control lever 1621 meets the following conditions: $\begin{cases} \theta_L > \theta_{lx} \\ \theta_R > \theta_{lx} \end{cases}$, i.e., in response to an angular displacement of each of the left control lever 1611 and the right control lever 1621 being greater than the lower angular limit threshold, it can be determined that both the left control lever 1611 and the right control lever 1621 are rotated forward, where $\theta_L$ denotes the angular displacement of the left control lever 1611, $\theta_R$ denotes the angular displacement of the right control lever 1621, and $\theta_{lx}$ denotes the lower angular limit threshold. The lower angular limit threshold $\theta_{lx}$ may be flexibly adjusted based on actual conditions. For example, a specific value range of the lower angular limit threshold $\theta_{lx}$ may be (0°, 3°].

It can be understood by those skilled in the art that during manual control of the control lever, it is difficult for the user to precisely align the left control lever and the right control lever, resulting in an operation error. In addition, an assembly error may occur in the multi-purpose vehicle, and a sensing error may occur in the rotation detection module 163. Considering an impact caused by various potential errors, the lower angular limit threshold is set to avoid erroneous result determination that may be caused by errors or slight shaking of the control lever.

In some embodiments, the angular displacement information corresponding to each of the left control lever 1611 and the right control lever 1621 may be compared with an upper angular limit threshold, to determine whether both the left control lever 1611 and the right control lever 1621 are rotated to the first forward position 202.

In response to the angular displacement information corresponding to each of the left control lever 1611 and the right control lever 1621 meets the following conditions: $\begin{cases} \theta_L > \theta_{hx} \\ \theta_R > \theta_{hx} \end{cases}$, i.e., in response to the angular displacement of each of the left control lever 1611 and the right control lever 1621 being greater than the upper angular limit threshold, it can be determined that both the left control lever 1611 and the right control lever 1621 are rotated to the first forward position 202, where $\theta_L$ denotes the angular displacement of the left control lever 1611, $\theta_R$ denotes the angular displacement of the right control lever 1621, and $\theta_{hx}$ denotes the upper angular limit threshold. The upper angular limit threshold $\theta_{hx}$ may be flexibly adjusted based on the actual conditions. As an example, the angular displacement corresponding to the first forward position 202 is 20°, a value range of the upper angular limit threshold $\theta_{hx}$ may be, for example, [18°, 20°).

It can be understood by those skilled in the art that during the manual control of the control lever, it is difficult for the user to precisely align the left control lever and the right control lever, resulting in the operation error. In addition, an assembly error may occur in the multi-purpose vehicle, and the sensing error may occur in the rotation detection module 163. Considering the impact caused by various potential errors, the upper angular limit threshold is set to avoid the erroneous result determination that may be caused by the errors or slight shaking of the control lever.

At step S202, in response to both the left control lever and the right control lever being rotated forward or both the left control lever and the right control lever being rotated to the first forward position, it is determined whether the left control lever and the right control lever are aligned.

After a driving intention of the user to control the multi-purpose vehicle to travel forward is determined, it can be further determined whether the left control lever 1611 and the right control lever 1621 are aligned in terms of spatial positional relationship.

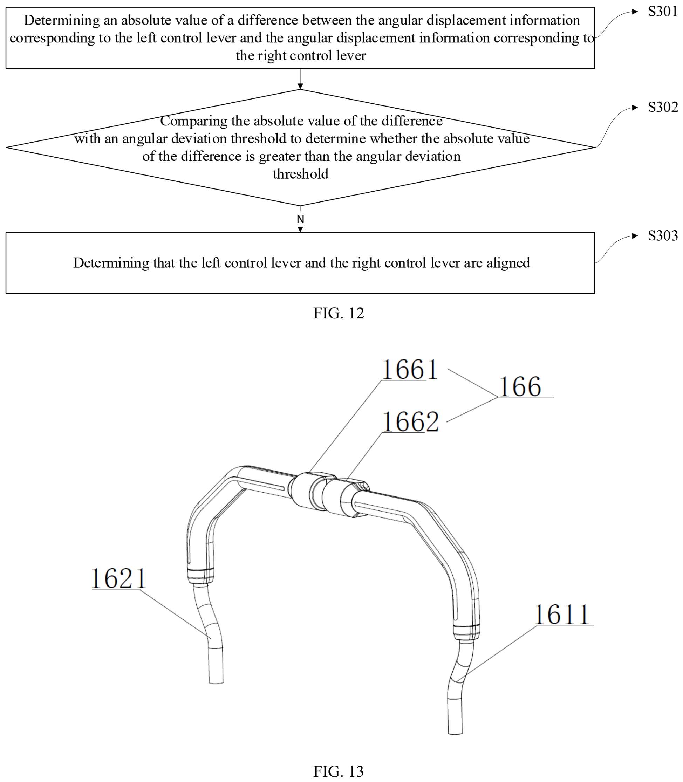

In some implementations, it can be determined whether the left control lever 1611 and the right control lever 1621 are aligned by determining whether the angular displacements of the left control lever 1611 and the right control lever 1621 are the same or substantially the same. As shown in FIG. 12, in the multi-purpose vehicle provided by one or more embodiments of the present disclosure, determining whether the left control lever 1611 and the right control lever 1621 are aligned includes steps S301 to S303.

At step S301, an absolute value $|\Delta\theta|$ of a difference between the angular displacement information corresponding to the left control lever and the angular displacement information corresponding to the right control lever is determined.

At step S302, the absolute value of the difference is compared with an angular deviation threshold to determine whether the absolute value of the difference is greater than the angular deviation threshold.

At step S303, in response to the absolute value of the difference being not greater than the angular deviation threshold, it is determined that the left control lever and the right control lever are aligned.

That is, it can be determined that the left control lever and the right control lever are aligned in response to meeting the following condition:

$$|\Delta\theta| = |\theta_L - \theta_R| \leq (\Delta\theta)_{max}$$

where $\theta_L$ denotes the angular displacement of the left control lever 1611, $\theta_R$ denotes the angular displacement of the right control lever 1621, $|\Delta\theta|$ denotes the absolute value of the difference between the left control lever 1611 and the right control lever 1621, and $(\Delta\theta)_{max}$ denotes the angular deviation threshold, which refers to an upper limit threshold of a deviation between the angular displacement of the left control lever 1611 and the angular displacement of the right control lever 1621. The angular deviation threshold $(\Delta\theta)_{max}$ may be flexibly adjusted based on the actual conditions. For example, the angular deviation threshold $(\Delta\theta)_{max}$ may range from 1° to 5°.

It can be understood by those skilled in the art that during the manual control of the control lever, it is difficult for the user to precisely align the left control lever and the right control lever, resulting in the operation error. In addition, the assembly error that may occur in the multi-purpose vehicle, and the sensing error that may occur in the rotation detection module 163. Considering the impact caused by various potential errors, the angular deviation threshold is set to avoid the erroneous result determination that may be caused by the errors or slight shaking of the control lever. When the deviation between the angular displacement of the left control lever 1611 and the angular displacement of the right control lever 1621 is within a range limited by this threshold, the deviation may be considered as caused by various errors. When the deviation exceeds the range limited by this threshold, it is not merely due to errors, and it can be determined that the left control lever 1611 and the right control lever 1621 are inherently misaligned, indicating that the user does not intend to travel straight.

As shown in FIG. 13, in the multi-purpose vehicle provided by one or more embodiments of the present disclosure, the control mechanism 16 further includes an alignment detection device 166 configured to detect whether both the left control lever 1611 and the right control lever 1621 are aligned. The control state sensing component 181 may determine the control state of the user with respect to the control mechanism 16 based on a detection result of the alignment detection device 166.

In some embodiments, the alignment detection device 166 includes a signal transmitter 1661 and a signal receiver 1662. The signal transmitter 1661 is configured to controllably transmit an alignment detection signal for reception by the signal receiver 1662.

The signal transmitter 1661 and the signal receiver 1662 are respectively arranged at ends of the left control lever 1611 and the right control lever 1621 that are away from the first axis 201, i.e., the signal transmitter 1661 and the signal receiver 1662 are respectively mounted at handles of the left control lever 1611 and the right control lever 1621. When the left control lever 1611 and the right control lever 1621 are aligned, the signal transmitter 1661 and the signal receiver 1662 are opposed to each other. FIG. 13 shows a case where the signal transmitter 1661 is arranged at the end of the right control lever 1621 that is away from the first axis 201, and the signal receiver 1662 is arranged at the end of the left control lever 1611 that is away from the first axis 201. In practice, positions of the signal transmitter 1661 and the signal receiver 1662 may be swapped, i.e., the signal transmitter 1661 is arranged at the end of the left control lever 1611 that is away from the first axis 201, and the signal receiver 1662 is arranged at the end of the right control lever 1621 that is away from the first axis 201.

When the signal transmitter 1661 and the signal receiver 1662 are opposed to each other, or there is only a slight deviation between the signal transmitter 1661 and the signal receiver 1662, the signal receiver 1662 may smoothly and unobstructedly receive the alignment detection signal transmitted by the signal transmitter 1661.

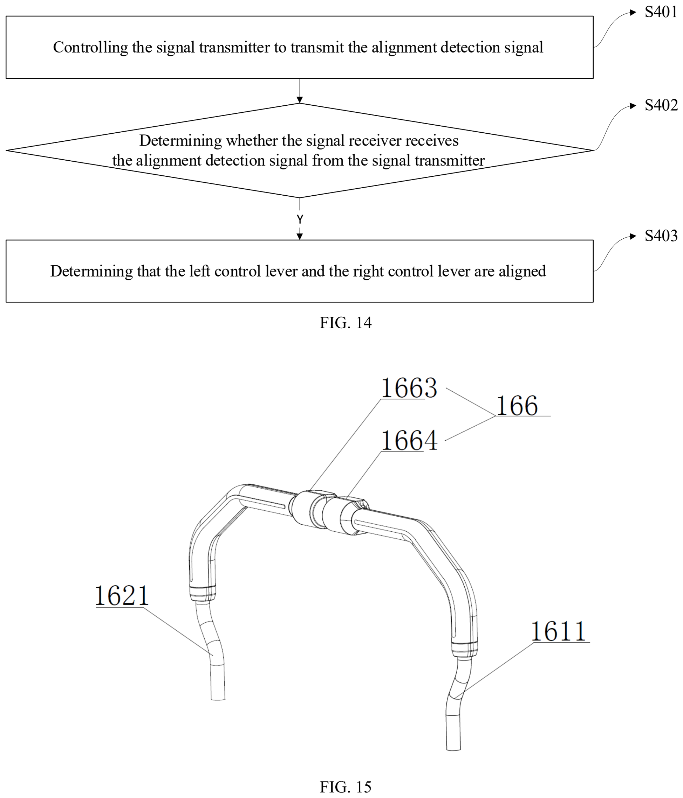

As shown in FIG. 14, in some embodiments, determining whether the left control lever and the right control lever are aligned includes steps S401 to S403.

At step S401, the signal transmitter is controlled to transmit the alignment detection signal.

The control state sensing component 181 may control the signal transmitter 1661 to continuously transmit the alignment detection signal. Alternatively, the control state sensing component 181 may control the signal transmitter 1661 to transmit the alignment detection signal in response to receiving the active calibration instruction input by the user.

At step S402, it is determined whether the signal receiver receives the alignment detection signal from the signal transmitter.

The signal receiver 1662 is configured to receive the alignment detection signal. After it is determined that the signal transmitter 1661 starts transmitting the alignment detection signal, it is determined whether the signal receiver 1662 receives the alignment detection signal.

At step S403, in response to the signal receiver receiving the alignment detection signal, it is determined that the left control lever and the right control lever are aligned.

The signal receiver 1662 can receive the alignment detection signal, indicating that the left control lever 1611 and the right control lever 1621 are aligned or there is only a slight deviation between the left control lever 1611 and the right control lever 1621. In practice, a case where only a slight deviation occurs between the left control lever and the right control lever may also be considered as the alignment between the left control lever 1611 and the right control lever 1621.

In some embodiments, the signal transmitter 1661 may be an infrared signal transmitter, and the signal receiver 1662 may be an infrared signal receiver. Alternatively, the signal transmitter 1661 may be a laser signal transmitter, and the signal receiver 1662 may be a laser signal receiver. Alternatively, the signal transmitter 1661 may be an ultrasonic signal transmitter, and the signal receiver 1662 may be an ultrasonic signal receiver.

As shown in FIG. 15, in some embodiments, the alignment detection device 166 includes a Hall sensing element 1663 and a magnetic element 1664. The Hall sensing element 1663 is configured to sense a magnetic field strength generated by the magnetic element 1664.

The Hall sensing element 1663 and the magnetic element 1664 are respectively arranged at ends of the left control lever 1611 and the right control lever 1621 that are away from the first axis 201, i.e., the Hall sensing element 1663 and the magnetic element 1664 are respectively mounted at the handles of the left control lever 1611 and the right control lever 1621. When the left control lever 1611 and the right control lever 1621 are aligned, the Hall sensing element 1663 and the magnetic element 1664 are opposed to each other. FIG. 15 shows a case where the Hall sensing element 1663 is arranged at the end of the right control lever 1621 that is away from the first axis 201, and the magnetic element 1664 is arranged at the end of the left control lever 1611 that is away from the first axis 201. In practice, positions of the Hall sensing element 1663 and the magnetic element 1664 may be swapped, i.e., the Hall sensing element 1663 is arranged at the end of the left control lever 1611 that is away from the first axis 201, and the magnetic element 1664 is arranged at the end of the right control lever 1621 that is away from the first axis 201.

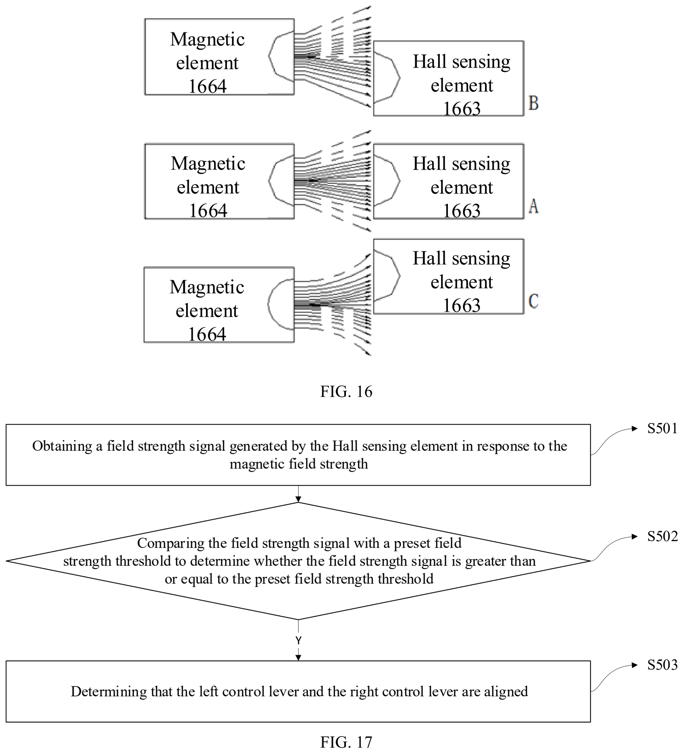

FIG. 16 is a schematic diagram of different spatial positional relationships between the Hall sensing element 1663 and the magnetic element 1664. When the Hall sensing element 1663 and the magnetic element 1664 are in a spatial positional relationship A, i.e., the Hall sensing element 1663 and the magnetic element 1664 are opposed to each other, or there is only a slight deviation between the Hall sensing element 1663 and the magnetic element 1664, a magnetic field strength detected by the Hall sensing element 1663 is maximum. When the Hall sensing element 1663 and the magnetic element 1664 are in other spatial positional relationships, such as a spatial positional relationship B or a spatial positional relationship C, the magnetic field strength detected by the Hall sensing element 1663 decreases.

As shown in FIG. 17, in some embodiments, determining whether the left control lever and the right control lever are aligned includes steps S501 to S503.

At step S501, a field strength signal generated by the Hall sensing element in response to the magnetic field strength is obtained.

The control state sensing component 181 may communicate with the Hall sensing element 1663 to obtain the field strength signal. Alternatively, the control state sensing component 181 may obtain the field strength signal after receiving the active calibration instruction input by the user.

At step S502, the field strength signal is compared with a preset field strength threshold to determine whether the field strength signal is greater than or equal to the preset field strength threshold.

The field strength signal is greater than or equal to the preset field strength threshold, which may be expressed as:

$$B \geq B_x$$

where B denotes the field strength signal, and $B_x$ denotes the preset field strength threshold. The preset field strength threshold is:

$$B_x = \delta \cdot B_{max}$$

where $B_{max}$ denotes a maximum magnetic field strength, i.e., a magnetic field strength sensed by the Hall sensing element 1663 when being opposed to the magnetic element 1664, and $\delta$ is a threshold adjustment coefficient. It can be understood by those skilled in the art that the preset field strength threshold is flexibly adjusted by changing the threshold adjustment coefficient $\delta$ based on the maximum magnetic field strength $B_{max}$ and the

actual conditions. A value range of the threshold adjustment coefficient $\delta$ may be set to [0.9, 1). Exemplarily, the threshold adjustment coefficient $\delta$ may be set to 0.95, 0.975, or 0.9.

At step S503, in response to the field strength signal being greater than or equal to the preset field strength threshold, it is determined that the left control lever and the right control lever are aligned.

When the Hall sensing element 1663 and the magnetic element 1664 are opposed to each other, the field strength signal B sensed by the Hall sensing element 1663 is equal to $B_{max}$. It can be understood by those skilled in the art that in practice, the left control lever 1611 and the right control lever 1621 may also be considered aligned when there is only a slight deviation between the left control lever 1611 and the right control lever 1621. In this case, the field strength signal B meets: $B_x \leq B < B_{max}$. Therefore, when the field strength signal B is greater than or equal to the preset field strength threshold $B_x$, it can be determined that the left control lever 1611 and the right control lever 1621 are aligned.

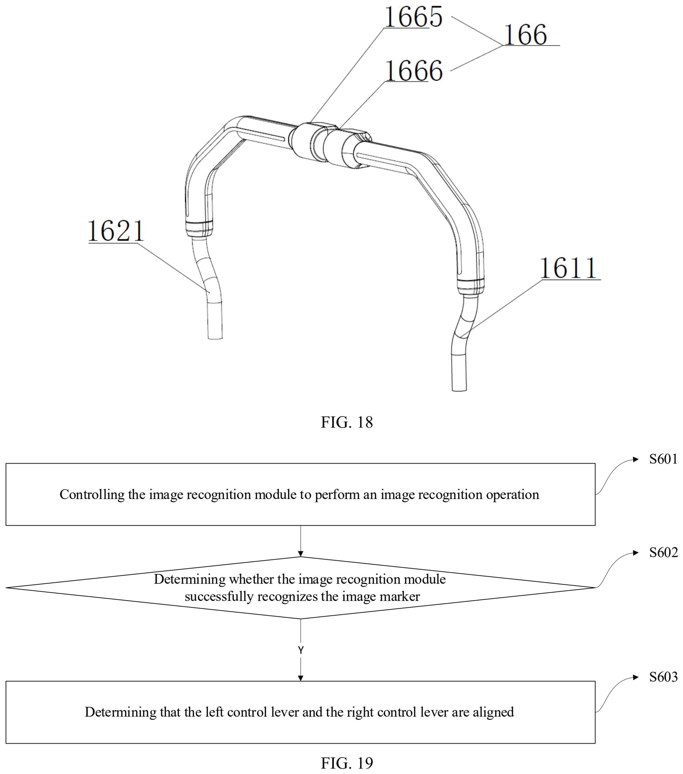

As shown in FIG. 18, in some embodiments, the alignment detection device 166 includes an image recognition module 1665 and an image marker 1666.

The image recognition module 1665 and the image marker 1666 are respectively arranged at ends of the left control lever 1611 and the right control lever 1621 that are away from the first axis 201, i.e., the image recognition module 1665 and the image marker 1666 are respectively mounted at the handles of the left control lever 1611 and the right control lever 1621. When the left control lever 1611 and the right control lever 1621 are aligned, the image recognition module 1665 and the image marker 1666 are opposed to each other. The image marker 1666 is located at a center of a visual range recognizable by the image recognition module. The image recognition module 1665 may recognize a complete image marker 1666. FIG. 18 shows a case where the image recognition module 1665 is arranged at the end of the right control lever 1621 that is away from the first axis 201, and the image marker 1666 is arranged at the end of the left control lever 1611 that is away from the first axis 201. In practice, positions of the image recognition module 1665 and the image marker 1666 may be swapped, i.e., the image recognition module 1665 is arranged at the end of the left control lever 1611 that is away from the first axis 201, and the image marker 1666 is arranged at the end of the right control lever 1621 that is away from the first axis 201.

As shown in FIG. 19, in some embodiments, determining whether the left control lever and the right control lever are aligned includes steps S601 to S603.

At step S601, the image recognition module is controlled to perform an image recognition operation.

At step S602, it is determined whether the image recognition module successfully recognizes the image marker.

The control state sensing component 181 may control the image recognition module 1665 to continuously perform the image recognition operation. Alternatively, the control state sensing component 181 may control the image recognition module 1665 to perform the image recognition operation after receiving the active calibration instruction input by the user.

After the image recognition module 1665 performs the image recognition operation, it is determined whether the image marker 1666 is included in a corresponding image recognition result. In response to the image marker 1666 being included in the image recognition result, it can be determined that the image recognition module 1665 successfully recognizes the image marker 1666.

In some embodiments, in response to the image marker 1666 appearing completely in the image recognition result and being located at a center of the image recognition result, it is determined that the image recognition module 1665 may recognize the image marker 1666.

At step S603, in response to the image recognition module successfully recognizing the image marker, it is determined that the left control lever and the right control lever are aligned.

When the image recognition module 1665 may recognize the image marker 1666, it indicates that the image recognition module 1665 and the image marker 1666 are opposed to each other. In such a manner, it can be determined that the left control lever 1611 and the right control lever 1621 are aligned.

At step S203, in response to the left control lever and the right control lever being aligned, it is determined that the control state of the user with respect to the control mechanism is the straight-line control state.

When both the left control lever 1611 and the right control lever 1621 are rotated forward or rotated to the first forward position 202, and the left control lever 1611 and the right control lever 1621 are in a spatially aligned position relationship, it indicates that the user intends to control the left and right drive wheels 144 to travel forward at the same rotation speed. Combined with the principle of differential speed control for the left drive wheel and the right drive wheel, it can be understood that the driving intention of the user is to control the multipurpose vehicle to maintain straight-line traveling. Therefore, it can be determined that the control state of the user with respect to the control mechanism 16 is the straight-line control state.

In the multi-purpose vehicle, the alignment detection device arranged at upper ends of the left control lever and the right control lever is used to determine whether the left control lever and the right control lever are aligned. Combined with the corresponding rotation detection module, the state of the control mechanism under the control of the user may be accurately determined, and it can thus be ensured that the control state sensing component can efficiently and accurately determine the control state.

Given the assembly error that may occur in the multi-purpose vehicle and the sensing error that may occur in the rotation detection module 163, directly determining whether the left control lever and the right control lever are aligned using the alignment detection device 166 in the multi-purpose vehicle provides a more accurate and reliable detection result compared with indirectly determining whether the left control lever and the right control lever are aligned based on the angular displacement information.

Similarly, due to the impact of errors, the direct determination result of the alignment detection device 166 may differ from the determination result based on the angular displacement information. That is, the result determined by comparing the angular displacement of the left control lever 1611 and the angular displacement of the right control lever 1621 indicates that the left control lever 1611 and the right control lever 1621 are not aligned, while the result determined by using the alignment detection device 166 indicates that the left control lever 1611 and the right control lever 1621 are aligned. In this case, the result determined by the alignment detection device 166 shall prevail. Moreover, in this case, it can be determined that an error occurs in the detection results of the rotation detection modules 163 in the left control assembly 161 and the right control assembly 162, and this error may significantly affect driving control.

Therefore, in this case, angular displacement information outputted by the rotation detection modules 163 in the left control assembly 161 and the right control assembly 162 can be further adjusted and calibrated to eliminate the impact of an error between them.

In some implementations, a stepwise assignment method may be adopted to redetermine output data of the rotation detection modules 163 of the left control assembly 161 and the right control assembly 162, to determine an average value of the angular displacements outputted by the rotation detection modules 163 of the left control assembly 161 and the right control assembly 162. Moreover, the output data of the rotation detection modules 163 of the left control assembly 161 and the right control assembly 162 is directly adjusted and calibrated to this average value. Alternatively, a transitional assignment method may be used to redetermine the output data, and a ramp function is employed to transitionally calibrate the output data of the rotation detection modules 163 of the left control assembly 161 and the right control assembly 162 to the average value. Alternatively, the output data of one of the rotation detection modules 163 of the left control assembly 161 and the right control assembly 162 may be selected as a reference value, and the output data of the other one of the rotation detection modules 163 of the left control assembly 161 and the right control assembly 162 may be adjusted and calibrated to this reference value. Through such adjustment and calibration, it can be ensured that when the left control lever and the right control lever are aligned, the angular displacement information outputted by the rotation detection modules 163 remains the same. Stability and accuracy of user control during traveling can be further ensure using this approach.

The multi-purpose vehicle provided by one or more embodiments of the present disclosure further includes an inertial measurement module (IMU). The IMU is fixedly arranged with respect to the frame 1 and is configured to monitor a motion state of the multi-purpose vehicle.

The IMU internally includes a 3-axis gyroscope and a 3-axis acceleration sensor. The term "3-axis" refers to X, Y, and Z axes in a spatial coordinate system. The IMU may be used to measure acceleration of the multi-purpose vehicle and calculate a speed based on the acceleration. In addition, the IMU may also be used to determine attitude angles of the multi-purpose vehicle in different directions, including the heading angle, pitch angle, and roll angle. In some embodiments, for measurement data of the gyroscope and acceleration sensor in the IMU, data filtering may be performed using algorithms such as an adaptive complementary filtering algorithm or an extended Kalman filtering algorithm, and real-time attitude updating may be performed using an algorithm such as an Euler angle algorithm, a direction cosine algorithm, a quaternion algorithm, or an equivalent rotation vector algorithm.

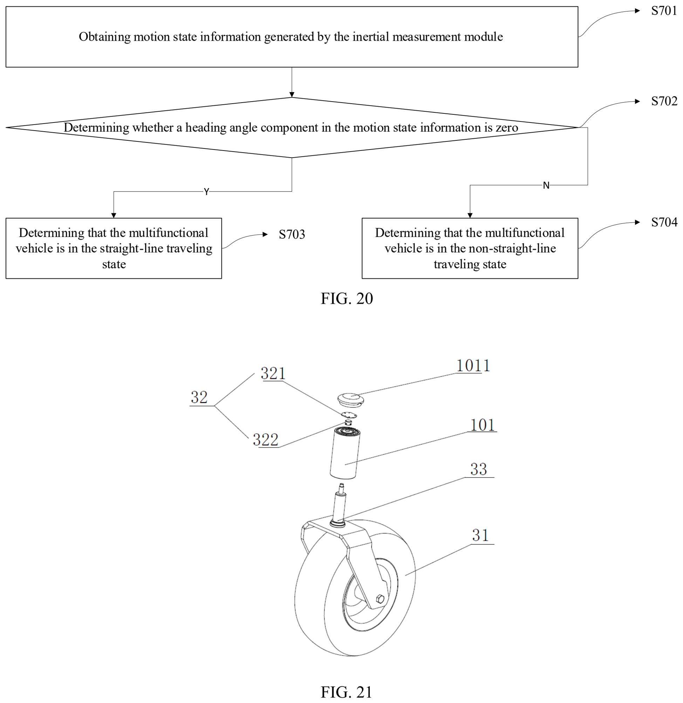

As shown in FIG. 20, in some embodiments, the traveling state sensing component 182 is configured to determine the traveling state by using steps S701 to S704.

At step S701, motion state information generated by the inertial measurement module is obtained.

The IMU is used to perform real-time monitoring on the operating state of the multi-purpose vehicle. The obtained motion state information may include heading angle information, pitch angle information, and roll angle information. A heading angle component refers to the heading angle information in the motion state information. The heading angle information is used to characterize a change in the heading angle of the multi-purpose vehicle during traveling, i.e., a change in the deflection of the multi-purpose vehicle during traveling.

A variation range of the heading angle or deflection angle of the multi-purpose vehicle may be expressed in the form of a set:

$$[-\pi/2, 0] \cup [0, \pi/2]$$

An angle range denoted by the subset $[-\pi/2, 0] \cup [0, \pi/2]$ corresponds to a case where the multi-purpose vehicle deflects leftward during traveling, i.e., a heading or deflection direction of the multi-purpose vehicle is counterclockwise deflection relative to a forward extending direction of the vehicle body. In contrast, the angle range denoted by the subset $[-\pi/2, 0] \cup [0, \pi/2]$ corresponds to a case where the multi-purpose vehicle deflects rightward during traveling, i.e., the heading or deflection direction of the multi-purpose vehicle is clockwise deflection relative to the forward extending direction of the vehicle body.

At step S702, it is determined whether a heading angle component in the motion state information is zero.

At step S703, in response to the heading angle component in the motion state information remaining zero, it is determined that the multi-purpose vehicle is in the straight-line traveling state.

At step S704, in response to the heading angle component in the motion state information being non-zero, it is determined that the multi-purpose vehicle is in the non-straight-line traveling state.

The heading angle of the multi-purpose vehicle remains zero during straight-line traveling. When the heading angle changes, it indicates that the multi-purpose vehicle deflects during traveling.

The traveling state sensing component 182 is further configured to determine, based on the heading angle component, a deflection angle of the multi-purpose vehicle in response to the multi-purpose vehicle being in the non-straight-line traveling state.

As shown in FIG. 2, the multi-purpose vehicle provided by one or more embodiments of the present disclosure further includes a caster wheel assembly 3 arranged at a front end of the frame 1 and rotatably connected to the frame 1.

As shown in FIG. 21, the caster wheel assembly 3 includes a caster wheel 31 and a deflection detection module 32.

The caster wheel assembly 3 further includes a pivot shaft 33. Correspondingly, the front end of the frame 1 is formed as a shaft sleeve 101 for accommodating the pivot shaft 33 and allowing the pivot shaft 33 to rotate therein. The caster wheel 31 is rotatably connected to the frame 1 through the pivot shaft 33.

The deflection detection module 32 includes a detection element 321 and an induction element 322. The induction element 322 is fixedly arranged at an upper end of the pivot shaft 33. The detection element 321 is arranged at an upper end cover 1011 of the shaft sleeve 101 and positioned opposite to the induction element 322.

When the caster wheel 31 rotates relative to the frame 1, the induction element 322 fixedly arranged at the upper end of the pivot shaft 33 rotates, and a relative motion occurs between the induction element 322 and the detection element 321. The detection element 321 is configured to generate, based on the relative motion of the induction element 322 relative to the detection element 321, the deflection state information. The deflection state information is used to characterize the deflection angle of the caster wheel 31 relative to the frame 1, i.e., an angle between a plane where the caster wheel 31 is located and the extending direction of the multi-purpose vehicle body.

As shown in FIG. 22, in the multi-purpose vehicle provided by one or more embodiments of the present disclosure, the traveling state sensing component 182 is configured to determine the traveling state by using steps S801 to S804.

At step S801, the deflection state information generated by the deflection detection module is obtained.

The traveling state sensing component 182 may control the deflection detection module 32 to perform real-time monitoring on the caster wheel 31 to continuously obtain the deflection state information. Alternatively, the traveling state sensing component 182 may control the obtaining of the deflection state information after receiving the active calibration instruction input by the user.

At step S802, it is determined whether a deflection angle of the caster wheel relative to the frame is zero based on the deflection state information.

At step S803, in response to the deflection angle of the caster wheel relative to the frame remaining zero, it is determined that the multi-purpose vehicle is in the straight-line traveling state.

At step S804, in response to the deflection angle of the caster wheel relative to the frame being non-zero, it is determined that the multi-purpose vehicle is in the non-straight-line traveling state.

When the deflection angle remains zero, it indicates that the caster wheel 31 is parallel to an extending direction of the frame 1. It can be determined that the traveling direction of the multi-purpose vehicle is consistently oriented toward the extending direction of the vehicle body/frame, i.e., the vehicle is in the straight-line traveling state.

When the deflection angle is non-zero, the multi-purpose vehicle travels forward along a traveling path of the caster wheel 31, and it can be determined that the multi-purpose vehicle is in the non-straight-line traveling state. When the multi-purpose vehicle is in the non-straight-line traveling state, the traveling state sensing component 182 determines the deflection angle of the caster wheel 31 relative to the frame 1 as the deflection angle of the multi-purpose vehicle.

The detection element 321 in the deflection detection module 32 may be a rotation angle potentiometer, a magnetic angle encoder, an optoelectronic angle encoder, a Hall effect angle sensor, a rotary transformer, or other sensor elements capable of achieving deflection angle detection. The induction element 322 is an element corresponding to the detection element 321. For example, when the detection element 321 is the Hall effect angle sensor, the induction element 322 may be a magnetic element.

Various types of angle sensors may be used as the detection element 321 in the deflection detection module 32. Correspondingly, the deflection detection module 32 may adopt an appropriate signal form to characterize the deflection state information.

In some embodiments, the deflection detection module 32 may be configured to use a voltage analog signal to characterize the deflection state information. FIG. 23-a and FIG. 23-b are schematic diagrams of a mapping relationship between the voltage analog signal and the deflection state information.

A relationship between a value of the voltage analog signal and the corresponding deflection angle may be expressed as:

$$\mathrm{U} = k_v \cdot \rho + U_B$$

where U denotes the voltage analog signal, $\rho$ denotes the deflection angle of the caster wheel relative to the frame, $k_v$ denotes an adjustment coefficient corresponding to the voltage analog signal, which may be a positive or negative value, and $U_B$ denotes an initial value of the voltage analog signal, i.e., a value of the voltage analog signal when the deflection angle is zero.

As shown in FIG. 23-a and FIG. 23-b, $\rho \in [\rho_{min}, \rho_{max}]$, and $U \in [U_{min}, U_{max}]$. Specifically, value ranges may be, for example, $p \in [0,360°]$, and $U \in [0,5V]$.

In some embodiments, the deflection detection module 32 may be configured to use a current analog signal to characterize the deflection state information. FIG. 24-a and FIG. 24-b are schematic diagrams of a mapping relationship between the current analog signal and the deflection state information.

A relationship between a value of the current analog signal and the corresponding deflection angle may be expressed as:

$$\mathrm{I} = k_i \cdot \rho + I_B$$

where I denotes the current analog signal, $\rho$ denotes the deflection angle of the caster wheel relative to the frame, $k_i$ denotes an adjustment coefficient corresponding to the current analog signal, which may be a positive or negative value, and $I_B$ denotes an initial value of the current analog signal, i.e., a value of the current analog signal when the deflection angle is zero.

As shown in FIG. 24-a and FIG. 24-b, $\rho \in [p_{min}, \rho_{max}]$, and $I \in [I_{min}, I_{max}]$. Specifically, value ranges may be, for example, $p \in [0,360°]$, and $I \in [4mA, 20mA]$.

In some embodiments, the detection element 321 in the deflection detection module 32 is a rotational potentiometer. Correspondingly, the detection element 321 may be configured to use a resistance analog signal to characterize the deflection state information. FIG. 25-a and FIG. 25-b are schematic diagrams of a mapping relationship between the resistance analog signal and the deflection state information.

A relationship between a value of the resistance analog signal and the corresponding deflection angle may be expressed as:

$$\mathrm{R} = k_r \cdot \rho + R_B$$

where I denotes the resistance analog signal, $\rho$ denotes

the deflection angle of the caster wheel relative to the frame, $k_r$ denotes an adjustment coefficient corresponding to the resistance analog signal, which may be a positive or negative value, and $R_B$ denotes an initial value of the resistance analog signal, i.e., a value of the resistance analog signal when the deflection angle is zero.

In some embodiments, the deflection detection module 32 may be configured to use a Pulse-Width Modulation (PWM) signal to characterize the deflection state information. A PWM signal duty cycle, a PWM signal frequency, a PWM signal pulse, or the like may be used to represent the deflection state information.

FIG. 26-a and FIG. 26-b are schematic diagrams of a mapping relationship between the PWM signal duty cycle D and the deflection state information. Similar to the voltage analog signal, the PWM signal duty cycle D has a proportional relationship with the deflection angle.

A relationship between the PWM signal duty cycle D and the corresponding deflection angle may be expressed as:

$$\mathrm{D} = k_d \cdot \rho + D_B$$

where D denotes the PWM signal duty cycle, $\rho$ denotes the deflection angle of the caster wheel relative to the frame, $k_d$ denotes an adjustment coefficient corresponding to the PWM signal duty cycle, which may be a positive or negative value, and $D_B$ denotes an initial value of the PWM signal duty cycle, i.e., a duty cycle when the deflection angle is zero.

FIG. 27-a and FIG. 27-b are schematic diagrams of a mapping relationship between the PWM signal frequency F and the deflection state information. Similar to the voltage analog signal, the PWM signal frequency F has a proportional relationship with the deflection angle.

A relationship between the PWM signal frequency F and the corresponding deflection angle may be expressed as:

$$\mathrm{F} = k_f \cdot \rho + F_B$$

where F denotes the PWM signal frequency, $\rho$ denotes the deflection angle of the caster wheel relative to the frame, $k_f$ denotes an adjustment coefficient corresponding to the PWM signal frequency, which may be a positive or negative value, and $F_B$ denotes an initial value of the PWM signal frequency, i.e., a frequency when the deflection angle is zero.

Alternatively, a PWM signal pulse digital signal may be used to represent the deflection state information. As shown in FIG. 28, in the PWM signal, different low-level durations and high-level durations are used to represent "0" and "1", respectively, forming a series of binary codes to indicate a specific value of the deflection angle.

In some embodiments, the deflection detection module 32 may be configured to use an ABZ three-phase encoded signal to characterize the deflection state information. FIG. 29 is a schematic diagram of an ABZ three-phase encoded signal pulses. In the ABZ three-phase encoded signal, a channel A signal generates one positive pulse per revolution in the rotation direction of the deflection angle. A channel B signal generates one positive pulse per revolution in the rotation direction of the deflection angle, with a 90° phase shift relative to the channel A signal. A channel Z signal generates a single pulse per revolution in the rotation direction to mark a zero point/zero position.

Similarly, in some embodiments, the deflection detection module 32 may be configured to use a UVW three-phase encoded signal to characterize the deflection state information. As shown in FIG. 30, in the UVW three-phase encoded signal, the U/V/W channel signals are pulse signals with a 120° phase shift from each other. The deflection angle of the caster wheel relative to the frame may be accurately characterized in combination with the three channel pulse signals.

It can be understood by those skilled in the art that the deflection detection module 32 and the traveling state sensing component 182 may be communicatively connected using the analog signal, the PWM signal, the ABZ signal, or the UVW signal. In addition, the deflection detection module 32 may also communicate with the traveling state sensing component 182 in communication manners such as SPI communication, I2C communication, SSI communication, UART serial communication, RS-232 communication, RS-485 communication, CAN communication, LIN communication, infrared communication, or Bluetooth communication, to convert the determined deflection angle information corresponding to the caster wheel 31 into traveling communication data and transmit the data to the traveling state sensing component.

In the multi-purpose vehicle provided by one or more embodiments of the present disclosure, a plurality of the caster wheel assembly 3 are provided. At least one of the plurality of caster wheel assemblies 3 is provided with the deflection detection module 32 configured to detect the deflection state of the corresponding caster wheel 31 among the plurality of caster wheel assemblies 3 relative to the frame 1.

In the case where the plurality of caster wheel assemblies 3 is provided with a plurality of deflection detection modules 32, when deflection angles detected by the plurality of deflection detection modules 32 change sharply or differ significantly, it indicates that the body attitude of the multi-purpose vehicle is also changing sharply. In this case, it is not suitable to perform the calibration operation.

In the multi-purpose vehicle, the deflection detection module in the caster wheel assembly is used to determine the deflection state of the caster wheel relative to the frame, and the traveling state of the multi-purpose vehicle is determined accordingly. Compared with the overall attitude change of the multi-purpose vehicle, a deflection change of the caster wheel during the traveling of the multi-purpose vehicle is more sensitive. By detecting the deflection condition of the caster wheel to determine the traveling state of the multi-purpose vehicle, this manner can more sensitively and more accurately determine whether the multi-purpose vehicle is in the straight-line traveling state or the non-straight-line traveling state.

As shown in FIG. 31, in the multi-purpose vehicle provided by one or more embodiments of the present disclosure, the calibration controller component 183 is configured to adjust the operating state of the drive mechanism 14 in response to determining that the multi-purpose vehicle is traveling abnormally by using steps S901 and S902.

At step S901, a deflection angle of the multi-purpose vehicle is determined.

The deflection angle is determined using the IMU or the deflection detection module 32 in the caster wheel assembly 3.

At step S902, a compensation adjustment is performed on a motion control parameter for a drive motor in at least one of the left driving assembly or the right driving assembly based on the deflection angle.

Based on the principle of differential speed control for the left drive wheel and the right drive wheel, a feedback adjustment mechanism may be adopted to perform successive iterative compensation adjustments on the motion control parameters for the drive motors 143 in the left driving assembly 141 and the right driving assembly 142 based on the deflection angle. During each compensation adjustment, the motion control parameter is adjusted by a small degree to reduce the deflection angle. Through a plurality of compensation adjustments, the deflection angle is reduced to approach zero until it is finally reduced to zero, thereby restoring the multi-purpose vehicle to straight-line traveling.

The motion control parameter includes at least one of angular displacement information generated by the rotation detection module corresponding to the drive motor, the rotation speed of the drive motor or a torque of the drive motor.

In the multi-purpose vehicle provided by one or more embodiments of the present disclosure, when performing, based on the deflection angle, the compensation adjustment on the motion control parameter for the drive motor in at least one of the left driving assembly or the right driving assembly, the calibration controller component is configured to: determine a side pointed towards by the deflection angle as a lagging side; and perform a forward iterative compensation adjustment on the motion control parameter for the drive motor corresponding to the lagging side, to cause the deflection angle to be gradually reduced until the deflection angle is maintained at zero. The forward iterative compensation adjustment includes:

$$\Phi_k = \Phi_{k-1}\left(1 + c_s \times \frac{\theta_k}{\pi}\right)$$

where $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $c_s$ denotes a correction parameter, with a value range of $0 < c_s \leq 2$.

As an example, the multi-purpose vehicle deflects leftward. The deflection angle points to the left, indicating that a traveling speed of the drive wheel 144 in the left driving assembly 141 is lower than a traveling speed of the drive wheel 144 in the right driving assembly 142, and the left side is correspondingly determined as the lagging side. The forward compensation adjustment is performed on the motion control parameter associated with the drive wheel 144 in the left driving assembly 141. In some embodiments, the forward compensation adjustment may be performed on the angular displacement information generated by the rotation detection module 163 in the left control assembly 161 to increase the angular displacement information, thereby indirectly controlling the drive wheel 144 in the left driving assembly 141 to increase its rotation speed. In other embodiments, the forward compensation adjustment may be performed on the rotation speed or the torque of the drive motor 143 in the left driving assembly 141 to directly increase the rotation speed of the corresponding drive wheel.

By adjusting the motion control parameter, a difference between traveling speeds of the left and right drive wheels 144 can be reduced, thereby gradually reducing the traveling deflection angle of the multi-purpose vehicle until the multi-purpose vehicle resumes straight-line traveling.

In the multi-purpose vehicle provided by one or more embodiments of the present disclosure, when performing, based on the deflection angle, the compensation adjustment on the motion control parameter for the drive motor in at least one of the left driving assembly or the right driving assembly, the calibration controller component is configured to: determine a side deviated from by the deflection angle as a leading side; and perform a reverse iterative compensation adjustment on the motion control parameter for the drive motor corresponding to the leading side, to cause the deflection angle to be gradually reduced until the deflection angle is maintained at zero. The reverse iterative compensation adjustment includes:

$$\Phi_k = \Phi_{k-1}\left(1 - c_s \times \frac{\theta_k}{\pi}\right)$$

where $\Phi$ denotes the motion control parameter, $\Phi_{k-1}$ and

$\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $c_s$ denotes a correction parameter, with a value range of $0 < c_s \leq 2$.

As an example, the multi-purpose vehicle deflects leftward. The deflection angle points to the left, indicating that the traveling speed of the drive wheel 144 in the right driving assembly 142 is higher than the traveling speed of the drive wheel 144 in the left driving assembly 141, and the right side is correspondingly determined as the leading side. The reverse compensation adjustment is performed on the motion control parameter associated with the drive wheel 144 in the right driving assembly 142. In some embodiments, the reverse compensation adjustment may be performed on the angular displacement information generated by the rotation detection module 163 in the right control assembly 162 to reduce the angular displacement information, thereby indirectly controlling the drive wheel 144 in the right driving assembly 142 to reduce its rotation speed. In other embodiments, the reverse compensation adjustment may be performed on the rotation speed or the torque of the drive motor 143 in the right driving assembly 142 to directly reduce the rotation speed of the corresponding drive wheel.

By adjusting the motion control parameter, the difference between the traveling speeds of the left and right drive wheels 144 can be reduced, thereby gradually reducing the traveling deflection angle of the multi-purpose vehicle until the multi-purpose vehicle resumes straight-line traveling.

In the multi-purpose vehicle provided by one or more embodiments of the present disclosure, when performing, based on the deflection angle, the compensation adjustment on the motion control parameter for the drive motor in at least one of the left driving assembly or the right driving assembly, the calibration controller component is configured to: determine a side pointed towards by the deflection angle as a lagging side, and determining a side deviated from by the deflection angle as a leading side; and perform a bidirectional iterative compensation adjustment on the motion control parameter for the drive motor corresponding to the leading side and the motion control parameter for the drive motor corresponding to the lagging side, to cause the deflection angle to be gradually reduced until the deflection angle is maintained at zero. The bidirectional iterative compensation adjustment includes:

$$\begin{cases} \Phi_k^z = \Phi_{k-1}^z\left(1 + c_z \times \dfrac{\theta_k}{\pi}\right) \\[2mm] \Phi_k^c = \Phi_{k-1}^c\left(1 - c_c \times \dfrac{\theta_k}{\pi}\right) \end{cases}$$

where Φ denotes the motion control parameter, $\Phi_{k-1}^z$ and $\Phi_k^z$ respectively denote the motion control parameters for the drive motor corresponding to the lagging side after the (k-1)th and k-th iterative compensations, $\Phi_{k-1}^c$ and $\Phi_k^c$ respectively denote the motion control parameters for the drive motor corresponding to the leading side after the (k-1)th and k-th iterative compensations, $\theta$ denotes the deflection angle, $\theta_k$ denotes the deflection angle determined prior to the k-th iterative compensation, $c_z$ and $c_c$ respectively denote correction parameters corresponding to the lagging side and the leading side, with corresponding value ranges of $0 < c_z \le 2$ and $0 < c_c \le 2$.

As an example, the multi-purpose vehicle deflects leftward. The deflection angle points to the left, indicating that the traveling speed of the drive wheel 144 in the right driving assembly 142 is higher than the traveling speed of the drive wheel 144 in the left driving assembly 141. Correspondingly, the right side is determined as the leading side, and the left side is determined as the lagging side. The reverse compensation adjustment may be performed synchronously on the motion control parameters associated with the drive wheels 144 in the left driving assembly 141 and the right driving assembly 142. In some embodiments, the compensation adjustment may be performed on the angular displacement information generated by the rotation detection modules 163 in the left control assembly 161 and the right control assembly 162 to reduce the angular displacement information of the right control assembly 162 and increase the angular displacement information of the left control assembly 161, thereby indirectly controlling the drive wheel 144 in the left driving assembly 141 to increase its rotation speed and the drive wheel 144 in the right driving assembly 142 to reduce its rotation speed. In other embodiments, the compensation adjustment may be performed synchronously on the rotation speed or the torque of the drive motor 143 in the left driving assembly 141 and the rotation speed or the torque of the drive motor 143 in the right driving assembly 142, to directly increase the rotation speed of the left drive wheel and reduce the rotation speed of the right drive wheel.

By adjusting the motion control parameter, the difference between the traveling speeds of the left and right drive wheels 144 can be reduced, thereby gradually reducing the traveling deflection angle of the multi-purpose vehicle until the multi-purpose vehicle resumes straight-line traveling.

An iterative compensation adjustment solution is specifically described below with reference to specific embodiments.

The compensation methods are as follows:

(1) Direct compensation for a difference between the angular displacement signals outputted by the rotation detection modules corresponding to the left and right control levers, which may be further divided into: unilateral signal forward compensation, unilateral signal reverse compensation, and bilateral signal compensation.

(2) Compensation for a rotation speed difference (calibration of a target rotation speed difference between the left drive wheel and the right drive wheel), which may be further divided into: unilateral rotation speed forward compensation, unilateral rotation speed reverse compensation, and bilateral rotation speed compensation.

(3) Compensation for a torque difference (calibration of a target torque difference between the left drive wheel and the right drive wheel), which may be further divided into: unilateral torque forward compensation, unilateral torque reverse compensation, and bilateral torque compensation.

In some embodiments, performing the unilateral signal/rotation speed/torque compensation includes: determining a to-be-compensated side based on the determination of whether the deflection angle $\theta$ of the multi-purpose vehicle is in a range of [-π/2, 0] or [0, π/2], or another selected range, or whether the deflection angle $\theta$ of the multi-purpose vehicle is a positive value or a negative value. Specifically, the compensation is divided into two types: forward compensation and reverse compensation.

a) Forward compensation, also referred to as small-value forward compensation

When $\theta \in$ [-π/2~0), it indicates that the angular displacement signal of the left control lever/the motor rotation speed of the left drive wheel/the motor output torque of the left drive wheel is relatively small and needs to be increased, which is the forward compensation.

A compensation formula is:

$$S_L' = S_L\left(1 - c_s \times \frac{\theta}{\pi}\right).$$

In the above formula, $S_L'$ denotes data obtained after direct compensation of the angular displacement signal outputted by the rotation detection module of the left control lever/ the motor rotation speed of the left drive wheel/the motor output torque of the left drive wheel, $S_L$ denotes the original angular displacement signal outputted by the rotation detection module of the left control lever/ the original motor rotation speed of the left drive wheel/ the original motor output torque of the left drive wheel, and $c_s$ denotes an engineering empirical correction value, with a value range of $0 < c_s \le 2$ and used to control a rate of convergence.

The compensated angular displacement signal data $S_L'$ gradually increases, the rotation speed of the left drive wheel gradually increases, and the vehicle traveling trajectory gradually deviates to the right. Therefore, $\theta$ gradually approaches zero. The above formula is discretized and represented as:

$$S_{Lk} = S_{Lk-1}\left(1 - c_s \times \frac{\theta_k}{\pi}\right).$$

In the above formula, $S_{Lk}$ denotes data obtained after direct compensation of the angular displacement signal outputted by the rotation detection module of the left control lever/ the motor rotation speed of the left drive wheel/ the motor output torque of the left drive wheel at the current moment, $S_{Lk-1}$ denotes data obtained after direct compensation of the angular displacement signal outputted by the rotation detection module of the left control lever/motor rotation speed of the left drive wheel/-motor output torque of the left drive wheel at the previous moment, and $\theta_k$ denotes a traveling deflection angle of the multi-purpose vehicle at the current moment.

When $\theta$ is equal to 0, the current $S_{Lk}$ is recorded, and a compensation value $S_{CL}$ is finally obtained. A compensation value formula is represented as: $S_{CL} = S_{Lk} - S_{L0}$.

In the above formula, $S_{CL}$ denotes direct compensation data for the angular displacement signal outputted by the rotation detection module of the left control lever/ direct compensation data for the motor rotation speed of the left drive wheel/ direct compensation data for the motor output torque of the left drive wheel, and $S_{CL} > 0$; $S_{Lk}$ denotes the data obtained after direct compensation for the angular displacement signal outputted by the rotation detection module of the left control lever/the compensated motor rotation speed of the left drive wheel/ the compensated motor output torque of the left drive wheel at the final moment when $\theta$ is equal to 0; and $S_{L0}$ denotes data obtained after the direct compensation for the angular displacement signal outputted by the rotation detection module of the left control lever/the compensated motor rotation speed of the left drive wheel/the compensated motor output torque of the left drive wheel at the initial moment, i.e., $S_{L0}$ denotes the original angular displacement signal outputted by the rotation detection module of the left control lever/the original motor rotation speed of the left drive wheel/the original motor output torque of the left drive wheel, and $S_{L0} = S_L$.

The stored data includes $S_{CL}$ and $S_{CR}$, where $S_{CL} > 0$ and $S_{CR} = 0$. This method is a fitting correction using a successive approximation method, with the advantage of high compensation data accuracy, which avoids potential over-compensation caused by directly using the deflection angle $\theta$ with a large deviation as the compensation data.

In response to $\theta \in [0 \sim \pi/2]$, it indicates that an angular displacement signal outputted by the rotation detection module of the right control lever/motor rotation speed of the right drive wheel/motor output torque of the right drive wheel is relatively small and needs to be increased, which is the forward compensation.

A compensation formula is:

$$S_R' = S_R\left(1 + c_s \times \frac{\theta}{\pi}\right).$$

In the above formula, $S_R'$ denotes data obtained after direct compensation of the angular displacement signal outputted by the rotation detection module of the right control lever/motor rotation speed of the right drive wheel/motor output torque of the right drive wheel $S_R$ denotes the original angular displacement signal outputted by the rotation detection module of the right control lever/ the original motor rotation speed of the right drive wheel/ the original motor output torque of the right drive wheel, and $c_s$ denotes the engineering empirical correction value, with a value range of $0 < c_s \le 2$ and used to control the rate of convergence.

Since $\theta$ is greater than zero, the angular displacement signal data $S_R'$ gradually increases, the rotation speed of the right drive wheel gradually increases, and the vehicle traveling trajectory gradually deviates to the left. Therefore, $\theta$ gradually approaches zero. The above formula is discretized and represented as:

$$S_{Rk} = S_{Rk-1}\left(1 + c_s \times \frac{\theta_k}{\pi}\right).$$

In the above formula, $S_{Rk}$ denotes data obtained after direct compensation of the angular displacement signal outputted by the rotation detection module of the right control lever/the motor rotation speed of the right drive wheel/the motor output torque of the right drive wheel at the current moment, $S_{Rk-1}$ denotes data obtained after direct compensation of the angular displacement signal outputted by the rotation detection module of the right control lever/the motor rotation speed of the right drive wheel/the motor output torque of the right drive wheel at the previous moment, and $\theta_k$ denotes the traveling deflection angle of the multi-purpose vehicle at the current moment.

When $\theta$ is equal to 0, the current $S_{Rk}$ is recorded, and a compensation value $S_{CR}$ is finally obtained. A compensation value formula is: $S_{CR} = S_{Rk} - S_{R0}$.

In the above formula, $S_{CR}$ denotes direct compensation data for the angular displacement signal outputted by the rotation detection module of the right control lever/ direct compensation data for the motor rotation speed of the right drive wheel/ direct compensation data for the motor output torque of the right drive wheel ($S_{CR} > 0$); $S_{Rk}$ denotes the data obtained after direct compensation for the angular displacement signal outputted by the rotation detection module of the right control lever/the compensated motor rotation speed of the right drive wheel/the compensated motor output torque of the right drive wheel at the final moment when $\theta$ is equal to 0; and $S_{R0}$ denotes data obtained after the direct compensation for the angular displacement signal outputted by the rotation detection module of the right control lever/the compensated motor rotation speed of the right drive wheel/the compensated motor output torque of the right drive wheel at the initial moment, i.e., $S_{R0}$ denotes the original angular displacement signal outputted by the rotation detection module of the right control lever/the original motor rotation speed of the right drive wheel/the original motor output torque of the right drive wheel ($S_{R0}$ = $S_R$).

The stored data includes $S_{CL}$ and $S_{CR}$, where $S_{CL}$ = 0 and $S_{CR}$ > 0 . This method is the fitting correction using the successive approximation method, with the advantage of high compensation data accuracy, which avoids the potential over-compensation caused by directly using the deflection angle $\theta$ with a large deviation as the compensation data.

b) Reverse compensation, also referred to as large-value reverse compensation

When $\theta\varepsilon[-\pi/2\sim0)$, it indicates that the angular displacement signal outputted by the rotation detection module of the right control lever is relatively large and thus needs to be reduced. When $0\varepsilon[0\sim\pi/2]$, it indicates that the angular displacement signal outputted by the rotation detection module of the right control lever/the motor rotation speed of the right drive wheel/the motor output torque of the right drive wheel is relatively large and thus needs to be reduced. The above processes are the reverse compensation.

The compensation formula is:

$$S_R^{'} = S_R \left(1 + c_s \times \frac{\theta}{\pi}\right).$$

In the above formula, $S_R^{'}$ denotes data obtained after direct compensation of the angular displacement signal outputted by the rotation detection module of the right control lever/the motor rotation speed of the right drive wheel/the motor output torque of the right drive wheel, $S_R$ denotes the original angular displacement signal outputted by the rotation detection module of the right control lever/ the original motor rotation speed of the right drive wheel/the original motor output torque of the right drive wheel, and $c_s$ denotes the engineering empirical correction value, with a value range of $0 < c_s \leq 2$ and used to control the rate of convergence.

Since $\theta$ is smaller than zero, the compensated angular displacement signal data $S_R^{'}$ gradually decreases, the rotation speed of the right drive wheel gradually decreases, and the vehicle traveling trajectory gradually deviates to the right. Therefore, $\theta$ gradually approaches zero. The above formula is discretized and represented as: $S_{Rk} = S_{Rk-1} \left(1 + c_s \times \frac{\theta_k}{\pi}\right).$

In the above formula, $S_{Rk}$ denotes data obtained after direct compensation of the angular displacement signal outputted by the rotation detection module of the right control lever/ the motor rotation speed of the right drive wheel/the motor output torque of the right drive wheel at the current moment, $S_{Rk-1}$ denotes data obtained after direct compensation of the angular displacement signal outputted by the rotation detection module of the right control lever/the motor rotation speed of the right drive wheel/the motor output torque of the right drive wheel at the previous moment, and $\theta_k$ denotes the traveling deflection angle of the multi-purpose vehicle at the current moment.

When $\theta$ is equal to 0, the current $S_{Rk}$ is recorded, and the compensation value $S_{CR}$ is finally obtained. The compensation value formula is: $S_{CR}$ = $S_{Rk}$ - $S_{R0}$.

In the above formula, $S_{CR}$ denotes direct compensation data for the angular displacement signal outputted by the rotation detection module of the right control lever/ direct compensation data for the motor rotation speed of the right drive wheel/ direct compensation data for the motor output torque of the right drive wheel ($S_{CR}$ > 0); $S_{Rk}$ denotes the data obtained after direct compensation for the angular displacement signal outputted by the rotation detection module of the right control lever/the compensated motor rotation speed of the right drive wheel/the compensated motor output torque of the right drive wheel at the final moment when $\theta$ is equal to 0; and $S_{R0}$ denotes data obtained after the direct compensation for the angular displacement signal outputted by the rotation detection module of the right control lever/ the compensated motor rotation speed of the right drive wheel/the compensated motor output torque of the right drive wheel at the initial moment, i.e., $S_{R0}$ denotes the original angular displacement signal outputted by the rotation detection module of the right control lever/original motor rotation speed of the right drive wheel/original motor output torque of the right drive wheel ($S_{R0}$ = $S_R$).

The stored data includes $S_{CL}$ and $S_{CR}$, where $S_{CL}$ = 0 and $S_{CR}$ < 0 . This method is the fitting correction using the successive approximation method, with the advantage of high compensation data accuracy, which avoids the potential over-compensation caused by directly using the deflection angle $\theta$ with a large deviation as the compensation data.

When $\theta\in[0\sim\pi/2]$, as shown in FIG. 3 above, it indicates that the angular displacement outputted by the rotation detection module of the left control lever is relatively large and thus needs to be reduced, which is referred to as the reverse compensation.

The compensation formula is:

$$S_L^{'} = S_L \left(1 - c_s \times \frac{\theta}{\pi}\right).$$

In the above formula, $S_L^{'}$ denotes data obtained after direct compensation of the angular displacement signal outputted by the rotation detection module of the left control lever/the motor rotation speed of the left drive wheel/the motor output torque of the left drive wheel, $S_L$ denotes the original angular displacement signal outputted by the rotation detection module of the left control lever/the original motor rotation speed of the left drive wheel/the original motor output torque of the left drive wheel, and $c_s$ denotes an engineering empirical correction value, with a value range of $0 < c_s \leq 2$ and used to control a rate of convergence.

Since $\theta$ is greater than 0, the compensated angular displacement signal data $S_L^{'}$ gradually decreases, the rotation speed of the left drive wheel gradually decreases, and the vehicle traveling trajectory gradually deviates to the left. Therefore, $\theta$ gradually approaches zero. The above formula is discretized as:

$$S_{Lk} = S_{Lk-1}\left(1 - c_s \times \frac{\theta_k}{\pi}\right).$$

In the above formula, $S_{Lk}$ denotes data obtained after direct compensation of the angular displacement signal outputted by the rotation detection module of the left control lever/the motor rotation speed of the left drive wheel/the motor output torque of the left drive wheel at the current moment, $S_{Lk-1}$ denotes data obtained after direct compensation of the angular displacement signal outputted by the rotation detection module of the left control lever/the motor rotation speed of the left drive wheel/the motor output torque of the left drive wheel at the previous moment, and $\theta_k$ denotes the traveling deflection angle of the multi-purpose vehicle at the current moment.

When $\theta$ is equal to 0, the current $S_{Lk}$ is recorded, and the compensation value $S_{CL}$ is finally obtained. The compensation value formula is: $S_{CL} = S_{Lk} - S_{L0}$.

In the above formula, $S_{CL}$ denotes direct compensation data for the angular displacement signal outputted by the rotation detection module of the left control lever/ direct compensation data for the motor rotation speed of the left drive wheel/ direct compensation data for the motor output torque of the left drive wheel ($S_{CL} < 0$); $S_{Lk}$ denotes the data obtained after direct compensation for the angular displacement signal outputted by the rotation detection module of the left control lever/the compensated motor rotation speed of the left drive wheel/the compensated motor output torque of the left drive wheel at the last moment when $\theta$ is equal to 0; and $S_{L0}$ denotes data obtained after the direct compensation for the angular displacement signal outputted by the rotation detection module of the left control lever/the compensated motor rotation speed of the left drive wheel/the compensated motor output torque of the left drive wheel at the initial moment, i.e., $S_{L0}$ denotes the original angular displacement signal outputted by the rotation detection module of the left control lever/original motor rotation speed of the left drive wheel/original motor output torque of the left drive wheel ($S_{L0} = S_L$).

The stored data includes $S_{CL}$ and $S_{CR}$, where $S_{CL} < 0$ and $S_{CR} = 0$. This method is the fitting correction using the successive approximation method, with the advantage of high compensation data accuracy, which avoids the potential over-compensation caused by directly using the deflection angle $\theta$ with a large deviation as the compensation data.

In some embodiments, the bilateral compensation is performed:
The compensation formulas are:

$$S_L^{'} = S_L\left(1 - c_s \times \frac{\theta}{\pi}\right),$$

and

$$S_R^{'} = S_R\left(1 + c_s \times \frac{\theta}{\pi}\right).$$

The above formulas are discretized and represented as:

$$S_{Lk} = S_{Lk-1}\left(1 - c_s \times \frac{\theta_k}{\pi}\right),$$

and

$$S_{Rk} = S_{Rk-1}\left(1 + c_s \times \frac{\theta_k}{\pi}\right).$$

When $\theta \varepsilon [-\pi/2\sim 0)$, it indicates that the angular displacement signal outputted by the rotation detection module of the left control lever/the motor rotation speed of the left drive wheel/the motor output torque of the left drive wheel is relatively small and thus needs to be increased, and that the angular displacement signal outputted by the rotation detection module of the right control lever/the motor rotation speed of the right drive wheel/the motor output torque of the right drive wheel is relatively large and thus needs to be reduced.

Since $\theta$ is smaller than zero, the compensated angular displacement signal data/ the compensated motor rotation speed of the left drive wheel/ the compensated motor output torque of the left drive wheel $S_L^{'}$ gradually increases, $S_R^{'}$ gradually decreases, the rotation speed of the left drive wheel gradually increases, the rotation speed of the right drive wheel gradually decreases, and the vehicle traveling trajectory gradually deviates to the right. Therefore, $\theta$ gradually approaches zero.

When $\theta$ is equal to 0, the current $S_{Lk}$ is recorded, and the compensation value $S_{CL}$ is finally obtained. The compensation value formula is: $S_{CL} = S_{Lk} - S_{L0}$.

The stored data includes $S_{CL}$ and $S_{CR}$, where $S_{CL} = 0$ and $S_{CR} < 0$.

When $\theta \in [0\sim \pi/2]$, it indicates that the angular displacement signal outputted by the rotation detection module of the left control lever/the motor rotation speed of the left drive wheel/the motor output torque of the left drive wheel is relatively large and thus needs to be reduced, and that the angular displacement signal outputted by the rotation detection module of the right control lever/the motor rotation speed of the right drive wheel/the motor output torque of the right drive wheel is relatively small and thus needs to be increased.

Since $\theta$ is greater than zero, the compensated angular displacement signal data/the compensated motor rotation speed of the right drive wheel/ the compensated motor output torque of the right drive wheel $S'_R$ gradually increases, $S'_L$ gradually decreases, the rotation speed of the right drive wheel gradually increases, the rotation speed of the left drive wheel gradually decreases, and the vehicle traveling trajectory gradually deviates to the left. Therefore, $\theta$ gradually approaches zero.

When $\theta$ is equal to 0, the current $S_{Rk}$ is recorded, and the compensation value $S_{CR}$ is finally obtained. The compensation value formula is: $S_{CR} = S_{Rk} - S_{R0}$.

The stored data includes $S_{CL}$ and $S_{CR}$, where $S_{CL} < 0$ and $S_{CR} > 0$ .

This method is the fitting correction using the successive approximation method, with the advantage of high compensation data accuracy, which avoids the potential over-compensation caused by directly using the deflection angle $\theta$ with a large deviation as the compensation data.

In some embodiments, the above unilateral signal compensation and bilateral signal compensation may be used in combination.

An advantage of the unilateral signal compensation is allowing for the over-limit compensation, meaning that the compensated side may be adjusted to exceed the other side (the uncompensated side). This enables calibration and compensation for non-straight-line traveling caused by some special factors unrelated to deviations in the angular displacement signal itself, such as uneven tire pressure, one-side wheel wear, or an inclined road surface. The unilateral signal compensation has disadvantages of a slow rate of convergence and a long calibration time.

The bilateral signal compensation has advantages of a fast rate of convergence and a short calibration time and has disadvantages of rejecting over-limit compensation. The calibration result is that the left and right angular displacement signals/the rotation speeds of the left and right drive wheels/the compensated data approach each other infinitely. This method fails to resolve the non-straight-line traveling caused by factors such as uneven tire pressure, one-side wheel wear, or an inclined road surface as mentioned above.

Therefore, the two methods can be combined. The bilateral signal compensation is used to leverage its advantage of fast rate of convergence, achieving a rough calibration effect in a short time. Then, the calibration mode is switched to the unilateral signal compensation for fine-tuning, resulting in a better and optimal calibration effect.

In the multi-purpose vehicle, when a traveling abnormality occurs in the multi-purpose vehicle, the calibration controller component is used to adjust the operating state of the drive mechanism in the multi-purpose vehicle in a manner of forward compensation, reverse compensation, or bidirectional compensation. The iterative compensation adjustment is performed on the operating state of the drive mechanism, which can timely reduce the traveling deflection angle of the multi-purpose vehicle to zero to adjust the traveling state to match the control state, achieving straight-line traveling calibration and eliminating the traveling abnormality. In such a manner, it can be ensured that the multi-purpose vehicle can always accurately and correctly respond to the control intention of the user, significantly optimizing the user experience.

One or more embodiments of the present disclosure further provide a multi-purpose vehicle.

As shown in FIG. 2, the multi-purpose vehicle provided by one or more embodiments of the present disclosure includes: a frame 1, a functional mechanism 12 connected to the frame, a drive mechanism 14, and a control mechanism 16.

The frame 1 extends at least partially parallel to a front-rear direction. A load-carrying mechanism 100 may be arranged on the frame 1. The load-carrying mechanism 100 is configured to carry an operator of the garden work vehicle.

The functional mechanism 12 includes an output member configured to output power to achieve a specific function. In some embodiments, the functional mechanism 12 is a mowing element for implementing a mowing function. The functional mechanism is further connected to the frame 1. The functional mechanism 12 further includes a functional motor for driving the mowing element to rotate at a high speed, and a control module corresponding to the functional motor.

As shown in FIG. 3, the drive mechanism 14 is configured to drive the garden work vehicle to travel within garden scenarios such as lawns, gardens, fences, greens, or other road surfaces. In some implementations, the drive mechanism 14 includes a left driving assembly 141 and a right driving assembly 142. The left driving assembly 141 is arranged on a left side of the frame, and the right driving assembly 142 is arranged on a right side of the frame. Each of the left driving assembly 141 and the right driving assembly 142 includes a drive motor 143 and a drive wheel 144 mechanically coupled to the drive motor 143. The drive motor 143 may transmit power to the driving wheel 144 to drive the driving wheel 144 to rotate, thereby driving the garden work vehicle to move.

When the drive motors 143 in the left driving assembly 141 and the right driving assembly 142 drive the corresponding driving wheels 144 at different powers, a rotation speed difference is generated between left and right driving wheels 144, thereby enabling the garden work vehicle to turn.

The garden work vehicle further includes a power supply system 102 configured to supply power to the functional mechanism 12, the drive mechanism 14, and the control mechanism 16.

As shown in FIG. 2, the control mechanism 16 is coupled to the drive mechanism 14 and configured to control an operating state of the drive mechanism 14 to adjust a traveling state of the garden work vehicle.

In some implementations, corresponding to the left driving assembly 141 and the right driving assembly 142 in the drive mechanism 14, the control mechanism 16 is set to include a left control assembly 161 and a right control assembly 162. The left control assembly 161 is coupled to the left driving assembly 141 to control an operating state of the left driving assembly 141. The right control assembly 162 is coupled to the right driving assembly 142 to control an operating state of the right driving assembly 142.

As shown in FIG. 4 to FIG. 8, the left control assembly 161 includes a left control lever 1611, and the right control assembly 162 includes a right control lever 1621. Each of the left control assembly 161 and the right control assembly 162 further includes a rotation detection module 163 and a drive controller module 164.

As shown in FIG. 5 and FIG. 6, each of the left control lever 1611 and the right control lever 1621 is configured to be controllably rotated about a first axis 201 between a first forward position 202, a neutral position 203, and a first backward position 204. The first axis 201 is substantially perpendicular to a vehicle body extending direction of the garden work vehicle. During rotation, when the control lever rotates towards a front end of the frame 1, the control lever rotates forward and is in the forward position, and a limit position reachable by the control lever when rotating forward is the first forward position 202. When the control lever rotates towards a rear end of the frame 1, the control lever rotates backward and is in the backward position, and a limit position reachable by the control lever when rotating backward is the first backward position 204. When the control lever maintains a perpendicular or substantially perpendicular positional relationship with the frame 1, the control lever is in the neutral position 203.

In some embodiments, a limiting plate assembly is further disposed in the control mechanism 16. The limiting plate assembly includes a first limiting plate arranged in the left control assembly 161 and a second limiting plate arranged in the right control assembly 162. Limiting grooves are formed in the first limiting plate and the second limiting plate to limit rotation ranges of the left control lever 1611 and the right control lever 1621.

By taking the first limiting plate as an example, when the left control lever 1611 is rotated about the first axis 201, it indicates that the left control lever 1611 rotates in the limiting groove of the first limiting plate. A front end and a rear end of the limiting groove correspond to the first forward position 202 and the first backward position 204 reachable by the left control lever 1611.

The rotation detection module 163 is arranged corresponding to the respective control lever. Specifically, the rotation detection module 163 may be arranged at a position where the control lever intersects the first axis 201, and be configured to detect a pivoting direction and angular displacement of the corresponding control lever, and to generate angular displacement information.

In some embodiments, the rotation detection module 163 may adopt a Hall angle sensor. FIG. 7 is a schematic diagram of a corresponding relationship between angular displacement information outputted by the Hall angle sensor when serving as the rotation detection module 163 and a pivoting direction and angular displacement of the corresponding control lever.

Exemplarily, a mechanical angular displacement of the control lever about the first axis 201 ranges from +20° to -20°. An angle of a forward rotation of the control lever, i.e., an angle of a rotation of the control lever towards the first forward position 202, may be defined as positive, and the corresponding angle of a backward rotation of the control lever may be defined as negative. Alternatively, the angle of the backward rotation of the control lever, i.e., the angle of the rotation of the control lever towards the first backward position 204, may be defined as positive, and the corresponding angle of the forward rotation of the control lever may be defined as negative.

The Hall angle sensor may output the angular displacement information in the form of a voltage signal, and a range of an output voltage signal corresponding to an angular displacement range of the control lever is [0, 5V]. As shown in FIG. X, a voltage value outputted by the Hall angle sensor has a linear proportional relationship with the angular displacement of the control lever.

The drive controller module 164 is communicatively connected to the rotation detection module 163 to receive the angular displacement information generated by the rotation detection module 163. Further, the drive controller module 164 is configured to control the rotation direction and the rotation speed of the drive motor 143 in the corresponding drive assembly based on the angular displacement information.

As shown in FIG. 10, the garden work vehicle further includes an auxiliary control mechanism 18. The auxiliary control mechanism 18 may be integrated into a vehicle control unit (VCU) of the garden work vehicle. Alternatively, an independent controller module may be provided in the garden work vehicle as the auxiliary control mechanism 18. The VCU is configured to adjust an overall operating state of the garden work vehicle, including controlling the operating states of the functional mechanism 12 and the drive mechanism 14, and cooperating with the control mechanism 16 to achieve more refined control.

It can be understood by those skilled in the art that the drive controller modules 164 in the left control assembly 161 and the right control assembly 162 may also be integrated with the VCU, which can reduce an entire vehicle communication line and lower production costs while more facilitating communication with the VCU.

The auxiliary control mechanism 18 is configured to monitor the traveling state of the garden work vehicle, to determine whether the garden work vehicle is traveling abnormally, and to perform a calibration operation in response to the garden work vehicle traveling abnormally, to timely eliminate a vehicle traveling abnormality.

In some embodiments, the auxiliary control mechanism 18 includes a control state sensing component 181, a traveling state sensing component 182, and a calibration controller component 183.

The control state sensing component 181 is configured to determine a control state of a user with respect to the control mechanism 16. The control state may include a straight-line control state and a non-straight-line control state. The straight-line control state is used to characterize a control intention of the user with respect to straight-line traveling of the garden work vehicle. The non-straight-line control state may characterize a control intention of the user with respect to non-straight-line traveling of the garden work vehicle, such as user's intentions of controlling the garden work vehicle to turn left, turn right, and traveling backward.

As shown in FIG. 13, in the multi-purpose vehicle provided by one or more embodiments of the present disclosure, the control mechanism 16 further includes an alignment detection device 166 configured to detect whether both the left control lever 1611 and the right control lever 1621 are aligned. The control state sensing component 181 may determine the control state of the user with respect to the control mechanism 16 based on a detection result of the alignment detection device 166.

In some embodiments, the alignment detection device 166 includes a signal transmitter 1661 and a signal receiver 1662. The signal transmitter 1661 is configured to controllably transmit an alignment detection signal for reception by the signal receiver 1662. The signal transmitter 1661 and the signal receiver 1662 are respectively arranged at ends of the left control lever 1611 and the right control lever 1621 that are away from the first axis 201, i.e., the signal transmitter 1661 and the signal receiver 1662 are respectively mounted at handles of the left control lever 1611 and the right control lever 1621. When the left control lever 1611 and the right control lever 1621 are aligned, the signal transmitter 1661 and the signal receiver 1662 are opposed to each other. FIG. 13 shows a case where the signal transmitter 1661 is arranged at the end of the right control lever 1621 that is away from the first axis 201, and the signal receiver 1662 is arranged at the end of the left control lever 1611 that is away from the first axis 201. In practice, positions of the signal transmitter 1661 and the signal receiver 1662 may be swapped, i.e., the signal transmitter 1661 is arranged at the end of the left control lever 1611 that is away from the first axis 201, and the signal receiver 1662 is arranged at the end of the right control lever 1621 that is away from the first axis 201.

When the signal transmitter 1661 and the signal receiver 1662 are opposed to each other, or there is only a slight deviation between the signal transmitter 1661 and the signal receiver 1662, the signal receiver 1662 may smoothly and unobstructedly receive the alignment detection signal transmitted by the signal transmitter 1661. The control state sensing component 181 may determine whether the left control lever 1611 and the right control lever 1621 are aligned by determining whether the signal receiver 1662 receives the alignment detection signal from the signal transmitter. Further, the control state is determined by combining the angular displacements of the left control lever and the right control lever.

The traveling state sensing component 182 is configured to determine the traveling state of the garden work vehicle. The traveling state may include a straight-line traveling state and a non-straight-line traveling state. In some embodiments, the traveling state sensing component 182 may use a vehicle body attitude sensor disposed in the garden work vehicle to determine a traveling state. For example, when it is determined that the garden work vehicle deflects during traveling using the vehicle body attitude sensor, it can be determined that the garden work vehicle is in the non-straight-line traveling state.

The calibration controller component 183 is configured to compare the control state with the traveling state to determine whether the control state match with the traveling state. In response to a mismatch between the traveling state and the control state, the calibration controller component 183 may determine that the garden work vehicle is traveling abnormally.

When it is determined that the garden work vehicle is traveling abnormally, the calibration controller component 183 may further adjust the operating state of the drive mechanism 14 to match an actual traveling state of the garden work vehicle with the control state of the user with respect to the control mechanism 16. Specifically, the calibration controller component 183 may adjust output power of the drive motor 143 in the left driving assembly 141 and output power of the drive motor 143 in the right driving assembly 142, thereby adjusting the rotation speeds of the left and right drive wheels 144. By changing a differential speed between the left drive wheel and the right drive wheel, the traveling state is adjusted to match the control state, thereby eliminating the traveling abnormality of the garden work vehicle.

In some embodiments, the auxiliary control mechanism 18 may further receive an active calibration instruction from the user and perform a calibration operation in response to the active calibration instruction.

The user may operate a human-machine interaction control panel in the garden work vehicle to input the active calibration instruction. After receiving the active calibration instruction, the auxiliary control mechanism 18 controls the control state sensing component 181 and the traveling state sensing component 182 to sense and determine the control state and the traveling state, respectively. Then, the calibration controller component 183 is used to compare the control state with the traveling state. In response to the mismatch between the control state and the traveling state, the calibration controller component 183 is further used to perform the calibration operation to control the operating state of the drive mechanism 14 and adjust the actual traveling state of the garden work vehicle, to match the actual traveling state with the control state, thereby eliminating the vehicle traveling abnormality.

In the garden work vehicle, the control state sensing component and the traveling state sensing component are used to perform real-time monitoring and sensing on the control state of the user with respect to the control mechanism and the actual traveling state of the garden work vehicle. The calibration controller component is used to compare the control state sensed by the control state sensing component with the traveling state sensed by the traveling state sensing component in real time, which can perform timely detect and determine an abnormal traveling state that may occur in the garden work vehicle. Further, when a traveling abnormality occurs in the garden work vehicle, the calibration controller component is used to adjust the operating state of the drive mechanism in the garden work vehicle, which can timely adjust the traveling state to match the control state, realizing straight-line traveling calibration and eliminating the traveling abnormality of the vehicle. This approach can ensure that the garden work vehicle can always accurately and correctly respond to the control intention of the user, significantly optimizing the user experience.

One or more embodiments of the present disclosure further provide a multi-purpose vehicle.

As shown in FIG. 2, the multi-purpose vehicle provided by one or more embodiments of the present disclosure includes: a frame 1, a functional mechanism 12 connected to the frame, a drive mechanism 14, and a control mechanism 16.

The frame 1 extends at least partially parallel to a front-rear direction. A load-carrying mechanism 100 may be arranged on the frame 1. The load-carrying mechanism 100 is configured to carry an operator of the garden work vehicle.

The functional mechanism 12 includes an output member configured to output power to achieve a specific function. In some embodiments, the functional mechanism 12 is a mowing element for implementing a mowing function. The functional mechanism is further connected to the frame 1. The functional mechanism 12 further includes a functional motor for driving the mowing element to rotate at a high speed, and a control module corresponding to the functional motor.

As shown in FIG. 3, the drive mechanism 14 is configured to drive the garden work vehicle to travel within garden scenarios such as lawns, gardens, fences, greens, or other road surfaces. In some implementations, the drive mechanism 14 includes a left driving assembly 141 and a right driving assembly 142. The left driving assembly 141 is arranged on a left side of the frame, and the right driving assembly 142 is arranged on a right side of the frame. Each of the left driving assembly 141 and the right driving assembly 142 includes a drive motor 143 and a drive wheel 144 mechanically coupled to the drive motor 143. The drive motor 143 may transmit power to the driving wheel 144 to drive the driving wheel 144 to rotate, thereby driving the garden work vehicle to move.

When the drive motors 143 in the left driving assembly 141 and the right driving assembly 142 drive the corresponding driving wheels 144 at different powers, a rotation speed difference is generated between left and right driving wheels 144, thereby enabling the garden work vehicle to turn.

The garden work vehicle further includes a power supply system 102 configured to supply power to the functional mechanism 12, the drive mechanism 14, and the control mechanism 16.

As shown in FIG. 2, the control mechanism 16 is coupled to the drive mechanism 14 and configured to control an operating state of the drive mechanism 14 to adjust a traveling state of the garden work vehicle.

In some implementations, corresponding to the left driving assembly 141 and the right driving assembly 142 in the drive mechanism 14, the control mechanism 16 is set to include a left control assembly 161 and a right control assembly 162. The left control assembly 161 is coupled to the left driving assembly 141 to control an operating state of the left driving assembly 141. The right control assembly 162 is coupled to the right driving assembly 142 to control an operating state of the right driving assembly 142.

As shown in FIG. 4 to FIG. 8, the left control assembly 161 includes a left control lever 1611, and the right control assembly 162 includes a right control lever 1621. Each of the left control assembly 161 and the right control assembly 162 further includes a rotation detection module 163 and a drive controller module 164.

As shown in FIG. 5 and FIG. 6, each of the left control lever 1611 and the right control lever 1621 is configured to be controllably rotated about a first axis 201 between a first forward position 202, a neutral position 203, and a first backward position 204. The first axis 201 is substantially perpendicular to a vehicle body extending direction of the garden work vehicle. During rotation, when the control lever rotates towards a front end of the frame 1, the control lever rotates forward and is in the forward position, and a limit position reachable by the control lever when rotating forward is the first forward position 202. When the control lever rotates towards a rear end of the frame 1, the control lever rotates backward and is in the backward position, and a limit position reachable by the control lever when rotating backward is the first backward position 204. When the control lever maintains a perpendicular or substantially perpendicular positional relationship with the frame 1, the control lever is in the neutral position 203.

In some embodiments, a limiting plate assembly is further disposed in the control mechanism 16. The limiting plate assembly includes a first limiting plate arranged in the left control assembly 161 and a second limiting plate arranged in the right control assembly 162. Limiting grooves are formed in the first limiting plate and the second limiting plate to limit rotation ranges of the left control lever 1611 and the right control lever 1621.

By taking the first limiting plate as an example, when the left control lever 1611 is rotated about the first axis 201, it indicates that the left control lever 1611 rotates in the limiting groove of the first limiting plate. A front end and a rear end of the limiting groove correspond to the first forward position 202 and the first backward position 204 reachable by the left control lever 1611.

The rotation detection module 163 is arranged corresponding to the respective control lever. Specifically, the rotation detection module 163 may be arranged at a position where the control lever intersects the first axis 201, and be configured to detect a pivoting direction and angular displacement of the corresponding control lever, and to generate angular displacement information.

In some embodiments, the rotation detection module 163 may adopt a Hall angle sensor. FIG. 7 is a schematic diagram of a corresponding relationship between angular displacement information outputted by the Hall angle sensor when serving as the rotation detection module 163 and a pivoting direction and angular displacement of the corresponding control lever.

Exemplarily, a mechanical angular displacement of the control lever about the first axis 201 ranges from +20° to -20°. An angle of a forward rotation of the control lever, i.e., an angle of a rotation of the control lever towards the first forward position 202, may be defined as positive, and the corresponding angle of a backward rotation of the control lever may be defined as negative. Alternatively, the angle of the backward rotation of the control lever, i.e., the angle of the rotation of the control lever towards the first backward position 204, may be defined as positive, and the corresponding angle of the forward rotation of the control lever may be defined as negative.

The Hall angle sensor may output the angular displacement information in the form of a voltage signal, and a range of an output voltage signal corresponding to an angular displacement range of the control lever is [0, 5V]. As shown in FIG. 7, a voltage value outputted by the Hall angle sensor has a linear proportional relationship with the angular displacement of the control lever.

The drive controller module 164 is communicatively connected to the rotation detection module 163 to receive the angular displacement information generated by the rotation detection module 163. Further, the drive controller module 164 is configured to control the rotation direction and the rotation speed of the drive motor 143 in the corresponding drive assembly based on the angular displacement information.

As shown in FIG. 10, the garden work vehicle further includes an auxiliary control mechanism 18. The auxiliary control mechanism 18 may be integrated into a vehicle control unit (VCU) of the garden work vehicle. Alternatively, an independent controller module may be provided in the garden work vehicle as the auxiliary control mechanism 18. The VCU is configured to adjust an overall operating state of the garden work vehicle, including controlling the operating states of the functional mechanism 12 and the drive mechanism 14, and cooperating with the control mechanism 16 to achieve more refined control.

It can be understood by those skilled in the art that the drive controller modules 164 in the left control assembly 161 and the right control assembly 162 may also be integrated with the VCU, which can reduce an entire vehicle communication line and lower production costs while more facilitating communication with the VCU.

The auxiliary control mechanism 18 is configured to monitor the traveling state of the garden work vehicle, to determine whether the garden work vehicle is traveling abnormally, and to perform a calibration operation in response to the garden work vehicle traveling abnormally, to timely eliminate a vehicle traveling abnormality.

In some embodiments, the auxiliary control mechanism 18 includes a control state sensing component 181, a traveling state sensing component 182, and a calibration controller component 183.

The control state sensing component 181 is configured to determine a control state of a user with respect to the control mechanism 16. The control state may include a straight-line control state and a non-straight-line control state. The straight-line control state is used to characterize a control intention of the user with respect to straight-line traveling of the garden work vehicle. The non-straight-line control state may characterize a control intention of the user with respect to non-straight-line traveling of the garden work vehicle, such as user's intentions of controlling the garden work vehicle to turn left, turn right, and traveling backward.

The traveling state sensing component 182 is configured to determine the traveling state of the garden work vehicle. The traveling state may include a straight-line traveling state and a non-straight-line traveling state. In some embodiments, the traveling state sensing component 182 may use a vehicle body attitude sensor disposed in the garden work vehicle to determine a specific traveling state. For example, when it is determined that the garden work vehicle deflects during traveling using the vehicle body attitude sensor, it can be determined that the garden work vehicle is in the non-straight-line traveling state.

As shown in FIG. 2, the multi-purpose vehicle provided by one or more embodiments of the present disclosure further includes a caster wheel assembly 3 arranged at a front end of the frame 1 and rotatably connected to the frame 1.

As shown in FIG. 21, the caster wheel assembly 3 includes a caster wheel 31 and a deflection detection module 32.

The caster wheel assembly 3 further includes a pivot shaft 33. Correspondingly, the front end of the frame 1 is formed as a shaft sleeve 101 for accommodating the pivot shaft 33 and allowing the pivot shaft 33 to rotate therein. The caster wheel 31 is rotatably connected to the frame 1 through the pivot shaft 33.

The deflection detection module 32 includes a detection element 321 and an induction element 322. The induction element 322 is fixedly arranged at an upper end of the pivot shaft 33. The detection element 321 is arranged at an upper end cover 1011 of the shaft sleeve 101 and positioned opposite to the induction element 322.

When the caster wheel 31 rotates relative to the frame 1, the induction element 322 fixedly arranged at the upper end of the pivot shaft 33 rotates, and a relative motion occurs between the induction element 322 and the detection element 321. The detection element 321 is configured to generate, based on the relative motion of the induction element 322 relative to the detection element 321, the deflection state information. The deflection state information is used to characterize the deflection angle of the caster wheel 31 relative to the frame 1, i.e., an angle between a plane where the caster wheel 31 is located and the extending direction of the multi-purpose vehicle body.

The traveling state sensing component 182 may determine the traveling state using deflection angle information of the caster wheel 31 relative to the frame that is determined by the deflection detection module 32 of the caster wheel assembly 3.

The calibration controller component 183 is configured to compare the control state with the traveling state to determine whether the control state match with the traveling state. In response to a mismatch between the traveling state and the control state, the calibration controller component 183 may determine that the garden work vehicle is traveling abnormally.

When it is determined that the garden work vehicle is traveling abnormally, the calibration controller component 183 may further adjust the operating state of the drive mechanism 14 to match an actual traveling state of the garden work vehicle with the control state of the user with respect to the control mechanism 16. Specifically, the calibration controller component 183 may adjust output power of the drive motor 143 in the left driving assembly 141 and output power of the drive motor 143 in the right driving assembly 142, thereby adjusting the rotation speeds of the left and right drive wheels 144. By changing a differential speed between the left drive wheel and the right drive wheel, the traveling state is adjusted to match the control state, thereby eliminating the traveling abnormality of the garden work vehicle.

In some embodiments, the auxiliary control mechanism 18 may further receive an active calibration instruction from the user and perform a calibration operation in response to the active calibration instruction.

The user may operate a human-machine interaction control panel in the garden work vehicle to input the active calibration instruction. After receiving the active calibration instruction, the auxiliary control mechanism 18 controls the control state sensing component 181 and the traveling state sensing component 182 to sense and determine the control state and the traveling state, respectively. Then, the calibration controller component 183 is used to compare the control state with the traveling state. In response to the mismatch between the control state and the traveling state, the calibration controller component 183 is further used to perform the calibration operation to control the operating state of the drive mechanism 14 and adjust the actual traveling state of the garden work vehicle, to match the actual traveling state with the control state, thereby eliminating the vehicle traveling abnormality.

In the garden work vehicle, the control state sensing component and the traveling state sensing component are used to perform real-time monitoring and sensing on the control state of the user with respect to the control mechanism and the actual traveling state of the garden work vehicle. The calibration controller component is used to compare the control state sensed by the control state sensing component with the traveling state sensed by the traveling state sensing component in real time, which can perform timely detection to determine an abnormal traveling state that may occur in the garden work vehicle. Further, when a traveling abnormality occurs in the garden work vehicle, the calibration controller component is used to adjust the operating state of the drive mechanism in the garden work vehicle, which can timely adjust the traveling state to match the control state, realizing straight-line traveling calibration and eliminating the traveling abnormality of the vehicle. This approach can ensure that the garden work vehicle can always accurately and correctly respond to the control intention of the user, significantly optimizing the user experience.

Based on the same objective, the embodiments of the present disclosure further provide a garden work vehicle.

As shown in FIG. 2, the garden work vehicle provided by one or more embodiments of the present disclosure includes: a frame 1, a functional mechanism 12 connected to the frame, a drive mechanism 14, and a control mechanism 16.

The frame 1 extends at least partially parallel to a front-rear direction. A load-carrying mechanism 100 may be arranged on the frame 1. The load-carrying mechanism 100 is configured to carry an operator of the garden work vehicle and may include at least one of a seat or a standing platform. FIG. 3 exemplarily shows only a case where the load-carrying mechanism 100 includes a seat. The seat or the standing platform is used for the operator to sit or stand on. That is, the garden work vehicle may provide a riding operating mode or a standing operating mode. Further, a structure of the seat and a structure of the standing platform may be flexibly switched, i.e., the operating mode of the garden work vehicle may be flexibly switched between the riding operating mode and the standing operating mode based on actual needs of the operator. A hand-held operation component may also be arranged on the frame 1. Based on the hand-held operation component, the garden work vehicle may further provide a walk-behind operating mode.

The functional mechanism 12 includes an output member for outputting power to achieve a specific function. In some embodiments, the functional mechanism 12 is a mowing element for implementing a mowing function. The functional mechanism is further connected to the frame 1. The functional mechanism 12 further includes a functional motor for driving the mowing element to rotate at a high speed, and a control module corresponding to the functional motor.

In some embodiments, the functional mechanism 12 may include one or more mowing elements and one or more functional motors provided in correspondence with the one or more mowing elements. For example, in some embodiments, the mowing element includes 3 blades, and the number of corresponding functional motors is also set to 3. In some specific implementations, the functional mechanism 12 further includes a control module provided in correspondence with to the mowing motors. The control module includes a control chip, such as an MCU or an ARM.

In some embodiments, the functional mechanism 12 may also be a cleaning element for implementing a cleaning function. The functional mechanism further includes a functional motor for driving the cleaning element and a control module corresponding to the functional motor.

It can be understood that in some embodiments, the functional mechanism may also be replaced with other functional components, such as components for snow removal, snow blowing, snow plowing, and flushing. Those skilled in the art should be able to adaptively replace various functional components without creative effort, all of which should fall within the protection scope of this embodiment.

As shown in FIG. 3, the drive mechanism 14 is configured to drive the garden work vehicle to travel within garden scenarios such as lawns, gardens, fences, greens, or other road surfaces. In some implementations, the drive mechanism 14 includes a left driving assembly 141 and a right driving assembly 142. The left driving assembly 141 is arranged on a left side of the frame, and the right driving assembly 142 is arranged on a right side of the frame. Each of the left driving assembly 141 and the right driving assembly 142 includes a drive motor 143 and a drive wheel 144 mechanically coupled to the drive motor 143. The drive motor 143 may transmit power to the driving wheel 144 to drive the driving wheel 144 to rotate, thereby driving the garden work vehicle to move.

When the drive motors 143 in the left driving assembly 141 and the right driving assembly 142 drive the corresponding driving wheels 144 at different powers, a rotation speed difference is generated between left and right driving wheels 144, thereby enabling the garden work vehicle to turn.

The garden work vehicle further includes a power supply system 102 configured to supply power to the functional mechanism 12, the drive mechanism 14, and the control mechanism 16.

The power supply system 102 is arranged on the frame 1 and detachably connected to the frame 1. The power supply system 102 includes a plurality of battery units. The plurality of battery units may be at least one of a first-specification battery pack and a second-specification battery pack. The specification differences between the first-specification battery pack and the second-specification battery pack include, but are not limited to, differences in battery pack capacity, voltage, internal resistance, weight, size, energy density, cell type, state of charge information, battery health state information, and other aspects.

In some embodiments, the difference between the first-specification battery pack and the second-specification battery pack lies in the capacity. The capacity of the first-specification battery pack is greater than the capacity of the second-specification battery pack. The second-specification battery pack is configured to supply power to hand-held garden tools. For example, the second-specification battery pack may supply power to garden tools such as grass trimmers, pruners, blowers, and chain saws. In addition, the second-specification battery pack may also supply power to torque output tools such as electric drills and electric hammers, supply power to sawing tools such as circular saws, jigsaws, and reciprocating saws, or supply power to grinding tools such as angle grinders and sanders.

In some embodiments, the difference between the first-specification battery pack and the second-specification battery pack lies in different types of battery cells used. For example, the first-specification battery pack and the second-specification battery pack may adopt a lithium iron phosphate cell and a ternary lithium cell, respectively. The plurality of battery units in the power supply system may also adopt a nickel-chromium battery cell, a lead-acid battery cell, a graphene battery cell, or the like.

The use of at least one of the first-specification battery pack and the second-specification battery pack as the plurality of battery units in the power supply system 102 allows the multi-purpose vehicle may be compatible with battery packs of different specifications, to meet the requirements for high-power operating while also being adaptable to a hand-held electric garden tool, which can make an operating mode of the operator more flexible.

As shown in FIG. 2, the control mechanism 16 is coupled to the drive mechanism 14 and configured to control an operating state of the drive mechanism 14 to adjust a traveling state of the garden work vehicle.

In some implementations, corresponding to the left driving assembly 141 and the right driving assembly 142 in the drive mechanism 14, the control mechanism 16 is set to include a left control assembly 161 and a right control assembly 162. The left control assembly 161 is coupled to the left driving assembly 141 to control an operating state of the left driving assembly 141. The right control assembly 162 is coupled to the right driving assembly 142 to control an operating state of the right driving assembly 142.

As shown in FIG. 4 to FIG. 8, the left control assembly 161 includes a left control lever 1611, and the right control assembly 162 includes a right control lever 1621. Each of the left control assembly 161 and the right control assembly 162 further includes a rotation detection module 163 and a drive controller module 164.

As shown in FIG. 5 and FIG. 6, each of the left control lever 1611 and the right control lever 1621 is configured to be controllably rotated about a first axis 201 between a first forward position 202, a neutral position 203, and a first backward position 204. The first axis 201 is substantially perpendicular to a vehicle body extending direction of the garden work vehicle. During rotation, when the control lever rotates towards a front end of the frame 1, the control lever rotates forward and is in the forward position, and a limit position reachable by the control lever when rotating forward is the first forward position 202. When the control lever rotates towards a rear end of the frame 1, the control lever rotates backward and is in the backward position, and a limit position reachable by the control lever when rotating backward is the first backward position 204. When the control lever maintains a perpendicular or substantially perpendicular positional relationship with the frame 1, the control lever is in the neutral position 203.

In some embodiments, a limiting plate assembly is further disposed in the control mechanism 16. The limiting plate assembly includes a first limiting plate arranged in the left control assembly 161 and a second limiting plate arranged in the right control assembly 162. Limiting grooves are formed in the first limiting plate and the second limiting plate to limit rotation ranges of the left control lever 1611 and the right control lever 1621.

By taking the first limiting plate as an example, when the left control lever 1611 is rotated about the first axis 201, it indicates that the left control lever 1611 rotates in the limiting groove of the first limiting plate. A front end and a rear end of the limiting groove correspond to the first forward position 202 and the first backward position 204 reachable by the left control lever 1611.

The rotation detection module 163 is arranged corresponding to the respective control lever. Specifically, the rotation detection module 163 may be arranged at a position where the control lever intersects the first axis 201, and be configured to detect a pivoting direction and angular displacement of the corresponding control lever, and to generate angular displacement information.

In some embodiments, the rotation detection module 163 may adopt a Hall angle sensor. FIG. 7 is a schematic diagram of a corresponding relationship between angular displacement information outputted by the Hall angle sensor when serving as the rotation detection module 163 and a pivoting direction and angular displacement of the corresponding control lever.

Exemplarily, a mechanical angular displacement of the control lever about the first axis 201 ranges from +20° to -20°. An angle of a forward rotation of the control lever, i.e., an angle of a rotation of the control lever towards the first forward position 202, may be defined as positive, and the corresponding angle of a backward rotation of the control lever may be defined as negative. Alternatively, the angle of the backward rotation of the control lever, i.e., the angle of the rotation of the control lever towards the first backward position 204, may be defined as positive, and the corresponding angle of the forward rotation of the control lever may be defined as negative.

The Hall angle sensor may output the angular displacement information in the form of a voltage signal, and a range of an output voltage signal corresponding to an angular displacement range of the control lever is [0, 5V]. As shown in FIG. 7, a voltage value outputted by the Hall angle sensor has a linear proportional relationship with the angular displacement of the control lever.

As shown in FIG. 8, the drive controller module 164 is communicatively connected to the rotation detection module 163 to receive the angular displacement information generated by the rotation detection module 163. Further, the drive controller module 164 is configured to control the rotation direction and the rotation speed of the drive motor 143 in the corresponding drive assembly based on the angular displacement information.

As shown in FIG. 9, in the garden work vehicle provided by one or more embodiments of the present disclosure, the drive controller module 164 is configured to control the rotation direction and the rotation speed of the drive motor in the corresponding driving assembly based on the angular displacement information by using steps S101 and S102.

At step S101, the pivoting direction and the angular displacement of the corresponding control lever are determined based on the angular displacement information.

The drive controller module 164 may determine the pivoting direction and the angular displacement of the corresponding control lever based on the angular displacement information.

At step S102, the rotation direction and the rotation speed of an output shaft of the drive motor are controlled based on the pivoting direction.

In response to a forward rotation of the control lever, the output shaft is controlled to output power in a first rotation direction to drive the drive wheel forward.

In response to a backward rotation of the control lever, the output shaft is controlled to output power in a second rotation direction to drive the drive wheel backward.

In addition, the rotation speed of the output shaft of the drive motor 143 is proportionally controlled based on the angular displacement.

As shown in FIG. 10, the garden work vehicle further includes an auxiliary control mechanism 18. The auxiliary control mechanism 18 may be integrated into a vehicle control unit (VCU) of the garden work vehicle. Alternatively, an independent controller module may be provided in the garden work vehicle as the auxiliary control mechanism 18. The VCU is configured to adjust an overall operating state of the garden work vehicle, including controlling the operating states of the functional mechanism 12 and the drive mechanism 14, and cooperating with the control mechanism 16 to achieve more refined control.

It can be understood by those skilled in the art that the drive controller modules 164 in the left control assembly 161 and the right control assembly 162 may also be integrated with the VCU, which can reduce an entire vehicle communication line and lower production costs while more facilitating communication with the VCU.

The auxiliary control mechanism 18 is configured to monitor the traveling state of the garden work vehicle, to determine whether the garden work vehicle is traveling abnormally, and to perform a calibration operation in response to the garden work vehicle traveling abnormally, to timely eliminate a vehicle traveling abnormality.

In some embodiments, the auxiliary control mechanism 18 includes a control state sensing component 181, a traveling state sensing component 182, and a calibration controller component 183.

The control state sensing component 181 is configured to determine a control state of a user with respect to the control mechanism 16. The control state may include a straight-line control state and a non-straight-line control state. The straight-line control state is used to characterize a control intention of the user with respect to straight-line traveling of the garden work vehicle. The non-straight-line control state may characterize a control intention of the user with respect to non-straight-line traveling of the garden work vehicle, such as user's intentions of controlling the garden work vehicle to turn left, turn right, and traveling backward.

In some embodiments, the control state sensing component 181 may use detection results of the rotation detection modules 163 in the left control assembly 161 and the right control assembly 162 to determine a specific control state of the user with respect to the control mechanism 16. For example, when it is determined based on the detection results of the rotation detection modules 163 in the left control assembly 161 and the right control assembly 162 that each of the left control lever 1611 and the right control lever 1621 rotates forward and the angular displacements of both the left control lever 1611 and the right control lever 1621 are the same or substantially the same, the control state sensing component 181 may determine that the control state of the user with respect to the control mechanism 16 is the straight-line control state.

The traveling state sensing component 182 is configured to determine the traveling state of the garden work vehicle. The traveling state may include a straight-line traveling state and a non-straight-line traveling state. In some embodiments, the traveling state sensing component 182 may use a vehicle body attitude sensor disposed in the garden work vehicle to determine the traveling state. For example, when it is determined that the garden work vehicle deflects during traveling using the vehicle body attitude sensor, it can be determined that the garden work vehicle is in the non-straight-line traveling state.

The calibration controller component 183 is configured to compare the control state with the traveling state to determine whether the control state match with the traveling state. In response to a mismatch between the traveling state and the control state, the calibration controller component 183 may determine that the garden work vehicle is traveling abnormally.

When it is determined that the garden work vehicle is traveling abnormally, the calibration controller component 183 may further adjust the operating state of the drive mechanism 14 to match an actual traveling state of the garden work vehicle with the control state of the user with respect to the control mechanism 16. Specifically, the calibration controller component 183 may adjust output power of the drive motor 143 in the left driving assembly 141 and output power of the drive motor 143 in the right driving assembly 142, thereby adjusting the rotation speeds of the left and right drive wheels 144. By changing a differential speed between the left drive wheel and the right drive wheel, the traveling state is adjusted to match the control state, thereby eliminating the traveling abnormality of the garden work vehicle.

In some embodiments, the auxiliary control mechanism 18 may further receive an active calibration instruction from the user and perform a calibration operation in response to the active calibration instruction.

The user may operate a human-machine interaction control panel in the garden work vehicle to input the active calibration instruction. After receiving the active calibration instruction, the auxiliary control mechanism 18 controls the control state sensing component 181 and the traveling state sensing component 182 to sense and determine the control state and the traveling state, respectively. Then, the calibration controller component 183 is used to compare the control state with the traveling state. In response to the mismatch between the control state and the traveling state, the calibration controller component 183 is further used to perform the calibration operation to control the operating state of the drive mechanism 14 and adjust the actual traveling state of the garden work vehicle, to match the actual traveling state with the control state, thereby eliminating the vehicle traveling abnormality.

In the garden work vehicle, the control state sensing component and the traveling state sensing component are used to perform real-time monitoring and sensing on the control state of the user with respect to the control mechanism and the actual traveling state of the garden work vehicle. The calibration controller component is used to compare the control state sensed by the control state sensing component with the traveling state sensed by the traveling state sensing component in real time, which can perform timely detection to determine an abnormal traveling state that may occur in the garden work vehicle. Further, when a traveling abnormality occurs in the garden work vehicle, the calibration controller component is used to adjust the operating state of the drive mechanism in the garden work vehicle, which can timely adjust the traveling state to match the control state, realizing straight-line traveling calibration and eliminating the traveling abnormality of the vehicle. This approach can ensure that the garden work vehicle can always accurately and correctly respond to the control intention of the user, significantly optimizing the user experience.

Based on the same objective, the embodiments of the present disclosure further provide a riding mower.

As shown in FIG. 3, the riding mower provided by one or more embodiments of the present disclosure includes: a frame 1, a mowing mechanism 12 connected to the frame, a drive mechanism 14, and a control mechanism 16.

The frame 1 extends at least partially parallel to a front-rear direction. A load-carrying mechanism 100 may be arranged on the frame 1. The load-carrying mechanism 100 is configured to carry an operator of the riding mower and may include at least one of a seat or a standing platform. FIG. 3 exemplarily shows only a case where the load-carrying mechanism 100 includes a seat. The seat or the standing platform is used for the operator to sit or stand on. That is, the riding mower may provide a riding operating mode or a standing operating mode. Further, a structure of the seat and a structure of the standing platform may be flexibly switched, i.e., the operating mode of the riding mower may be flexibly switched between the riding operating mode and the standing operating mode based on actual needs of the operator. A hand-held operation component may also be arranged on the frame 1. Based on the hand-held operation component, the riding mower may further provide a walk-behind operating mode.

The mowing mechanism 12 is connected to the frame 1. The mowing mechanism 12 includes a mowing element, a mowing motor configured to drive the mowing element to rotate at high speed, and a control module corresponding to the mowing motor.

In some embodiments, the mowing mechanism 12 may include one or more mowing elements and one or more mowing motors provided in correspondence with the one or more mowing elements. For example, in some embodiments, the mowing element includes 3 blades, and the number of corresponding mowing motors is also set to 3. In some specific implementations, the mowing mechanism 12 further includes a control module provided in correspondence with the mowing motors. The control module includes a control chip, such as an MCU or an ARM.

In some embodiments, the mowing mechanism 12 may also be a cleaning element for implementing a cleaning function. It can be understood that in some embodiments, the mowing mechanism may also be replaced with other functional components, such as components for snow removal, snow blowing, snow plowing, and flushing. Those skilled in the art should be able to adaptively replace various functional components without creative effort, all of which should fall within the protection scope of this embodiment.

As shown in FIG. 3, the drive mechanism 14 is configured to drive the riding mower to travel within garden scenarios such as lawns, gardens, fences, greens, or other road surfaces. In some implementations, the drive mechanism 14 includes a left driving assembly 141 and a right driving assembly 142. The left driving assembly 141 is arranged on a left side of the frame, and the right driving assembly 142 is arranged on a right side of the frame. Each of the left driving assembly 141 and the right driving assembly 142 includes a drive motor 143 and a drive wheel 144 mechanically coupled to the drive motor 143. The drive motor 143 may transmit power to the driving wheel 144 to drive the driving wheel 144 to rotate, thereby driving the riding mower to move.

When the drive motors 143 in the left driving assembly 141 and the right driving assembly 142 drive the corresponding driving wheels 144 at different powers, a rotation speed difference is generated between left and right driving wheels 144, thereby enabling the riding mower to turn.

As shown in FIG. 2, the riding mower further includes a power supply system 102 configured to supply power to the mowing mechanism 12, the drive mechanism 14, and the control mechanism 16.

The power supply system 102 is arranged on the frame 1 and detachably connected to the frame 1. The power supply system 102 includes a plurality of battery units. The plurality of battery units may be at least one of a first-specification battery pack and a second-specification battery pack. The specification differences between the first-specification battery pack and the second-specification battery pack include, but are not limited to, differences in battery pack capacity, voltage, internal resistance, weight, size, energy density, cell type, state of charge information, battery health state information, and other aspects.

In some embodiments, the difference between the first-specification battery pack and the second-specification battery pack lies in the capacity. The capacity of the first-specification battery pack is greater than the capacity of the second-specification battery pack. The second-specification battery pack is configured to supply power to hand-held garden tools. For example, the second-specification battery pack may supply power to garden tools such as grass trimmers, pruners, blowers, and chain saws. In addition, the second-specification battery pack may also supply power to torque output tools such as electric drills and electric hammers, supply power to sawing tools such as circular saws, jigsaws, and reciprocating saws, or supply power to grinding tools such as angle grinders and sanders.

In some embodiments, the difference between the first-specification battery pack and the second-specification battery pack lies in different types of battery cells used. For example, the first-specification battery pack and the second-specification battery pack may adopt a lithium iron phosphate cell and a ternary lithium cell, respectively. The plurality of battery units in the power supply system may also adopt a nickel-chromium battery cell, a lead-acid battery cell, a graphene battery cell, or the like.

The use of at least one of the first-specification battery pack and the second-specification battery pack as the plurality of battery units in the power supply system 102 allows the multi-purpose vehicle may be compatible with battery packs of different specifications, to meet the requirements for high-power operating while also being adaptable to a hand-held electric garden tool, which can make an operating mode of the operator more flexible.

As shown in FIG. 2, the control mechanism 16 is coupled to the drive mechanism 14 and configured to control an operating state of the drive mechanism 14 to adjust a traveling state of the riding mower.

In some implementations, corresponding to the left driving assembly 141 and the right driving assembly 142 in the drive mechanism 14, the control mechanism 16 is set to include a left control assembly 161 and a right control assembly 162. The left control assembly 161 is coupled to the left driving assembly 141 to control an operating state of the left driving assembly 141. The right control assembly 162 is coupled to the right driving assembly 142 to control an operating state of the right driving assembly 142.

As shown in FIG. 4 to FIG. 8, the left control assembly 161 includes a left control lever 1611, and the right control assembly 162 includes a right control lever 1621. Each of the left control assembly 161 and the right control assembly 162 further includes a rotation detection module 163 and a drive controller module 164.

As shown in FIG. 5 and FIG. 6, each of the left control lever 1611 and the right control lever 1621 is configured to be controllably rotated about a first axis 201 between a first forward position 202, a neutral position 203, and a first backward position 204. The first axis 201 is substantially perpendicular to a vehicle body extending direction of the riding mower. During rotation, when the control lever rotates towards a front end of the frame 1, the control lever rotates forward and is in the forward position, and a limit position reachable by the control lever when rotating forward is the first forward position 202. When the control lever rotates towards a rear end of the frame 1, the control lever rotates backward and is in the backward position, and a limit position reachable by the control lever when rotating backward is the first backward position 204. When the control lever maintains a perpendicular or substantially perpendicular positional relationship with the frame 1, the control lever is in the neutral position 203.

In some embodiments, a limiting plate assembly is further disposed in the control mechanism 16. The limiting plate assembly includes a first limiting plate arranged in the left control assembly 161 and a second limiting plate arranged in the right control assembly 162. Limiting grooves are formed in the first limiting plate and the second limiting plate to limit rotation ranges of the left control lever 1611 and the right control lever 1621.

By taking the first limiting plate as an example, when the left control lever 1611 is rotated about the first axis 201, it indicates that the left control lever 1611 rotates in the limiting groove of the first limiting plate. A front end and a rear end of the limiting groove correspond to the first forward position 202 and the first backward position 204 reachable by the left control lever 1611.

The rotation detection module 163 is arranged corresponding to the respective control lever. Specifically, the rotation detection module 163 may be arranged at a position where the control lever intersects the first axis 201, and be configured to detect a pivoting direction and angular displacement of the corresponding control lever, and to generate angular displacement information.

In some embodiments, the rotation detection module 163 may adopt a Hall angle sensor. FIG. 7 is a schematic diagram of a corresponding relationship between angular displacement information outputted by the Hall angle sensor when serving as the rotation detection module 163 and a pivoting direction and angular displacement of the corresponding control lever.

Exemplarily, a mechanical angular displacement of the control lever about the first axis 201 ranges from +20° to -20°. An angle of a forward rotation of the control lever, i.e., an angle of a rotation of the control lever towards the first forward position 202, may be defined as positive, and the corresponding angle of a backward rotation of the control lever may be defined as negative. Alternatively, the angle of the backward rotation of the control lever, i.e., the angle of the rotation of the control lever towards the first backward position 204, may be defined as positive, and the corresponding angle of the forward rotation of the control lever may be defined as negative.

The Hall angle sensor may output the angular displacement information in the form of a voltage signal, and a range of an output voltage signal corresponding to an angular displacement range of the control lever is [0, 5V]. As shown in FIG. 7, a voltage value outputted by the Hall angle sensor has a linear proportional relationship with the angular displacement of the control lever.

As shown in FIG. 8, the drive controller module 164 is communicatively connected to the rotation detection module 163 to receive the angular displacement information generated by the rotation detection module 163. Further, the drive controller module 164 is configured to control the rotation direction and the rotation speed of the drive motor 143 in the corresponding drive assembly based on the angular displacement information.

As shown in FIG. 9, in the riding mower provided by one or more embodiments of the present disclosure, the drive controller module 164 is configured to control the rotation direction and the rotation speed of the drive motor in the corresponding driving assembly based on the angular displacement information by using steps S101 and S102.

At step S101, the pivoting direction and the angular displacement of the corresponding control lever are determined based on the angular displacement information.

The drive controller module 164 may determine the pivoting direction and the angular displacement of the corresponding control lever based on the angular displacement information.

At step S102, the rotation direction and the rotation speed of an output shaft of the drive motor are controlled based on the pivoting direction.

In response to a forward rotation of the control lever, the output shaft is controlled to output power in a first rotation direction to drive the drive wheel forward.

In response to a backward rotation of the control lever, the output shaft is controlled to output power in a second rotation direction to drive the drive wheel backward.

In addition, the rotation speed of the output shaft of the drive motor 143 is proportionally controlled based on the angular displacement.

As shown in FIG. 10, the riding mower further includes an auxiliary control mechanism 18. The auxiliary control mechanism 18 may be integrated into a vehicle control unit (VCU) of the riding mower. Alternatively, an independent controller module may be provided in the riding mower as the auxiliary control mechanism 18. The VCU is configured to adjust an overall operating state of the riding mower, including controlling the operating states of the mowing mechanism 12 and the drive mechanism 14, and cooperating with the control mechanism 16 to achieve more refined control.

It can be understood by those skilled in the art that the drive controller modules 164 in the left control assembly 161 and the right control assembly 162 may also be integrated with the VCU, which can reduce an entire vehicle communication line and lower production costs while more facilitating communication with the VCU.

The auxiliary control mechanism 18 is configured to monitor the traveling state of the riding mower, to determine whether the riding mower is traveling abnormally, and to perform a calibration operation in response to the riding mower traveling abnormally, to timely eliminate a vehicle traveling abnormality.

In some embodiments, the auxiliary control mechanism 18 includes a control state sensing component 181, a traveling state sensing component 182, and a calibration controller component 183.

The control state sensing component 181 is configured to determine a control state of a user with respect to the control mechanism 16. The control state may include a straight-line control state and a non-straight-line control state. The straight-line control state is used to characterize a control intention of the user with respect to straight-line traveling of the riding mower. The non-straight-line control state may characterize a control intention of the user with respect to non-straight-line traveling of the riding mower, such as user's intentions of controlling the riding mower to turn left, turn right, and traveling backward.

In some embodiments, the control state sensing component 181 may use detection results of the rotation detection modules 163 in the left control assembly 161 and the right control assembly 162 to determine a control state of the user with respect to the control mechanism 16. For example, when it is determined based on the detection results of the rotation detection modules 163 in the left control assembly 161 and the right control assembly 162 that each of the left control lever 1611 and the right control lever 1621 rotates forward and the angular displacements of both the left control lever 1611 and the right control lever 1621 are the same or substantially the same, the control state sensing component 181 may determine that the control state of the user with respect to the control mechanism 16 is the straight-line control state.

The traveling state sensing component 182 is configured to determine the traveling state of the riding mower. The traveling state may include a straight-line traveling state and a non-straight-line traveling state. In some embodiments, the traveling state sensing component 182 may use a vehicle body attitude sensor disposed in the riding mower to determine the traveling state. For example, when it is determined that the riding mower deflects during traveling using the vehicle body attitude sensor, it can be determined that the riding mower is in the non-straight-line traveling state.

The calibration controller component 183 is configured to compare the control state with the traveling state to determine whether the control state match with the traveling state. In response to a mismatch between the traveling state and the control state, the calibration controller component 183 may determine that the riding mower is traveling abnormally.

When it is determined that the riding mower is traveling abnormally, the calibration controller component 183 may further adjust the operating state of the drive mechanism 14 to match an actual traveling state of the riding mower with the control state of the user with respect to the control mechanism 16. Specifically, the calibration controller component 183 may adjust output power of the drive motor 143 in the left driving assembly 141 and output power of the drive motor 143 in the right driving assembly 142, thereby adjusting the rotation speeds of the left and right drive wheels 144. By changing a differential speed between the left drive wheel and the right drive wheel, the traveling state is adjusted to match the control state, thereby eliminating the traveling abnormality of the riding mower.

In some embodiments, the auxiliary control mechanism 18 may further receive an active calibration instruction from the user and perform a calibration operation in response to the active calibration instruction.

The user may operate a human-machine interaction control panel in the riding mower to input the active calibration instruction. After receiving the active calibration instruction, the auxiliary control mechanism 18 controls the control state sensing component 181 and the traveling state sensing component 182 to sense and determine the control state and the traveling state, respectively. Then, the calibration controller component 183 is used to compare the control state with the traveling state. In response to the mismatch between the control state and the traveling state, the calibration controller component 183 is further used to perform the calibration operation to control the operating state of the drive mechanism 14 and adjust the actual traveling state of the riding mower, to match the actual traveling state with the control state, thereby eliminating the vehicle traveling abnormality.

In the riding mower, the control state sensing component and the traveling state sensing component are used to perform real-time monitoring and sensing on the control state of the user with respect to the control mechanism and the actual traveling state of the riding mower. The calibration controller component is used to compare the control state sensed by the control state sensing component with the traveling state sensed by the traveling state sensing component in real time, which can perform timely detection to determine an abnormal traveling state that may occur in the riding mower. Further, when a traveling abnormality occurs in the riding mower, the calibration controller component is used to adjust the operating state of the drive mechanism in the riding mower, which can timely adjust the traveling state to match the control state, realizing straight-line traveling calibration and eliminating the traveling abnormality of the vehicle. This approach can ensure that the riding mower can always accurately and correctly respond to the control intention of the user, significantly optimizing the user experience.

It should be noted that the method according to one or more embodiments of the present disclosure may be executed by a single device, such as a computer or a server. In another embodiment, the method according to the embodiments may be applied in a distributed scenario, where a plurality of devices cooperate with each other to complete the method. In such a distributed scenario, one of the plurality of devices may only execute one or more steps of the method according to one or more embodiments of the present disclosure, and the plurality of devices interact with each other to complete the described method.

It should be noted that the specific embodiments of the present disclosure have been described above. Other embodiments are within the scope of the appended claims. In some cases, the actions or steps recorded in the claims may be executed in a different order than in the embodiments and still achieve the desired results. In addition, the processes depicted in the accompanying drawings do not necessarily require the specific order or sequential order shown to achieve the desired results. In certain implementations, multitasking and parallel processing are also possible or may be advantageous.

For the convenience of description, the above device is described by dividing its functions into various modules. Of course, when implementing one or more embodiments of the present disclosure, the functions of each module may be implemented in one or more pieces of software and/or hardware.

The devices of the above embodiments are used to implement the corresponding methods in the foregoing embodiments and have the beneficial effects of the corresponding method embodiments, which are not repeated here.

Those skilled in the art can understand that implementing all or part of the processes in the methods of the above embodiments may be accomplished by instructing relevant hardware through a computer program. The program may be stored in a computer-readable storage medium. When the program is executed, the method according to the embodiments may be implemented. The storage medium may be a magnetic disk, an optical disc, a Read-Only Memory (ROM), a Random Access Memory (RAM), a Flash Memory, a Hard Disk Drive (HDD), a Solid-State Drive (SSD), of a combination of the foregoing.

The systems, devices, modules, or units explained in the above embodiments may be specifically implemented by computer chips or entities, or by products with certain functions. For the convenience of description, the above device is described by dividing its functions into various units. Of course, when implementing the present disclosure, the function of each unit may be implemented in one or more pieces of software and/or hardware.

Those skilled in the art will appreciate that embodiments of the present disclosure may be provided as a method, a system, or a computer program product. Accordingly, the present disclosure may take the form of a hardware embodiment, a software embodiment, or an embodiment in combination with software and hardware. Moreover, the present disclosure may take the form of the computer program product that is embodied on one or more computer-usable storage media (including but not limited to disk memories and optical memories, etc.) including computer-usable program codes.

It should also be noted that the terms "comprise", "include", or any other variants thereof are intended to cover non-exclusive inclusion, so that a process, method, commodity, or device including a series of elements not only includes those elements but also includes other elements not explicitly listed, or elements inherent to such a process, method, commodity, or device. Without further restrictions, an element defined by the phrase "including a..." does not exclude the existence of other identical elements in the process, method, commodity, or device including the element.

The various embodiments in the present disclosure are described in a progressive manner, and the same or similar parts between the various embodiments may be referred to each other. Each embodiment focuses on the differences from other embodiments. In particular, for the system embodiments, since they are basically similar to the method embodiments, the description is relatively simple, and the relevant parts may be referred to the partial description of the method embodiments.

It should be understood by those skilled in the art that: the discussion of any of the above embodiments is merely illustrative and is not intended to imply that the scope of the present disclosure (including the claims) is limited to such examples. In the spirit of the present disclosure, the technical features in the above embodiments or different embodiments may also be combined, the steps may be implemented in any order, and there are numerous other variations of various aspects of one or more embodiments of the present disclosure as described above, which have not been provided in detail for the sake of brevity.

In addition, for the purpose of simplifying the description and discussion, and so as not to obscure one or more embodiments of the present disclosure, well-known power supply/ground connections to integrated circuit (IC) chips and other components may or may not be shown in the accompanying drawings. In addition, devices may be shown in block diagram form to avoid obscuring one or more embodiments of the present disclosure, and this also takes into account the fact that implementation details of these block diagram devices are highly dependent on the platform on which one or more embodiments of the present disclosure are to be implemented (i.e., these details should be fully within the understanding of those skilled in the art). Where specific details (such as circuits) are set forth to describe exemplary embodiments of the present disclosure, it will be apparent to those skilled in the art that one or more embodiments of the present disclosure may be practiced without these specific details or with variations thereof. Therefore, these descriptions should be regarded as illustrative rather than restrictive.

Although the present disclosure has been described in conjunction with the specific embodiments thereof, based on the foregoing description, many substitutions, modifications, and variations of these embodiments will be apparent to those of ordinary skill in the art.

One or more embodiments of the present disclosure are intended to cover all such substitutions, modifications, and variations that fall within the broad scope of the appended claims. Therefore, any omissions, modifications, equivalent substitutions, improvements, etc., made within the spirit and principles of one or more embodiments of the present disclosure shall fall within the protection scope of the present disclosure.

**Claims**

1. A vehicle control method, comprising:

   obtaining calibration request information, wherein the calibration request information is used to request control of vehicle traveling based on a preset trajectory;
   obtaining a current operating parameter of a target vehicle based on the calibration request information, wherein the operating parameter comprises at least one of an attitude parameter, a heading angle parameter, or a displacement parameter;
   calculating target compensation data in response to a mismatch between the operating parameter and the preset trajectory, wherein the target compensation data is used to correct traveling deviation of the vehicle to make the vehicle travel in accordance with the preset trajectory; and
   correcting a driving mode of the vehicle based on the target compensation data, to cause the vehicle to travel along the preset trajectory.

2. The vehicle control method according to claim 1, wherein prior to obtaining the calibration request information, the method further comprises:

   detecting whether a calibration function is activated;
   obtaining a first control parameter and a second control parameter of the target vehicle;
   calculating a control deviation value between the first control parameter and the second control parameter; and
   generating the calibration request information in response to the control deviation value being within a preset range and the calibration function being activated, wherein:

      the first control parameter is used to control the vehicle to travel to the left; and
      the second control parameter is used to control the vehicle to travel to the right.

3. The vehicle control method according to claim 1, wherein:

the operating parameter of the vehicle comprises a target attitude angle; and
obtaining the operating parameter of the vehicle comprises:

obtaining first data transmitted by a first sensor and second data transmitted by a second sensor; and
performing fusion processing on the first data and the second data based on an attitude resolution algorithm to obtain the target attitude angle, wherein the attitude angle refers to an angle of a sensor in a world coordinate system where the vehicle is located.

4. The vehicle control method according to claim 1, wherein prior to calculating the target compensation data, the method further comprises:

obtaining a type of the preset trajectory, wherein the type comprises at least one of straight-line traveling, right-turn traveling, or left-turn traveling;
obtaining, based on the type of the preset trajectory, a preset operating parameter matching the type of the preset trajectory; and
determining, in response to a mismatch between the current operating parameter and the preset operating parameter, that the current operating parameter does not match the preset trajectory.

5. The vehicle control method according to claim 1, wherein:

the operating parameter of the vehicle comprises a target attitude angle; and
calculating the target compensation data comprises:

obtaining a preset angle matching the preset trajectory;
calculating a target angle based on a difference between the target attitude angle and the preset angle;
obtaining a driving parameter of the vehicle; and
calculating the target compensation data based on the driving parameter of the vehicle and the target angle, wherein the target angle at least comprises one of a first angle and a second angle, wherein the first angle refers to an angle for driving the vehicle to deviate to the left to reduce the difference between the attitude angle and the preset angle, and wherein the second angle refers to an angle for driving the vehicle to deviate to the right to reduce the difference between the attitude angle and the preset angle.

6. The vehicle control method according to claim 5, wherein calculating the target compensation data comprises:

when the driving parameter of the vehicle comprises a control signal, calculating a target signal based on the target angle and generating the target compensation data based on the target signal, to cause the vehicle to return to the preset trajectory using the control signal;
when the driving parameter of the vehicle comprises an initial rotation speed, calculating a target rotation speed based on the target rotation speed, to cause the vehicle to return to the preset trajectory using the control signal; and
when the driving parameter of the vehicle comprises an initial torque, calculating a target torque based on the target angle, to cause the vehicle to return to the preset trajectory using the target torque.

7. The vehicle control method according to claim 5, wherein calculating the target compensation data comprises:

obtaining a preset compensation coefficient, historical compensation data calculated in a previous iteration, and a target angle calculated in a current iteration; and
calculating the target compensation data based on the preset compensation coefficient, the historical compensation data, and the target angle.

8. The vehicle control method according to claim 7, wherein correcting the driving mode of the vehicle comprises:

obtaining a current driving parameter of the vehicle, wherein the driving parameter comprises at least one of a control signal, a motor torque, or a motor rotation speed;
configuring the driving parameter based on the target compensation data; and
driving wheels to travel using the driving parameter.

9. A multi-purpose vehicle, comprising:

a drive mechanism, arranged on a frame of the multi-purpose vehicle and configured to drive the multi-purpose vehicle to travel;
a control mechanism, coupled to the drive mechanism and configured to control an operating state of the drive mechanism to adjust a traveling state of the multi-purpose vehicle; and an auxiliary control mechanism, configured to monitor the traveling state to determine whether the multi-purpose vehicle is traveling abnormally, and to perform a calibration operation in response to the multi-purpose vehicle traveling abnormally,

wherein the auxiliary control mechanism comprises:

a control state sensing component, configured to determine a control state of a user with respect to the control mechanism, the control state comprising a straight-line control state and a non-straight-line control state;

a traveling state sensing component, configured to determine the traveling state of the multi-purpose vehicle, the traveling state comprising a straight-line traveling state and a non-straight-line traveling state; and

a calibration controller component, configured to determine that the multi-purpose vehicle is traveling abnormally in response to a mismatch between the traveling state and the control state;

wherein the calibration controller component is further configured to adjust, in response to determining that the multi-purpose vehicle is traveling abnormally, the operating state of the drive mechanism to match the traveling state with the control state.

10. The multi-purpose vehicle according to claim 9, wherein:

the drive mechanism comprises a left driving assembly and a right driving assembly, the left driving assembly being arranged on a left side of the frame, and the right driving assembly being arranged on a right side of the frame, wherein each of the left driving assembly and the right driving assembly comprises a drive motor and a drive wheel mechanically coupled to the drive motor; and

the control mechanism comprises a left control assembly and a right control assembly, the left control assembly being arranged on the left side of the frame and coupled to the left driving assembly, the right control assembly being arranged on the right side of the frame and coupled to the right driving assembly, wherein the left control assembly comprises a left control lever, and the right control assembly comprises a right control lever, and wherein each of the left control assembly and the right control assembly further comprises a rotation detection module and a drive controller module, wherein:

each of the left control lever and the right control lever is configured to be controllably rotated about a first axis between a first forward position, a neutral position, and a first backward position;

the rotation detection module is configured to detect a pivoting direction and angular displacement of a corresponding control lever among the left control lever and the right control lever to generate angular displacement information; and

the drive controller module is configured to control, based on the angular displacement information, a rotation direction and a rotation speed of the drive motor in a corresponding driving assembly among the left driving assembly and the right driving assembly.

11. The multi-purpose vehicle according to claim 10, wherein when controlling, based on the angular displacement information, the rotation direction and the rotation speed of the drive motor in the corresponding driving assembly, the drive controller module is configured to:

determine, based on the angular displacement information, the pivoting direction and the angular displacement of the corresponding control lever;

control, based on the pivoting direction, the rotation direction and the rotation speed of an output shaft of the drive motor;

in response to a forward rotation of the control lever, control the output shaft to output power in a first rotation direction to drive the drive wheel forward;

in response to a backward rotation of the control lever, control the output shaft to output power in a second rotation direction to drive the drive wheel backward; and

proportionally control, based on the angular displacement, the rotation speed of the output shaft of the drive motor.

12. The multi-purpose vehicle according to claim 10, wherein when determining the control state, the control state sensing component is configured to:

determine whether both the left control lever and the right control lever are rotated forward or whether both the left control lever and the right control lever are rotated to the first forward position, wherein the forward rotation refers to rotation towards the first forward position;

in response to both the left control lever and the right control lever being rotated forward or both the left control lever and the right control lever being rotated to the first forward position, determine whether the left control lever and the right control lever are aligned; and

in response to the left control lever and the right control lever being aligned, determine that the control state of the user with respect to the control mechanism is the straight-line control state.

13. The multi-purpose vehicle according to claim 12, wherein determining whether both the left control lever and the right control lever are rotated forward comprises:

comparing the angular displacement information corresponding to each of the left control lever and the right control lever with a lower angular limit threshold to determine whether the angular displacement information is greater than the lower angular limit threshold; and

in response to the angular displacement information corresponding to each of the left control lever and the right control lever being greater than the lower angular limit threshold, determining that both the left control lever and the right control lever are rotated forward.

14. The multi-purpose vehicle according to claim 12, wherein determining whether both the left control lever and the right control lever are rotated to the first forward position comprises:

comparing the angular displacement information corresponding to each of the left control lever and the right control lever with an upper angular limit threshold to determine whether the angular displacement information is greater than the upper angular limit threshold; and

in response to the angular displacement information corresponding to each of the left control lever and the right control lever being greater than the upper angular limit threshold, determining that both the left control lever and the right control lever are rotated to the first forward position.

15. The multi-purpose vehicle according to claim 12, wherein determining whether the left control lever and the right control lever are aligned comprises:

determining an absolute value of a difference between the angular displacement information corresponding to the left control lever and the angular displacement information corresponding to the right control lever;

comparing the absolute value of the difference with an angular deviation threshold to determine whether the absolute value of the difference is greater than the angular deviation threshold; and

in response to the absolute value of the difference being not greater than the angular deviation threshold, determining that the left control lever and the right control lever are aligned.

16. The multi-purpose vehicle according to claim 12, wherein the control mechanism further comprises an alignment detection device configured to detect whether the left control lever and the right control lever are aligned.

17. The multi-purpose vehicle according to claim 16, wherein the alignment detection device comprises a signal transmitter and a signal receiver, the signal transmitter being configured to controllably transmit an alignment detection signal for reception by the signal receiver,

wherein the signal transmitter and the signal receiver are respectively arranged at ends of the left control lever and the right control lever that are away from the first axis, and the signal transmitter and the signal receiver are opposed to each other when the left control lever and the right control lever are aligned, and

wherein determining whether the left control lever and the right control lever are aligned comprises:

controlling the signal transmitter to transmit the alignment detection signal;

determining whether the signal receiver receives the alignment detection signal from the signal transmitter; and

in response to the signal receiver receiving the alignment detection signal, determining that the left control lever and the right control lever are aligned.

18. The multi-purpose vehicle according to claim 17, wherein the signal transmitter is an infrared signal transmitter, and the signal receiver is an infrared signal receiver.

19. The multi-purpose vehicle according to claim 17, wherein the signal transmitter is a laser signal transmitter, and the signal receiver is a laser signal receiver.

20. The multi-purpose vehicle according to claim 16, wherein the alignment detection device comprises a Hall sensing element and a magnetic element, the Hall sensing element being configured to sense a magnetic field strength generated by the magnetic element,

wherein the Hall sensing element and the magnetic element are respectively arranged at ends of the left control lever and the right control lever that are away from the first axis, and the Hall sensing element and the magnetic element are opposed to each other when the left control lever and the right control lever are aligned, and wherein determining whether the left control lever and the right control lever are aligned comprises:

obtaining a field strength signal generated by the Hall sensing element in response to the magnetic field strength; comparing the field strength signal with a preset field strength threshold to determine whether the field strength signal is greater than or equal to the preset field strength threshold; and in response to the field strength signal being greater than or equal to the preset field strength threshold, determining that the left control lever and the right control lever are aligned.

21. The multi-purpose vehicle according to claim 16, wherein the alignment detection device comprises an image recognition module and an image marker,

wherein the image recognition module and the image marker are respectively arranged at ends of the left control lever and the right control lever that are away from the first axis, and the image recognition module and the image marker are opposed to each other when the left control lever and the right control lever are aligned, and wherein determining whether the left control lever and the right control lever are aligned comprises:

controlling the image recognition module to perform an image recognition operation, and determining whether the image recognition module successfully recognizes the image marker; and in response to the image recognition module successfully recognizing the image marker, determining that the left control lever and the right control lever are aligned.

22. The multi-purpose vehicle according to claim 10, further comprising:

an inertial measurement module fixedly arranged with respect to the frame, the inertial measurement module being configured to monitor a motion state of the multi-purpose vehicle, wherein when determining the traveling state, the traveling state sensing component is configured to:

obtain motion state information generated by the inertial measurement module; determine whether a heading angle component in the motion state information is zero; in response to the heading angle component in the motion state information remaining zero, determine that the multi-purpose vehicle is in the straight-line traveling state; and in response to the heading angle component in the motion state information being non-zero, determine that the multi-purpose vehicle is in the non-straight-line traveling state, wherein the traveling state sensing component is further configured to determine, based on the heading angle component, a deflection angle of the multi-purpose vehicle in response to the multi-purpose vehicle being in the non-straight-line traveling state.

23. The multi-purpose vehicle according to claim 10, further comprising a caster wheel assembly arranged at a front end of the frame and rotatably connected to the frame,

wherein the caster wheel assembly comprises a caster wheel and a deflection detection module, the deflection detection module being configured to detect a deflection state of the caster wheel relative to the frame and generate deflection state information, and wherein when determining the traveling state, the traveling state sensing component is configured to:

obtain the deflection state information generated by the deflection detection module; determine, based on the deflection state information, whether a deflection angle of the caster wheel relative to the frame is zero; in response to the deflection angle of the caster wheel relative to the frame remaining zero, determine that the multi-purpose vehicle is in the straight-line traveling state; and in response to the deflection angle of the caster wheel relative to the frame being non-zero, determine that the multi-purpose vehicle is in the non-straight-line traveling state,

wherein the traveling state sensing component is further configured to: determine the deflection angle of the caster wheel relative to the frame as the deflection angle of the multi-purpose vehicle in response to the multi-purpose vehicle being in the non-straight-line traveling state.

24. The multi-purpose vehicle according to claim 23, wherein the caster wheel assembly further comprises a pivot shaft, and the caster wheel is rotatably connected to the frame through the pivot shaft,

wherein the front end of the frame is formed as a shaft sleeve for accommodating the pivot shaft and allowing the pivot shaft to rotate therein, wherein the deflection detection module comprises a detection element and an induction element, the induction element being fixedly arranged at an upper end of the pivot shaft, the detection element being arranged at an upper end cover of the shaft sleeve and positioned opposite to the induction element, wherein:

when the caster wheel rotates relative to the frame, the induction element fixedly arranged at the upper end of the pivot shaft rotates, and a relative motion occurs between the induction element and the detection element, and
the detection element is configured to generate the deflection state information based on the relative motion of the induction element relative to the detection element.

25. The multi-purpose vehicle according to claim 24, wherein the detection element is a rotation angle potentiometer.

26. The multi-purpose vehicle according to claim 24, wherein the detection element is a magnetic angle encoder.

27. The multi-purpose vehicle according to claim 24, wherein the detection element is an optoelectronic angle encoder.

28. The multi-purpose vehicle according to claim 24, wherein the detection element is a Hall effect angle sensor.

29. The multi-purpose vehicle according to claim 24, wherein the detection element is a rotary transformer.

30. The multi-purpose vehicle according to claim 23, wherein the deflection detection module is configured to use a voltage analog signal to characterize the deflection state information.

31. The multi-purpose vehicle according to claim 23, wherein the deflection detection module is configured to use a current analog signal to characterize the deflection state information.

32. The multi-purpose vehicle according to claim 23, wherein the deflection detection module is configured to use a resistance analog signal to characterize the deflection state information.

33. The multi-purpose vehicle according to claim 23, wherein the deflection detection module is configured to use a pulse width modulation signal to characterize the deflection state information.

34. The multi-purpose vehicle according to claim 23, wherein the deflection detection module is configured to use an ABZ three-phase encoded signal to characterize the deflection state information.

35. The multi-purpose vehicle according to claim 23, wherein the deflection detection module is configured to use a UVW three-phase encoded signal to characterize the deflection state information.

36. The multi-purpose vehicle according to claim 23, wherein a plurality of caster wheel assemblies are provided, wherein at least one of the plurality of caster wheel assemblies is provided with the deflection detection module configured to detect the deflection state of the corresponding caster wheel relative to the frame.

37. The multi-purpose vehicle according to claim 10, wherein when adjusting the operating state of the drive mechanism in response to determining that the multi-purpose vehicle is traveling abnormally, the calibration controller component is configured to:

determine a deflection angle of the multi-purpose vehicle; and
perform, based on the deflection angle, a compensation adjustment on a motion control parameter for the drive motor in at least one of the left driving assembly or the right driving assembly, wherein the motion control parameter comprises at least one of angular displacement information generated by the rotation detection module corresponding to the drive motor, the rotation speed of the drive motor or a torque of the drive motor.

38. The multi-purpose vehicle according to claim 37, wherein performing, based on the deflection angle, the compensation adjustment on the motion control parameter for the drive motor in at least one of the left driving assembly or the right driving assembly comprises:

determining a side pointed towards by the deflection angle as a lagging side; and

performing a forward iterative compensation adjustment on the motion control parameter for the drive motor corresponding to the lagging side, to cause the deflection angle to be gradually reduced until the deflection angle is maintained at zero,

wherein the forward iterative compensation adjustment comprises:

$$\Phi_k = \Phi_{k-1}\left(1 + c_s \times \frac{\theta_k}{\pi}\right),$$

wherein $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

39. The multi-purpose vehicle according to claim 37, wherein performing, based on the deflection angle, the compensation adjustment on the motion control parameter for the drive motor in at least one of the left driving assembly or the right driving assembly comprises:

determining a side deviated from by the deflection angle as a leading side; and

performing a reverse iterative compensation adjustment on the motion control parameter for the drive motor corresponding to the leading side, to cause the deflection angle to be gradually reduced until the deflection angle is maintained at zero,

wherein the reverse iterative compensation adjustment comprises:

$$\Phi_k = \Phi_{k-1}\left(1 - c_s \times \frac{\theta_k}{\pi}\right)$$

wherein $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_S$ denotes a correction parameter, with a value range of $0 < c_s \leq 2$.

40. The multi-purpose vehicle according to claim 37, wherein performing, based on the deflection angle, the compensation adjustment on the motion control parameter for the drive motor in at least one of the left driving assembly or the right driving assembly comprises:

determining a side pointed towards by the deflection angle as a lagging side, and determining a side deviated from by the deflection angle as a leading side; and

performing a bidirectional iterative compensation adjustment on the motion control parameter for the drive motor corresponding to the leading side and the motion control parameter for the drive motor corresponding to the lagging side, to cause the deflection angle to be gradually reduced until the deflection angle is maintained at zero,

wherein the bidirectional iterative compensation adjustment comprises:

$$\begin{cases} \Phi_k^z = \Phi_{k-1}^z\left(1 + c_z \times \dfrac{\theta_k}{\pi}\right) \\ \Phi_k^c = \Phi_{k-1}^c\left(1 - c_c \times \dfrac{\theta_k}{\pi}\right) \end{cases}$$

wherein $\Phi$ denotes the motion control parameter, $\Phi_{k-1}^z$ and $\Phi_k^z$ respectively denote the motion control parameters for the drive motor corresponding to the lagging side after the (k-1)th and k-th iterative compensations, $\Phi_{k-1}^c$ and $\Phi_k^c$ respectively denote the motion control parameters for the drive motor corresponding to the leading side after the (k-1)th and k-th iterative compensation, $\theta$ denotes the deflection angle, $\theta_k$ denotes the deflection angle determined prior to the k-th iterative compensation, $C_z$ and $C_c$ respectively denote correction parameters corresponding to the lagging side and the leading side, with corresponding value ranges of $0 < c_z \leq 2$ and $0 < c_c \leq 2$.

41. A multi-purpose vehicle, comprising:

a drive mechanism, arranged on a frame of the multi-purpose vehicle and configured to drive the multi-purpose vehicle to travel, wherein the drive mechanism comprises a left driving assembly and a right driving assembly, the left driving assembly being arranged on a left side of the frame, and the right driving assembly being arranged on a right side of the frame;
a control mechanism, coupled to the drive mechanism and configured to control an operating state of the drive mechanism to adjust a traveling state of the multi-purpose vehicle, wherein:

the control mechanism comprises a left control assembly and a right control assembly, the left control assembly being arranged on the left side of the frame and coupled to the left driving assembly, the right control assembly being arranged on the right side of the frame and coupled to the right driving assembly;
the left control assembly comprises a left control lever, and the right control assembly comprises a right control lever, and each of the left control assembly and the right control assembly further comprises an alignment detection device;
each of the left control lever and the right control lever is configured to be controllably rotated about a first axis between a first forward position, a neutral position, and a first backward position; and
the alignment detection device is configured to detect whether the left control lever and the right control lever are aligned; and

an auxiliary control mechanism, configured to monitor the traveling state to determine whether the multi-purpose vehicle is traveling abnormally, and to perform a calibration operation in response to the multi-purpose vehicle traveling abnormally;
wherein the auxiliary control mechanism comprises:

a control state sensing component, configured to determine a control state of a user with respect to the control mechanism based on a position where the left control lever is located, a position where the right control lever is located, and a detection result of the alignment detection device, the control state comprising a straight-line control state and a non-straight-line control state;
a traveling state sensing component, configured to determine the traveling state of the multi-purpose vehicle, the traveling state comprising a straight-line traveling state and a non-straight-line traveling state; and
a calibration controller component, configured to determine that the multi-purpose vehicle is traveling abnormally in response to a mismatch between the traveling state and the control state;
wherein the calibration controller component is further configured to adjust, in response to determining that the multi-purpose vehicle is traveling abnormally, the operating state of the drive mechanism to match the traveling state with the control state.

42. The multi-purpose vehicle according to claim 41, wherein:

each of the left driving assembly and the right driving assembly comprises a drive motor and a drive wheel mechanically coupled to the drive motor; and
the left control assembly comprises a left control lever, the right control assembly comprises a right control lever, and each of the left control assembly and the right control assembly further comprises a rotation detection module and a drive controller module, wherein:

the rotation detection module is configured to detect a pivoting direction and angular displacement of a corresponding control lever among the left control lever and the right control lever to generate angular displacement information; and
the drive controller module is configured to control, based on the angular displacement information, a rotation direction and a rotation speed of the drive motor in a corresponding driving assembly among the left driving assembly and the right driving assembly.

43. The multi-purpose vehicle according to claim 42, wherein when controlling, based on the angular displacement information, the rotation direction and the rotation speed of the drive motor in the corresponding driving assembly, the drive controller module is configured to:

determine, based on the angular displacement information, the pivoting direction and the angular displacement of the corresponding control lever;
control, based on the pivoting direction, the rotation direction and the rotation speed of an output shaft of the drive motor;
in response to a forward rotation of the control lever, control the output shaft to output power in a first rotation direction to drive the drive wheel forward;
in response to a backward rotation of the control lever, control the output shaft to output power in a second rotation direction to drive the drive wheel backward; and
proportionally control, based on the angular displacement, the rotation speed of the output shaft of the drive motor.

44. The multi-purpose vehicle according to claim 41, wherein when determining the control state of the user with respect to the control mechanism based on the position where the left control lever is located, the position where the right control lever is located, and the detection result of the alignment detection device, the control state sensing component is configured to:

determine whether both the left control lever and the right control lever are rotated forward or whether both the left control lever and the right control lever are rotated to the first forward position, wherein the forward rotation refers to rotation towards the first forward position;
in response to both the left control lever and the right control lever being rotated forward or both the left control lever and the right control lever being rotated to the first forward position, determine whether the left control lever and the right control lever are aligned based on the detection result of the alignment detection device; and
in response to the left control lever and the right control lever being aligned, determine that the control state of the user with respect to the control mechanism is the straight-line control state.

45. The multi-purpose vehicle according to claim 44, wherein determining whether both the left control lever and the right control lever are rotated forward comprises:

comparing the angular displacement information corresponding to each of the left control lever and the right control lever with a lower angular limit threshold to determine whether the angular displacement information is greater than the lower angular limit threshold; and
in response to the angular displacement information corresponding to each of the left control lever and the right control lever being greater than the lower angular limit threshold, determining that both the left control lever and the right control lever are rotated forward.

46. The multi-purpose vehicle according to claim 44, wherein determining whether both the left control lever and the right control lever are rotated to the first forward position comprises:

comparing the angular displacement information corresponding to each of the left control lever and the right control lever with an upper angular limit threshold to determine whether the angular displacement information is greater than the upper angular limit threshold; and
in response to the angular displacement information corresponding to each of the left control lever and the right control lever being greater than the upper angular limit threshold, determining that both the left control lever and the right control lever are rotated to the first forward position.

47. The multi-purpose vehicle according to claim 44, wherein the alignment detection device comprises a signal transmitter and a signal receiver, the signal transmitter being configured to controllably transmit an alignment detection signal for reception by the signal receiver,

wherein the signal transmitter and the signal receiver are respectively arranged at ends of the left control lever and the right control lever that are away from the first axis, and the signal transmitter and the signal receiver are opposed to each other when the left control lever and the right control lever are aligned, and
wherein determining whether the left control lever and the right control lever are aligned based on the detection result of the alignment detection device comprises:

controlling the signal transmitter to transmit the alignment detection signal;
determining whether the signal receiver receives the alignment detection signal from the signal transmitter; and
in response to the signal receiver receiving the alignment detection signal, determining that the left control lever and the right control lever are aligned.

48. The multi-purpose vehicle according to claim 47, wherein the signal transmitter is an infrared signal transmitter, and the signal receiver is an infrared signal receiver.

49. The multi-purpose vehicle according to claim 47, wherein the signal transmitter is a laser signal transmitter, and the signal receiver is a laser signal receiver.

50. The multi-purpose vehicle according to claim 44, wherein the alignment detection device comprises a Hall sensing element and a magnetic element, the Hall sensing element being configured to sense a magnetic field strength generated by the magnetic element,

wherein the Hall sensing element and the magnetic element are respectively arranged at ends of the left control lever and the right control lever that are away from the first axis, and the Hall sensing element and the magnetic element are opposed to each other when the left control lever and the right control lever are aligned, and wherein determining whether the left control lever and the right control lever are aligned comprises:

obtaining a field strength signal generated by the Hall sensing element in response to the magnetic field strength;
comparing the field strength signal with a preset field strength threshold to determine whether the field strength signal is greater than or equal to the preset field strength threshold; and
in response to the field strength signal being greater than or equal to the preset field strength threshold, determining that the left control lever and the right control lever are aligned.

51. The multi-purpose vehicle according to claim 44, wherein the alignment detection device comprises an image recognition module and an image marker,

wherein the image recognition module and the image marker are respectively arranged at ends of the left control lever and the right control lever that are away from the first axis, and the image recognition module and the image marker are opposed to each other when the left control lever and the right control lever are aligned, and wherein determining whether the left control lever and the right control lever are aligned comprises:

controlling the image recognition module to perform an image recognition operation, and determining whether the image recognition module successfully recognizes the image marker; and
in response to the image recognition module successfully recognizing the image marker, determining that the left control lever and the right control lever are aligned.

52. The multi-purpose vehicle according to claim 41, further comprising:

an inertial measurement module fixedly arranged with respect to the frame, the inertial measurement module being configured to monitor a motion state of the multi-purpose vehicle, wherein when determining the traveling state, the traveling state sensing component is configured to:

obtain motion state information generated by the inertial measurement module;
determine whether a heading angle component in the motion state information is zero;
in response to the heading angle component in the motion state information remaining zero, determine that the multi-purpose vehicle is in the straight-line traveling state;
in response to the heading angle component in the motion state information being non-zero, determine that the multi-purpose vehicle is in the non-straight-line traveling state,
wherein the traveling state sensing component is further configured to determine, based on the heading angle component, a deflection angle of the multi-purpose vehicle in response to the multi-purpose vehicle being in the non-straight-line traveling state.

53. The multi-purpose vehicle according to claim 41, wherein when adjusting the operating state of the drive mechanism in response to determining that the multi-purpose vehicle is traveling abnormally, the calibration controller component is configured to:

determine a deflection angle of the multi-purpose vehicle; and
perform, based on the deflection angle, a compensation adjustment on a motion control parameter for a drive motor in at least one of the left driving assembly or the right driving assembly, wherein the motion control parameter comprises at least one of angular displacement information generated by the rotation detection module corresponding to the drive motor, the rotation speed of the drive motor, or a torque of the drive motor.

54. The multi-purpose vehicle according to claim 53, wherein performing, based on the deflection angle, the compensation adjustment on the motion control parameter for the drive motor in at least one of the left driving assembly or the right driving assembly comprises:

determining a side pointed towards by the deflection angle as a lagging side;
performing a forward iterative compensation adjustment on the motion control parameter for the drive motor corresponding to the lagging side, to cause the deflection angle to be gradually reduced until the deflection angle is maintained at zero,

wherein the forward iterative compensation adjustment comprises:

$$\Phi_k = \Phi_{k-1}\left(1 + c_s \times \frac{\theta_k}{\pi}\right)$$

wherein $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

55. The multi-purpose vehicle according to claim 53, wherein performing, based on the deflection angle, the compensation adjustment on the motion control parameter for the drive motor in at least one of the left driving assembly or the right driving assembly comprises:

determining a side deviated from by the deflection angle as a leading side;
performing a reverse iterative compensation adjustment on the motion control parameter for the drive motor corresponding to the leading side, to cause the deflection angle to be gradually reduced until the deflection angle is maintained at zero,
wherein the reverse iterative compensation adjustment comprises:

$$\Phi_k = \Phi_{k-1}\left(1 - c_s \times \frac{\theta_k}{\pi}\right)$$

wherein $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

56. The multi-purpose vehicle according to claim 53, wherein performing, based on the deflection angle, the compensation adjustment on the motion control parameter for the drive motor in at least one of the left driving assembly or the right driving assembly comprises:

determining a side pointed towards by the deflection angle as a lagging side, and determining a side deviated from by the deflection angle as a leading side; and
performing a bidirectional iterative compensation adjustment on the motion control parameter for the drive motor corresponding to the leading side and the motion control parameter for the drive motor corresponding to the lagging side, to cause the deflection angle to be gradually reduced until the deflection angle is maintained at zero,
wherein the bidirectional iterative compensation adjustment comprises:

$$\begin{cases} \Phi_k^z = \Phi_{k-1}^z\left(1 + c_z \times \dfrac{\theta_k}{\pi}\right) \\ \Phi_k^c = \Phi_{k-1}^c\left(1 - c_c \times \dfrac{\theta_k}{\pi}\right) \end{cases}$$

wherein $\Phi$ denotes the motion control parameter, $\Phi_{k-1}^z$ and $\Phi_k^z$ respectively denote the motion control parameters for the drive motor corresponding to the lagging side after the (k-1)th and k-th iterative compensations, $\Phi_{k-1}^c$ and $\Phi_k^c$ respectively denote the motion control parameters for the drive motor corresponding to the leading side after the (k-1)th and k-th iterative compensation, $\theta$ denotes the deflection angle, $\theta_k$ denotes the deflection angle determined prior to the k-th iterative compensation, $C_z$ and $C_c$ respectively denote correction parameters corresponding to the lagging side and the leading side, with corresponding value ranges of $0 < c_z \leq 2$ and $0 < c_c \leq 2$.

57. A multi-purpose vehicle, comprising:

a drive mechanism, arranged on a frame of the multi-purpose vehicle and configured to drive the multi-purpose vehicle to travel;
a control mechanism, coupled to the drive mechanism and configured to control an operating state of the drive mechanism to adjust a traveling state of the multi-purpose vehicle;
a caster wheel assembly arranged at a front end of the frame and rotatably connected to the frame, wherein the caster wheel assembly comprises a caster wheel and a deflection detection module, the deflection detection module being configured to detect a deflection state of the caster wheel relative to the frame and generate deflection state information; and
an auxiliary control mechanism, configured to monitor the traveling state to determine whether the multi-purpose vehicle is traveling abnormally, and to perform a calibration operation in response to the multi-purpose vehicle traveling abnormally,

wherein the auxiliary control mechanism comprises:

a control state sensing component, configured to determine a control state of a user with respect to the control mechanism, the control state comprising a straight-line control state and a non-straight-line control state;

a traveling state sensing component, configured to determine the traveling state of the multi-purpose vehicle based on a detection result of the deflection detection module, the traveling state comprising a straight-line traveling state and a non-straight-line traveling state; and

a calibration controller component, configured to determine that the multi-purpose vehicle is traveling abnormally in response to a mismatch between the traveling state and the control state;

wherein the calibration controller component is further configured to adjust, in response to determining that the multi-purpose vehicle is traveling abnormally, the operating state of the drive mechanism to match the traveling state with the control state.

58. The multi-purpose vehicle according to claim 57, wherein when controlling, based on the angular displacement information, the rotation direction and the rotation speed of the drive motor in the corresponding driving assembly, the drive controller module is configured to:

determine, based on the angular displacement information, the pivoting direction and the angular displacement of the corresponding control lever;

control, based on the pivoting direction, the rotation direction and the rotation speed of an output shaft of the drive motor;

in response to a forward rotation of the control lever, control the output shaft to output power in a first rotation direction to drive the drive wheel forward;

in response to a backward rotation of the control lever, control the output shaft to output power in a second rotation direction to drive the drive wheel backward; and

proportionally control, based on the angular displacement, the rotation speed of the output shaft of the drive motor.

59. The multi-purpose vehicle according to claim 58, wherein when controlling, based on the angular displacement information, the rotation direction and the rotation speed of the drive motor in the corresponding driving assembly, the drive controller module is configured to:

determine, based on the angular displacement information, the pivoting direction and the angular displacement of the corresponding control lever;

control, based on the pivoting direction, the rotation direction and the rotation speed of the output shaft of the drive motor;

in response to the forward rotation of the control lever, control the output shaft to output power in the first rotation direction to drive the drive wheel forward;

in response to the backward rotation of the control lever, control the output shaft to output power in the second rotation direction to drive the drive wheel backward; and

proportionally control, based on the angular displacement, the rotation speed of the output shaft of the drive motor.

60. The multi-purpose vehicle according to claim 58, wherein when determining the control state, the control state sensing component is configured to:

determine whether both the left control lever and the right control lever are rotated forward or whether both the left control lever and the right control lever are rotated to the first forward position, wherein the forward rotation refers to rotation towards the first forward position;

in response to both the left control lever and the right control lever being rotated forward or both the left control lever and the right control lever being rotated to the first forward position, determine whether the left control lever and the right control lever are aligned; and

in response to the left control lever and the right control lever being aligned, determine that the control state of the user with respect to the control mechanism is the straight-line control state.

61. The multi-purpose vehicle according to claim 60, wherein determining whether both the left control lever and the right control lever are rotated forward comprises:

comparing the angular displacement information corresponding to each of the left control lever and the right control lever with a lower angular limit threshold to determine whether the angular displacement information is greater than the lower angular limit threshold; and

in response to the angular displacement information corresponding to each of the left control lever and the right control lever being greater than the lower angular limit threshold, determining that both the left control lever and the right control lever are rotated forward.

62. The multi-purpose vehicle according to claim 60, wherein determining whether both the left control lever and the right control lever are rotated to the first forward position comprises:

comparing the angular displacement information corresponding to each of the left control lever and the right control lever with an upper angular limit threshold to determine whether the angular displacement information is greater than the upper angular limit threshold; and in response to the angular displacement information corresponding to each of the left control lever and the right control lever being greater than the upper angular limit threshold, determining that both the left control lever and the right control lever are rotated to the first forward position.

63. The multi-purpose vehicle according to claim 60, wherein determining whether the left control lever and the right control lever are aligned comprises:

determining an absolute value of a difference between the angular displacement information corresponding to the left control lever and the angular displacement information corresponding to the right control lever; comparing the absolute value of the difference with an angular deviation threshold to determine whether the absolute value of the difference is greater than the angular deviation threshold; and in response to the absolute value of the difference being not greater than the angular deviation threshold, determining that the left control lever and the right control lever are aligned.

64. The multi-purpose vehicle according to claim 57, wherein determining the traveling state of the multi-purpose vehicle based on the detection result of the deflection detection module comprises:

obtaining the deflection state information generated by the deflection detection module; determining, based on the deflection state information, whether a deflection angle of the caster wheel relative to the frame is zero; in response to the deflection angle of the caster wheel relative to the frame remaining zero, determining that the multi-purpose vehicle is in the straight-line traveling state; and

in response to the deflection angle of the caster wheel relative to the frame being non-zero, determining that the multi-purpose vehicle is in the non-straight-line traveling state; wherein the traveling state sensing component is further configured to: determine, in response to the multi-purpose vehicle being in the non-straight-line traveling state, the deflection angle of the caster wheel relative to the frame as the deflection angle of the multi-purpose vehicle.

65. The multi-purpose vehicle according to claim 64, wherein the caster wheel assembly further comprises a pivot shaft, and the caster wheel is rotatably connected to the frame through the pivot shaft,

wherein the front end of the frame is formed as a shaft sleeve for accommodating the pivot shaft and allowing the pivot shaft to rotate therein, wherein the deflection detection module comprises a detection element and an induction element, the induction element being fixedly arranged at an upper end of the pivot shaft, the detection element being arranged at an upper end cover of the shaft sleeve and positioned opposite to the induction element, wherein:

when the caster wheel rotates relative to the frame, the induction element fixedly arranged at the upper end of the pivot shaft rotates, and a relative motion occurs between the induction element and the detection element, and the detection element is configured to generate the deflection state information based on the relative motion of the induction element relative to the detection element.

66. The multi-purpose vehicle according to claim 65, wherein the detection element is a rotation angle potentiometer.

67. The multi-purpose vehicle according to claim 65, wherein the detection element is a magnetic angle encoder.

68. The multi-purpose vehicle according to claim 65, wherein the detection element is an optoelectronic angle encoder.

69. The multi-purpose vehicle according to claim 65, wherein the detection element is a Hall effect angle sensor.

70. The multi-purpose vehicle according to claim 65, wherein the detection element is a rotary transformer.

**71.** The multi-purpose vehicle according to claim 57, wherein the deflection detection module is configured to use a voltage analog signal to characterize the deflection state information.

**72.** The multi-purpose vehicle according to claim 57, wherein the deflection detection module is configured to use a current analog signal to characterize the deflection state information.

**73.** The multi-purpose vehicle according to claim 57, wherein the deflection detection module is configured to use a resistance analog signal to characterize the deflection state information.

**74.** The multi-purpose vehicle according to claim 57, wherein the deflection detection module is configured to use a pulse width modulation signal to characterize the deflection state information.

**75.** The multi-purpose vehicle according to claim 57, wherein the deflection detection module is configured to use an ABZ three-phase encoded signal to characterize the deflection state information.

**76.** The multi-purpose vehicle according to claim 57, wherein the deflection detection module is configured to use a UVW three-phase encoded signal to characterize the deflection state information.

**77.** The multi-purpose vehicle according to claim 57, wherein a plurality of caster wheel assemblies are provided, wherein at least one of the plurality of caster wheel assemblies is provided with the deflection detection module configured to detect the deflection state of the corresponding caster wheel relative to the frame.

**78.** The multi-purpose vehicle according to claim 58, wherein when adjusting the operating state of the drive mechanism in response to determining that the multi-purpose vehicle is traveling abnormally, the calibration controller component is configured to:

    determine a deflection angle of the multi-purpose vehicle; and
    perform, based on the deflection angle, a compensation adjustment on a motion control parameter for the drive motor in at least one of the left driving assembly or the right driving assembly, wherein the motion control parameter comprises at least one of angular displacement information generated by the rotation detection module corresponding to the drive motor, the rotation speed of the drive motor or a torque of the drive motor.

**79.** The multi-purpose vehicle according to claim 78, wherein performing, based on the deflection angle, the compensation adjustment on the motion control parameter for the drive motor in at least one of the left driving assembly or the right driving assembly comprises:

    determining a side pointed towards by the deflection angle as a lagging side; and
    performing a forward iterative compensation adjustment on the motion control parameter for the drive motor corresponding to the lagging side, to cause the deflection angle to be gradually reduced until the deflection angle is maintained at zero,
    wherein the forward iterative compensation adjustment comprises:

$$\Phi_k = \Phi_{k-1}\left(1 + c_s \times \frac{\theta_k}{\pi}\right)$$

    wherein $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation, and $C_s$ denotes a correction parameter, with a value range of $0 < c_s \leq 2$.

**80.** The multi-purpose vehicle according to claim 78, wherein performing, based on the deflection angle, the compensation adjustment on the motion control parameter for the drive motor in at least one of the left driving assembly or the right driving assembly comprises:

    determining a side deviated from by the deflection angle as a leading side; and
    performing a reverse iterative compensation adjustment on the motion control parameter for the drive motor corresponding to the leading side, to cause the deflection angle to be gradually reduced until the deflection angle is maintained at zero,
    wherein the reverse iterative compensation adjustment comprises:

$$\Phi_k = \Phi_{k-1}\left(1 + c_s \times \frac{\theta_k}{\pi}\right)$$

    wherein $\Phi$ denotes the motion control parameter, $\Phi_{k-1}$ and $\Phi_k$ respectively denote the motion control parameters after the (k-1)th and k-th iterative compensations, $\theta$ denotes the deflection angle, $\theta_k$ denotes the deflection angle determined prior to the k-th iterative compensation,

and $C_s$ denotes a correction parameter, with a value range of $0 < c_s \leq 2$.

81. The multi-purpose vehicle according to claim 78, wherein performing, based on the deflection angle, the compensation adjustment on the motion control parameter for the drive motor in at least one of the left driving assembly or the right driving assembly comprises:

determining a side pointed towards by the deflection angle as a lagging side, and determining a side deviated from by the deflection angle as a leading side; and
performing a bidirectional iterative compensation adjustment on the motion control parameter for the drive motor corresponding to the leading side and the motion control parameter for the drive motor corresponding to the lagging side, to cause the deflection angle to be gradually reduced until the deflection angle is maintained at zero,
wherein the bidirectional iterative compensation adjustment comprises:

$$\begin{cases} \Phi_k^z = \Phi_{k-1}^z(1 + c_z \times \dfrac{\theta_k}{\pi}) \\ \Phi_k^c = \Phi_{k-1}^c(1 - c_c \times \dfrac{\theta_k}{\pi}) \end{cases}$$

wherein $\Phi$ denotes the motion control parameter, $\Phi_{k-1}^z$ and $\Phi_k^z$ respectively denote the motion control parameters for the drive motor corresponding to the lagging side after the (k-1)th and k-th iterative compensations, $\Phi_{k-1}^c$ and $\Phi_k^c$ respectively denote the motion control parameters for the drive motor corresponding to the leading side after the (k-1)th and k-th iterative compensation, $\theta$ denotes the deflection angle, $\theta_k$ denotes the deflection angle determined prior to the k-th iterative compensation, $C_z$ and $C_c$ respectively denote correction parameters corresponding to the lagging side and the leading side, with corresponding value ranges of $0 < c_z \leq 2$ and $0 < c_x \leq 2$

82. A garden work vehicle, comprising:

a drive mechanism, arranged on a frame of the garden work vehicle and configured to drive the garden work vehicle to travel;
a control mechanism, coupled to the drive mechanism and configured to control an operating state of the drive mechanism to adjust a traveling state of the garden work vehicle;

a functional mechanism, configured to controllably perform a specific garden operation function;
an auxiliary control mechanism, configured to monitor the traveling state to determine whether the garden work vehicle is traveling abnormally, and to perform a calibration operation in response to the garden work vehicle traveling abnormally,
wherein the auxiliary control mechanism comprises:

a control state sensing component, configured to determine a control state of a user with respect to the control mechanism, the control state comprising a straight-line control state and a non-straight-line control state;
a traveling state sensing component, configured to determine the traveling state of the garden work vehicle, the traveling state comprising a straight-line traveling state and a non-straight-line traveling state; and
a calibration controller component, configured to determine that the garden work vehicle is traveling abnormally in response to a mismatch between the traveling state and the control state;
wherein the calibration controller component is further configured to adjust, in response to determining that the garden work vehicle is traveling abnormally, the operating state of the drive mechanism to match the traveling state with the control state.

83. A riding mower, comprising:

a frame;
a load-carrying mechanism, fixedly arranged on the frame and configured to carry a user operating the riding mower;
a drive mechanism, arranged on the frame of the riding mower and configured to drive the riding mower to travel;
a control mechanism, coupled to the drive mechanism and configured to control an operating state of the drive mechanism to adjust a traveling state of the riding mower;
a mowing mechanism, configured to controllably perform a mowing function, the mowing mechanism comprising a mowing motor and a cutting blade assembly driven by the mowing motor;
an auxiliary control mechanism, configured to monitor the traveling state to determine whether the riding mower is traveling abnormally, and to perform a calibration operation in response to the riding mower traveling abnormally;

wherein the auxiliary control mechanism comprises:

a control state sensing component, configured to determine a control state of the user with respect to the control mechanism, the control state comprising a straight-line control state and a non-straight-line control state;

a traveling state sensing component, configured to determine the traveling state of the riding mower, the traveling state comprising a straight-line traveling state and a non-straight-line traveling state; and

a calibration controller component, configured to determine that the riding mower traveling abnormally in response to a mismatch between the traveling state and the control state;

wherein the calibration controller component is further configured to adjust, in response to determining that the riding mower is traveling abnormally, the operating state of the drive mechanism to match the traveling state with the control state.

FIG. 1-a

FIG. 1-b

Right-wheel
target speed (%)

100

10

Right-wheel
control lever signal
(%)

10    100

FIG. 1-c

Actual traveling
trajectory of
vehicle

Straight-line
traveling
direction of
vehicle

FIG. 1-d

FIG. 1-e

FIG. 2

FIG. 3

FIG. 4

FIG. 5

FIG. 6

Output signal (V)

angular displacement (°)

FIG. 7

Left drive motor

Right drive motor

Left control lever
1611

Right control
lever 1621

| Rotation detection module 163 | Drive controller module 164 | Drive controller module 164 | Rotation detection module 163 |

Vehicle controller unit (VCU)

FIG. 8

| Determining, based on the angular displacement information, the pivoting direction and the angular displacement of the corresponding control lever | S101 |

| Controlling, based on the pivoting direction, the rotation direction and the rotation speed of an output shaft of the drive motor | S102 |

FIG. 9

```
                    ┌─────────────┐      ┌──────────────┐
                    │ Left drive  │      │ Right drive  │
                    │   motor     │      │   motor      │
                    └─────────────┘      └──────────────┘
┌──────────────┐                                            ┌──────────────┐
│ Left control │                                            │ Right control│
│ lever        │                                            │ lever        │
│ 1611         │                                            │ 1621         │
└──────────────┘                                            └──────────────┘
┌──────────────┐   ┌─────────────┐   ┌──────────────┐      ┌──────────────┐
│ Rotation     │   │ Drive       │   │ Drive        │      │ Rotation     │
│ detection    │ → │ controller  │   │ controller   │  ←   │ detection    │
│ module 163   │   │ module 164  │   │ module 164   │      │ module 163   │
└──────────────┘   └─────────────┘   └──────────────┘      └──────────────┘
```

Vehicle controller unit (VCU)

Auxiliary control mechanism

| Control state sensing component 181 | Traveling state sensing component 182 | Calibration controller component 183 |

18

FIG. 10

Determining whether both the left control lever and the right control lever are rotated forward or rotated to the first forward position, where the forward rotation refers to rotation towards the first forward position → S201

Y

Determining whether the left control lever and the right control lever are aligned → S202

Y

Determining that the control state of the user with respect to the control mechanism is the straight-line control state → S203

FIG. 11

Determining an absolute value of a difference between the angular displacement information corresponding to the left control lever and the angular displacement information corresponding to the right control lever → S301

Comparing the absolute value of the difference with an angular deviation threshold to determine whether the absolute value of the difference is greater than the angular deviation threshold → S302

N

Determining that the left control lever and the right control lever are aligned → S303

FIG. 12

FIG. 13

S401

Controlling the signal transmitter to transmit the alignment detection signal

S402

Determining whether the signal receiver receives the alignment detection signal from the signal transmitter

Y

S403

Determining that the left control lever and the right control lever are aligned

FIG. 14

FIG. 15

FIG. 16

Obtaining a field strength signal generated by the Hall sensing element in response to the magnetic field strength — S501

Comparing the field strength signal with a preset field strength threshold to determine whether the field strength signal is greater than or equal to the preset field strength threshold — S502

Y

Determining that the left control lever and the right control lever are aligned — S503

FIG. 17

FIG. 18

| | |
|---|---|
| Controlling the image recognition module to perform an image recognition operation | S601 |
| Determining whether the image recognition module successfully recognizes the image marker | S602 |
| Determining that the left control lever and the right control lever are aligned | S603 |

FIG. 19

S701

Obtaining motion state information generated by the inertial measurement module

S702

Determining whether a heading angle component in the motion state information is zero

Y

N

S703

Determining that the multifunctional vehicle is in the straight-line traveling state

S704

Determining that the multifunctional vehicle is in the non-straight-line traveling state

FIG. 20

FIG. 21

S801

Obtaining the deflection state information generated by the deflection detection module

S802

Determining, based on the deflection state information, whether a deflection angle of the caster wheel relative to the frame is zero

Y

N

S803

Determining that the multifunctional vehicle is in the straight-line traveling state

S804

Determining that the multifunctional vehicle is in the non-straight-line traveling state

FIG. 22

FIG. 23-a

FIG. 23-b

FIG. 24-a

FIG. 24-b

FIG. 25-a

FIG. 25-b

FIG. 26-a

FIG. 26-b

FIG. 27-a

FIG. 27-b

FIG. 28

FIG. 29

U

V

W

0°  60°  120°  180°  240°  300°  360°

Clockwise

360°  300°  240°  180°  120°  60°  0°

counterclockwise

FIG. 30

| Determining a deflection angle of the multifunctional vehicle | → S901 |

| Performing, based on the deflection angle, a compensation adjustment on a motion control parameter for a drive motor in at least one of the left driving assembly or the right driving assembly | → S902 |

FIG. 31

## INTERNATIONAL SEARCH REPORT

| | International application No. |
|---|---|
| | **PCT/CN2024/096176** |

**A. CLASSIFICATION OF SUBJECT MATTER**

B60W30/10(2006.01)i; G01C21/34(2006.01)i; A01D34/00(2006.01)i

According to International Patent Classification (IPC) or to both national classification and IPC

**B. FIELDS SEARCHED**

Minimum documentation searched (classification system followed by classification symbols)

IPC:B60W; G01C; A01D

Documentation searched other than minimum documentation to the extent that such documents are included in the fields searched

Electronic data base consulted during the international search (name of data base and, where practicable, search terms used)

CNTXT: ENTXTC; WPABSC; VEN; ENTXT; CJFD: 轨迹, 路径, 路线, 纠正, 修正, 校准, 矫正, 校正, 纠偏, 偏离, 偏差, 异常, 补偿, 状态, trajectory, path, route, correct, deviation, unusual, abnormal, compensat+, state

**C. DOCUMENTS CONSIDERED TO BE RELEVANT**

| Category* | Citation of document, with indication, where appropriate, of the relevant passages | Relevant to claim No. |
|---|---|---|
| PX | CN 116811857 A (JIANGSU DONGCHENG TOOL TECHNOLOGY CO., LTD.) 29 September 2023 (2023-09-29) description, pages 6-22, and figures 1-11 | 1-8 |
| X | CN 111016891 A (CHINA INTELLIGENT AND CONNECTED VEHICLES (BEIJING) RESEARCH INSTITUTE CO., LTD.) 17 April 2020 (2020-04-17) description, pages 6-13, and figures 1-9 | 1-8 |
| X | US 2022124972 A1 (NANJING CHERVON INDUSTRY CO., LTD.) 28 April 2022 (2022-04-28) description, paragraphs 27-101, and figures 1-15 | 1-37, 41-53, 57-78, 82, 83 |
| A | CN 110155172 A (TENCENT DADI TONGTU (BEIJING) TECHNOLOGY CO., LTD. et al.) 23 August 2019 (2019-08-23) entire document | 1-83 |
| A | CN 116326320 A (NANJING CHERVON INDUSTRY CO., LTD.) 27 June 2023 (2023-06-27) entire document | 1-83 |

| ✓ Further documents are listed in the continuation of Box C. | ✓ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **12 July 2024** | **05 August 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/096176** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 110171416 A (TENCENT TECHNOLOGY (SHENZHEN) CO., LTD.) 27 August 2019 (2019-08-27)<br>entire document | 1-83 |
| A | CN 115123294 A (CHINA FAW CO., LTD.) 30 September 2022 (2022-09-30)<br>entire document | 1-83 |

Form PCT/ISA/210 (second sheet) (July 2022)

**INTERNATIONAL SEARCH REPORT**

International application No.

**PCT/CN2024/096176**

| Box No. III | Observations where unity of invention is lacking (Continuation of item 3 of first sheet) |
|---|---|

This International Searching Authority found multiple inventions in this international application, as follows:

Invention 1: claims 1-8 relate to a vehicle control method; and

invention 2: claims 9-40, 41-56, 57-81, 82 and 83 relate to a multifunctional vehicle, a landscaping work vehicle, and a ride-on lawnmower.

The independent claims of the above-described two inventions do not share a same or corresponding special technical feature that defines a contribution which the inventions make over the prior art, do not belong to a single general inventive concept, and therefore do not comply with the requirement of unity of invention and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

| International application No. |
| --- |
| **PCT/CN2024/096176** |

| Patent document cited in search report | | | Publication date (day/month/year) | Patent family member(s) | | | Publication date (day/month/year) |
| --- | --- | --- | --- | --- | --- | --- | --- |
| CN | 116811857 | A | 29 September 2023 | None | | | |
| CN | 111016891 | A | 17 April 2020 | None | | | |
| US | 2022124972 | A1 | 28 April 2022 | AU | 2020310369 | A1 | 03 February 2022 |
| | | | | EP | 3977841 | A1 | 06 April 2022 |
| | | | | WO | 2021004484 | A1 | 14 January 2021 |
| | | | | CN | 112996379 | A | 18 June 2021 |
| CN | 110155172 | A | 23 August 2019 | None | | | |
| CN | 116326320 | A | 27 June 2023 | None | | | |
| CN | 110171416 | A | 27 August 2019 | None | | | |
| CN | 115123294 | A | 30 September 2022 | None | | | |

Form PCT/ISA/210 (patent family annex) (July 2022)